# EUROPEAN PATENT APPLICATION

(11) **EP 4 737 991 A1**
(43) Date of publication of application: **06.05.2026**
(21) Application number: 25213747.6
(22) Date of filing: 05.11.2025
(51) Int. Cl.: G02F 1/025, G02F 1/21

(54) **OPTICAL MODULATORS, METHODS OF MANUFACTURING THE SAME AND APPARATUS INCLUDING OPTICAL MODULATOR**

(30) Priority: 05.11.2024 KR 20240155686; 26.06.2025 KR 20250085378
(71) Applicant: Samsung Electronics Co., Ltd, Suwon-si, Gyeonggi-do 16677 (KR)
(72) Inventor: LEE, Duhyun, 16677 Suwon-si (KR); NAMKOONG, Kak, 16678 Suwon-si (KR); PARK, Jaechul, 16678 Suwon-si (KR)
(74) Representative: Arnold & Siedsma

(57) **Abstract**

An optical modulator may include: a first semiconductor layer; a second semiconductor layer configured as a micro-disk, the second semiconductor layer being on the first semiconductor layer, and the second semiconductor layer including a first doping region and a second doping region, wherein a doping concentration of the first doping region is higher than a doping concentration of the second doping region; a first optical waveguide adjacent to the second semiconductor layer; a first electrode layer on the first doping region; and a second electrode layer on the first doping region and spaced apart from the first electrode layer, wherein the second semiconductor layer includes at least one recess, the second semiconductor layer has at least one step difference due to the at least one recess, and the first doping region, the second doping region, and the at least one recess comprise respective circular shapes, wherein all of the respective circular shapes are concentric with respect to one another.

## Description

### FIELD OF THE INVENTION

The present disclosure relates to an optical device, and more specifically, to an optical modulator of a photonic integrated circuit (PIC), a method of manufacturing the same, and an apparatus including the optical modulator.

### BACKGROUND OF THE INVENTION

In a silicon (Si)-based PIC, a Mach-Zehnder interferometer (MZI) and a micro-ring modulator (MRM) may be used as an optical modulator.

For wideband information transmission, technology for increasing the modulation speed of optical modulators, and for parallel processing of signals, wavelength division multiplexing (WDM) technology, in which multiple wavelength signals are simultaneously transmitted through a single waveguide, may be applied.

Because an MRM modulates only light with wavelengths that match the resonant wavelength of the micro-ring, it is possible to construct a WDM optical circuit relatively simply, and because high-speed modulation is possible, the MRM may be used.

In order to expand the WDM bandwidth, the diameter of the micro-ring may be gradually reduced, but in this process, the curvature of the micro-ring increases, which may result in optical loss. Accordingly, a method of configuring a resonator in the form of a micro-disk as an alternative to a micro-ring has been introduced, but this method may include an element that affects the optical modulation speed.

### SUMMARY OF THE INVENTION

One or more embodiments of the disclosure provide an optical modulator capable of increasing the optical modulation speed.

One or more embodiments of the disclosure provide an optical modulator capable of mode filtering.

One or more embodiments of the disclosure provide a method of manufacturing the optical modulator.

One or more embodiments of the disclosure provide an apparatus including the optical modulator.

Additional aspects will be set forth in part in the description which follows and, in part, will be apparent from the description, or may be learned by practice of the example embodiments of the disclosure.

According to some example embodiments, an optical modulator may include a first semiconductor layer; a second semiconductor layer configured as a micro-disk, the second semiconductor layer being on the first semiconductor layer, and the second semiconductor layer including a first doping region and a second doping region, wherein a doping concentration of the first doping region is higher than a doping concentration of the second doping region; a first optical waveguide adjacent to the second semiconductor layer; a first electrode layer on the first doping region; and a second electrode layer on the first doping region and spaced apart from the first electrode layer, wherein the second semiconductor layer includes at least one recess, the second semiconductor layer has at least one step difference due to the at least one recess, and each of the first doping region, the second doping region, and the at least one recess includes a circular shape that is concentric with respect to one another.

Alternatively or additionally, according to some example embodiments, a method of manufacturing an optical modulator may include forming, on a first semiconductor layer, a second semiconductor layer in a shape of a micro-disk; forming a first doping region in the second semiconductor layer, the first doping region including a circular shape; forming a second doping region in the second semiconductor layer around the first doping region, wherein the second doping region is concentric with the first doping region and surrounds the first doping region in horizontal directions; forming a first step difference in one from among the first doping region and the second doping region; and forming an electrode layer on the first doping region, wherein a doping concentration of the first doping region is higher than a doping concentration of the second doping region.

Alternatively or additionally, according to some example embodiments, an electronic apparatus may include a light source; an optical waveguide that is configured to transmit light emitted from the light source; a semiconductor layer adjacent to the optical waveguide, the semiconductor layer configured as a micro-disk; and an amplifier configured to amplify the light transmitted by the optical waveguide, wherein the semiconductor layer includes a first doping region and a second doping region, wherein the first doping region and the second doping region are at a center of the semiconductor layer in a horizontal direction, wherein the semiconductor layer includes at least one additional doping region that is outside of the first doping region and the second doping region in the horizontal direction, wherein a dopant type of the first doping region is opposite from a dopant type of the second doping region, wherein a doping concentration of the first doping region and a doping concentration of the second doping region is greater than a doping concentration of the at least one additional doping region, and wherein the semiconductor layer includes at least one step difference.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a plan view showing a first optical modulator according to one or more embodiments;
FIG. 2 is a cross-sectional view taken along a line 2-2' of FIG. 1;
FIG. 3 is a cross-sectional view taken along a line 3-3' of FIG. 1;
FIG. 4 is a cross-sectional view showing a second optical modulator according to one or more embodiments;
FIG. 5 is a plan view showing a third optical modulator according to one or more embodiments;
FIG. 6 is a cross-sectional view taken along a line 6-6' of FIG. 5;
FIG. 7 is a cross-sectional view taken along a line 7-7' of FIG. 5;
FIG. 8 is a cross-section view showing a modification of the third optical modulator shown in FIG. 5;
FIG. 9 is a cross-section view showing a modification of the third optical modulator shown in FIG. 5;
FIG. 10 is a cross-sectional view showing a fourth optical modulator according to one or more embodiments;
FIG. 11 is a plan view showing a fifth optical modulator according to one or more embodiments;
FIG. 12 is a cross-sectional view taken along a line 12-12' of FIG. 11;
FIG. 13 is a cross-sectional view taken along a line 13-13' of FIG. 11;
FIG. 14 is a cross-sectional view showing a sixth optical modulator according to one or more embodiments;
FIG. 15 is a cross-sectional view showing a seventh optical modulator according to one or more embodiments;
FIG. 16 is a cross-sectional view showing an eighth optical modulator according to an embodiment;
FIG. 17 is a plan view showing an example of an optical modulator according to FIGS. 1 to 16, including a plurality of optical waveguides;
FIGS. 18 to 26 are cross-sectional views showing a method of manufacturing the third optical modulator according to one or more embodiments;
FIGS. 27 to 37 are cross-sectional views showing a method of manufacturing the fifth optical modulator according to one or more embodiments;
FIGS. 38 to 52 are cross-sectional views illustrating a method of manufacturing the eighth optical modulator according to one or more embodiments;
FIG. 53 is a cross-sectional view illustrating an operation of a manufacturing process of the seventh optical modulator according to one or more embodiments;
FIGS. 54 to 64 are cross-sectional views illustrating a method of manufacturing the first optical modulator according to one or more embodiments;
FIGS. 65A and 65B are cross-sectional views respectively illustrating a first model and a second model used in a simulation conducted to confirm a difference (effect) between cases when there is a step difference between high-doping regions of an optical modulator and cases when there is no step difference; and
FIG. 66 is a block diagram schematically illustrating an electronic apparatus according to one or more embodiments.

### DETAILED DESCRIPTION

Reference will now be made in detail to non-limiting embodiments of the disclosure, examples of which are illustrated in the accompanying drawings, wherein like reference numerals refer to like elements throughout. In this regard, embodiments of the disclosure may have different forms and should not be construed as being limited to the descriptions set forth herein. Accordingly, example embodiments are merely described below, by referring to the figures, to explain non-limiting example aspects of the disclosure. As used herein, the term "and/or" includes any and all combinations of one or more of the associated listed items. Expressions such as ""at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Hereinafter, an optical modulator, a method of manufacturing the same, and a device including the optical modulator according to one or more embodiments are described in detail with reference to the attached drawings. In this process, the size of each component in the drawings may be exaggerated for clarity and convenience of explanation.

The one or more embodiments described herein are for illustrative purposes only, and various modifications may be made therein. In the layer structure described below, when an element or layer is referred to as being "on" or "above" another element or layer, the element or layer may be directly on another element or layer or intervening elements or layers. In the description below, like reference numerals refer to like components.

The singular forms include the plural forms unless the context clearly indicates otherwise. When a part "comprises" or "includes" an element in the specification, unless otherwise defined, other elements are not excluded from the part and the part may further include other elements

The term "above" and similar directional terms may be applied to both singular and plural. With respect to operations that constitute a method, the operations may be performed in any appropriate sequence unless clearly described to the contrary or unless the context clearly indicates otherwise. The operations may not necessarily be performed in the order of sequence.

Also, in the specification, the term "units" or "...modules" denote units or modules that process at least one function or operation, and may be realized by hardware, software, or a combination of hardware and software.

The connections of lines and connection members between constituent elements depicted in the drawings are examples of functional connection and/or physical or circuitry connections, and thus, in practical devices, may be expressed as replaceable or additional functional connections, physical connections, or circuitry connections.

All examples and example terms are simply used to explain in detail non-limiting example embodiments of the disclosure, and thus, the scope of the disclosure is not limited by the examples or the example terms.

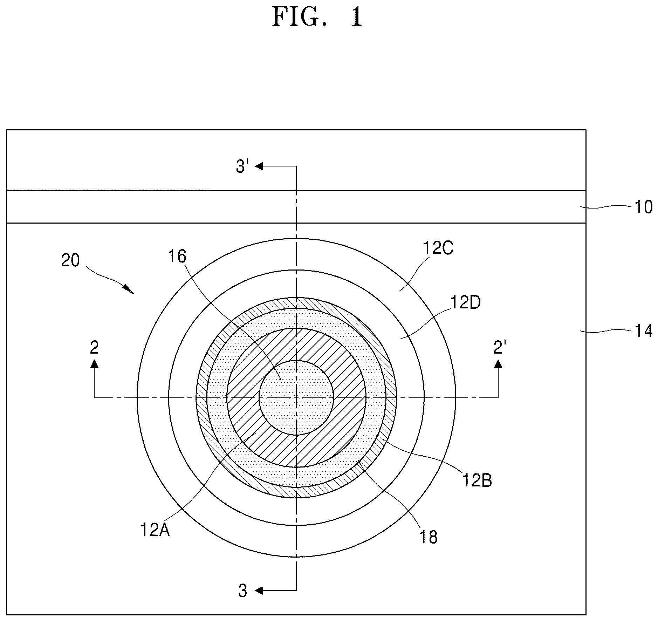

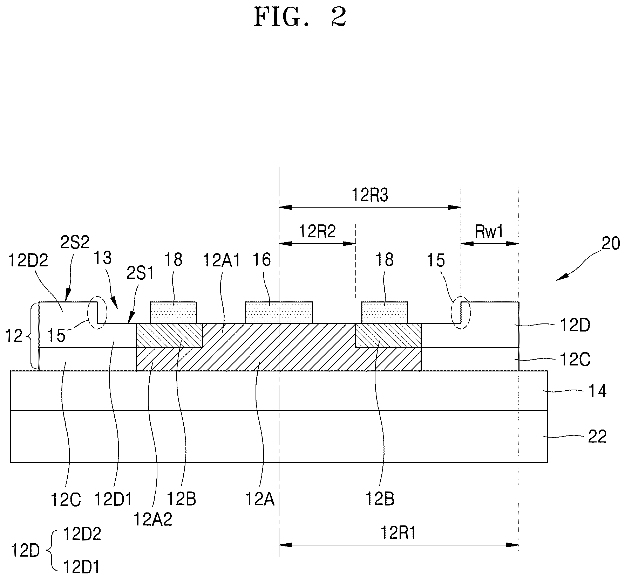

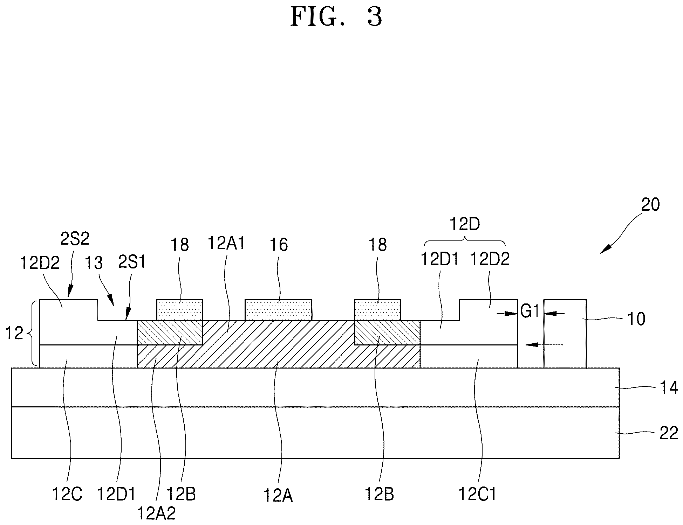

FIG. 1 is a plan view showing a first optical modulator 20 according to one or more embodiments. FIG. 2 is a cross-sectional view taken along a line 2-2' of FIG. 1. FIG. 3 is a cross-sectional view taken along a line 3-3' of FIG. 1.

Referring to FIGS. 1 to 3 together, an optical waveguide 10 and the first optical modulator 20 may be provided on an insulating layer 14. In one example, the first optical modulator 20 and the optical waveguide 10 may be collectively referred to as an optical modulator. Other elements may also be provided on the insulating layer 14. In one example, the insulating layer 14 may include an oxide insulating layer. In one example, the insulating layer 14 may include silicon oxide, but is not limited thereto. The optical waveguide 10 and the first optical modulator 20 may be spaced apart from each other by a first gap G1, as illustrated in FIG. 3. In FIG. 1, the optical waveguide 10 is illustrated with a straight line next to the first optical modulator 20, but the optical waveguide 10 may also include a curved portion. For example, a portion of the optical waveguide 10 close to the first optical modulator 20 may be a curved portion having the same or substantially the same curvature as the curvature of an edge of the first optical modulator 20. The curved portion and the first optical modulator 20 may be spaced apart by the first gap G1.

In one example, the first gap G1 may have a range of gaps in which light traveling through the optical waveguide 10 may be transmitted to the first optical modulator 20. In one example, a portion of light traveling through the optical waveguide 10 at the first gap G1 may concentrate on a predetermined region of the first optical modulator 20 in the form of a whispering gallery mode. In one example, the first gap G1 may be in a range from about 50 nm to about 300 nm, but is not limited thereto. Some of the light may include light of the fundamental mode (TE0) and/or the first mode (TE1), and may also include light of higher order modes. The predetermined region of the first optical modulator 20 may be the outermost region, a border region, or an edge region of the first optical modulator 20 and may include a PN junction region. Depending on a width or cross-sectional layer structure of the predetermined region, only the light of the fundamental mode may be transmitted to the predetermined region of the first optical modulator 20, or the light of the fundamental mode and the first mode may be transmitted, or even the light of a higher-order mode may be transmitted. Therefore, depending on the width and the layer structure design of the predetermined region of the first optical modulator 20, the mode of the light transmitted from the optical waveguide 10 to the first optical modulator 20 may be filtered.

In one example, the optical waveguide 10 may be an optical waveguide configured to transmit light in the infrared band, but may not be limited to light in the infrared band. In one example, multiple pieces of light with different wavelengths may be transmitted simultaneously or with a time difference through the optical waveguide 10. The multiple pieces of light may be included in the infrared band. In one example, the optical waveguide 10 may be a waveguide including a material having a lower infrared absorption rate than a visible light absorption rate such as, for example, a silicon-based optical waveguide, but is not limited thereto. In one example, the optical waveguide 10 may be a silicon layer or may include a silicon layer. In one example, the silicon layer may include a single crystal silicon layer, but is not limited thereto. In one example, the optical waveguide 10 may include a Group III-V compound semiconductor having a low infrared absorption rate or that may not absorb infrared light. For example, the optical waveguide 10 may include silicon nitride (SiN).

A width of the optical waveguide 10 may be constant or substantially constant in a direction in which light is transmitted. In one example, in the first optical modulator 20, except for a first electrode layer 16 (e.g., a first electrode) and a second electrode layer 18 (e.g., a second electrode), a material (or substance) of the region where the optical modulation occurs may be the same as a material of the optical waveguide 10, but may not be the same.

The optical waveguide 10 and the first optical modulator 20 may be covered with an upper insulating layer having a refractive index that is different from a refractive index of silicon. In one example, the upper insulating layer may be a material layer having a refractive index that is lower than the refractive index of silicon. Due to the upper insulating layer, the condition of the internal total reflection of light transmitted through the optical waveguide 10 may be maintained, and the condition of the internal total reflection of the light transmitted through the first optical modulator 20 may also be maintained. In one example, the upper insulating layer may include a gas (e.g., air) or a solid material layer (e.g., a silicon oxide layer), and is not limited to the example materials.

The first optical modulator 20 may include a first semiconductor layer 22 and the insulating layer 14 that are sequentially stacked, and a second semiconductor layer 12 provided on the insulating layer 14. In one example, the first semiconductor layer 22 may include a silicon layer, but is not limited thereto. The first semiconductor layer 22 and the insulating layer 14 that are sequentially stacked may be a silicon on insulator (SOI) substrate. The second semiconductor layer 12 may be provided on a surface (e.g., an upper surface) of the insulating layer 14. The insulating layer 14 may be provided between the first semiconductor layer 22 and the second semiconductor layer 12. The first semiconductor layer 22 and the second semiconductor layer 12 may be spaced apart from each other and may not contact each other. In one example, the first semiconductor layer 22 and the second semiconductor layer 12 may include the same semiconductor material as each other, but may also include different semiconductor materials from each other. In one example, the second semiconductor layer 12 may include a semiconductor layer having a lower light absorption rate in the infrared band than a light absorption rate in the visible light band. This semiconductor layer may include a single- or binary- or more-type semiconductor material. In one example, the second semiconductor layer 12 may include a silicon layer such as, for example, a single crystal silicon layer. In one example, the second semiconductor layer 12 may include a Group III-V compound semiconductor having a low infrared absorption rate or that may not absorb infrared light. In one example, the second semiconductor layer 12 may include silicon nitride (SiN).

As shown in FIG. 2, the second semiconductor layer 12 may include a first recess 13. The first recess 13 may be a concave portion, a trench, or a groove. The first recess 13 may be at the center of the second semiconductor layer 12, and a depth of the first recess 13 may be constant throughout the entirety of first recess 13. It is noted that the first recess 13 is defined with regard to the semiconductor layer only, disregarding the presence of a first and second electrode layer 16, 18, which are not part of the semiconductor layer. The planar shape (e.g., a shape in a plan view) of the first recess 13 may be circular, and the center of the first recess 13 may coincide with (e.g., overlap with) the center of the second semiconductor layer 12. In one example, the second semiconductor layer 12 and the first recess 13 may be concentric, but are not limited thereto. A boundary of the first recess 13 may be spaced apart from an edge of the second semiconductor layer 12. Therefore, the radius of the first recess 13 may be less than the radius of the second semiconductor layer 12. Due to the first recess 13, the second semiconductor layer 12 may have two upper surfaces (e.g., a first upper surface 2S1 and a second upper surface 2S2) with different heights from each other. That is, the upper surface of the second semiconductor layer 12 may be composed of the first upper surface 2S1, which may be flat, in the first recess 13 region and the second upper surface 2S2, which may be flat, around the first recess 13. The first upper surface 2S1 may be a lower surface of the first recess 13. The first recess 13 may be formed by etching a portion of the upper surface of the second semiconductor layer 12 to a given depth in a state where there is no first recess 13. Therefore, a height of the first upper surface 2S1 may be lower than a height of the second upper surface 2S2. Accordingly, a step difference may exist between the first upper surface 2S1 and the second upper surface 2S2. The size of this step difference (e.g., height) may be adjusted during a recess formation process.

The second semiconductor layer 12 may include a region where optical modulation actually occurs. The second semiconductor layer 12 may include a plurality of regions where dopants and/or doping concentrations are different from each other. In one example, the second semiconductor layer 12 may include a high doping region doped with a relatively high concentration of dopants and a low doping region doped with a relatively low concentration of dopants.

In one example, the second semiconductor layer 12 may include a first region 12A that is circular and has a given radius at the center thereof. The first region 12A may be within (e.g., overlap with) the first recess 13 and may be concentric with the first recess 13. The first region 12A may be a region doped with a first dopant at a first concentration. In one example, the first dopant may include a p-type impurity (e.g., boron (B)) or an n-type impurity (e.g., phosphorus (P)). In one example, the first concentration may be in a range from about 1x10¹⁹/cm³ to about 3x10²⁰/cm³, but is not limited thereto.

In one example, a radius of the first region 12A may be less than a first radius 12R1 of the second semiconductor layer 12 and less than a third radius 12R3 of the first recess 13. An edge of the first region 12A may be spaced apart from an edge of the second semiconductor layer 12 and the boundary of the first recess 13. A thickness of the first region 12A may vary in a radial direction. Because the central portion of the second semiconductor layer 12 may be included in the region of the first recess 13, the thickness of the central portion may be less than the thickness of the edge of the second semiconductor layer 12. The first region 12A may include a first portion 12A1 having a first thickness in the center of the second semiconductor layer 12 and a second portion 12A2 surrounding the first portion 12A1 in horizontal directions and having a second thickness. The second thickness may be less than the first thickness. An upper surface of the first portion 12A1 may be a lower surface of the first recess 13, that is, a part of the first upper surface 2S1 of the second semiconductor layer 12. The second portion 12A2 may be spaced apart from the first upper surface 2S1. The second portion 12A2 may be in contact (e.g., direct contact) with the insulating layer 14. A lower surface of the second portion 12A2 may be a part of a lower surface of the first portion 12A1 and may form the same plane. **In** one example, the lower surface of the first portion 12A1 and the lower surface of the second portion 12A2 may be a part of the lower surface of the second semiconductor layer 12. Because the heights of the upper surface of the first portion 12A1 and the upper surface of the second portion 12A2 may be different, a step difference may exist between the first portion 12A1 and the second portion 12A2 of the first region 12A. The thickness of the first portion 12A1 of the first region 12A may be uniform or substantially uniform throughout. The thickness of the second portion 12A2 of the first region 12A may be uniform or substantially uniform throughout. The thickness of the first portion 12A1 may be the same as the thickness of the second semiconductor layer 12 within (e.g., overlapping with) the first recess 13. The first portion 12A1 and the second portion 12A2 of the first region 12A may be concentric.

The second semiconductor layer 12 may include a second region 12B positioned on the second portion 12A2 of the first region 12A in a vertical direction. The second region 12B may be a region formed directly above the second portion 12A2 of the first region 12A. The second region 12B may be spaced apart from the center of the first region 12A. The second region 12B may be within (e.g., overlap with) the first recess 13 and may be spaced apart from the boundary of the first recess 13 A thickness of the second region 12B may be the same as or substantially the same as the second thickness of the second portion 12A2. As may be seen in FIG. 1, the second region 12B may be formed to completely surround the first portion 12A1 of the first region 12A in horizontal directions. **In** one example, the second region 12B may have a thickness corresponding to the step difference between the first portion 12A1 and the second portion 12A2 of the first region 12A. However, because a depletion layer may be formed between the second region 12B and the first region 12A, the thickness of the second region 12B may not be completely the same as the step difference. Because the thickness of the depletion layer is very thin compared to the thickness of the second region 12B, the thickness of the second region 12B and the step difference may be substantially the same as each other, and the second region 12B may be considered to have a thickness corresponding to the step difference.

An upper surface of the second region 12B and the upper surface of the first portion 12A1 of the first region 12A may be flat, at the same height, and form the same plane. In one example, the upper surface of the first portion 12A1 of the first region 12A and the upper surface of the second region 12B may be a part of the first upper surface of the second semiconductor layer 12.

A width of the second region 12B in the radial direction may be the same as or substantially the same as the width of the second portion 12A2 of the first region 12A. Because a thickness of the depletion layer between the first region 12A and the second region 12B may be very thin, an inner diameter of the second region 12B may be substantially the same as an outer diameter (e.g., 2 times a second radius 12R2) of the first portion 12A1 of the first region 12A. An outer diameter of the second region 12B may be equal to an outer diameter of the second portion 12A2 of the first region 12A. During the manufacturing process of the first optical modulator 20, the radii of the first region 12A and the second region 12B may be adjusted within a given range.

As a result, in a plan view, the second region 12B may have a band shape or a ring shape. In a cross-section, the second portion 12A2 of the first region 12A and the second region 12B may form a layer structure sequentially stacked in a direction perpendicular to the upper surface of the insulating layer 14.

In one example, the second region 12B may be a region doped with a second dopant, which may be a type opposite to the type of the first dopant, at a second concentration. Accordingly, as described above, the depletion layer may be formed between the first region 12A and the second region 12B. The depletion layer may be very thin and is not illustrated in FIGS. 1 to 3 for convenience. In one example, the second dopant may include a p-type impurity or an n-type impurity. For example, if the first dopant includes a p-type impurity, the second dopant may include an n-type impurity, and vice versa. In one example, the second concentration may be the same as or substantially the same as the first concentration.

Because the first region 12A and the second region 12B may be doping regions, a distance from the center of the first region 12A to the second region 12B may be adjusted during the manufacturing process of the first optical modulator 20. Accordingly, an area of the junction region between the first region 12A and the second region 12B may also be adjusted. Through this adjustment, a capacitance based on the junction region of the first region 12A and the second region 12B may also be adjusted. For example, as the width of the second region 12B decreases, the capacitance may decrease, and as the width of the second region 12B increases, the capacitance may increase. By adjusting the capacitance in this way, the optical modulation speed of the first optical modulator 20 may also be adjusted. For example, by adjusting the width of the second region 12B so that the capacitance decreases, the optical modulation speed of the first optical modulator 20 may be increased.

A first electrode layer 16 may be provided on the first portion 12A1 of the first region 12A. The center of the first electrode layer 16 may be the same as or substantially coincide with the center of the first region 12A. In a plan view, the first electrode layer 16 may be circular, oval, or polygonal, but is not limited thereto. In one example, the first electrode layer 16 and the first region 12A may be provided to be concentric circles.

The first electrode layer 16 may be spaced apart from the second region 12B. An upper surface of the first electrode layer 16 may be flat, and a height of the upper surface of the first electrode layer 16 may be the same as the height of the second upper surface 2S2 (e.g., the highest upper surface) of the second semiconductor layer 12, but may not be the same. The first electrode layer 16 may include, but is not limited to, a metal or alloy that may be used as an electrode material.

A second electrode layer 18 may be provided on the second region 12B. The geometric shape of the second electrode layer 18 in the plan view may be the same or substantially the same as the geometric shape of the second region 12B. In one example, the second electrode layer 18 may be provided so as to be in direct contact with the upper surface of the second region 12B. The second electrode layer 18 may be provided so as to be concentric with the first region 12A, the second region 12B, and the first electrode layer 16, but may be provided differently. The second electrode layer 18 may be provided at the same height or substantially the same height as the first electrode layer 16, but may be provided differently. Here, "substantially the same height" may mean a case when a height difference occurs unintentionally between the first electrode layer 16 and the second electrode layer 18 during the manufacturing process and the height difference is within the allowable tolerance. The second electrode layer 18 may be a single layer or multilayer, and the first electrode layer 16 may also be the same. The material of the second electrode layer 18 may be the same as a material of the first electrode layer 16, but is not limited thereto.

The second semiconductor layer 12 may include a third region 12C and a fourth region 12D that surround the first region 12A and the second region 12B on a plane (e.g., in horizontal directions). The third region 12C may completely surround the second portion 12A2 of the first region 12A in horizontal directions. The fourth region 12D may completely surround the first portion 12A1 of the first region 12A and the second region 12B in horizontal directions. The third region 12C may be in contact (e.g. direct contact) with the second portion 12A2 of the first region 12A in a horizontal direction. The thickness of the third region 12C may be the same as or substantially the same as the thickness of the second portion 12A2. The lower surface of the third region 12C may be in contact (e.g., direct contact) with the insulating layer 14 and may be a part of the lower surface of the second semiconductor layer 12. A part of the third region 12C may be below the first recess 13 and overlap with the first recess 13, and the rest of the third region 12C may be outside the first recess 13 in horizontal directions. In a plan view, an edge of the third region 12C may coincide with (e.g., overlap with) the edge of the second semiconductor layer 12. The side surface of the third region 12C may be a part of a side surface of the second semiconductor layer 12.

The fourth region 12D may be located on the third region 12C. The fourth region 12D may be in contact (e.g., direct contact) with the second region 12B in a horizontal direction. A part of the fourth region 12D may overlap with the first recess 13, and the rest of the fourth region 12D may be outside the first recess 13 in horizontal directions. In other words, a first portion 12D1 of the fourth region 12D may exist between the boundary of the first recess 13 and the second region 12B, that is, between the step difference between the first upper surface 2S1 and the second upper surface 2S2 of the second semiconductor layer 12 and the second region 12B, and the remainder (e.g., a second portion 12D2) of the fourth region 12D may exist between the step difference and a side surface of the second semiconductor layer 12. The first portion 12D1 may be considered as a horizontal part of the fourth region 12D, and the second portion 12D2 connected to the first portion 12D1 may be considered as a vertical part of the fourth region 12D. An upper surface of the first portion 12D1 may be a part of the first upper surface 2S1 of the second semiconductor layer 12, and an upper surface of the second portion 12D2 may be a part of the second upper surface 2S2 of the second semiconductor layer 12. Therefore, a step difference may also exist between the first portion 12D1 and the second portion 12D2 of the fourth region 12D. The thickness of the first portion 12D1 may be less than the thickness of the second portion 12D2.

In a plan view (see FIG. 1), the edge of the fourth region 12D may coincide with (e.g., overlap with) the edge of the second semiconductor layer 12 and the third region 12C. A side of the fourth region 12D may be a part of the side of the second semiconductor layer 12.

The third region 12C and the fourth region 12D may be regions sequentially formed in a direction perpendicular to the upper surface of the insulating layer 14. The third region 12C and the fourth region 12D may be the remaining regions of the second semiconductor layer 12 excluding the first region 12A and the second region 12B.

In a plan view, the shape of the third region 12C may be a circle in the form of a band or ring with a given width and radius, and the center of the third region 12C may be the same as the center of the first region 12A and the second region 12B, and the fourth region 12D may also be the same as the third region 12C. That is, the third region 12C and the fourth region 12D may be concentric with the first region 12A and the second region 12B.

The second portion 12D2 of the fourth region 12D may have a ring width Rw1 in the radial direction. The ring width Rw1 may correspond to the gap or distance between a first step difference 15 (e.g., a sidewall of the first recess 13) and the side surface of the second semiconductor layer 12. The ring width Rw1 may vary depending on the third radius 12R3 of the first recess 13. Therefore, the ring width Rw1 may be adjusted in the process of forming the first recess 13.

A contact region between the third region 12C and the fourth region 12D may be a PN junction region. Light traveling along the optical waveguide 10 may be transmitted to the PN junction region of the first optical modulator 20, and the mode of light transmitted from the optical waveguide 10 to the first optical modulator 20 may be limited depending on the ring width Rw1. For example, the narrower the ring width Rw1, the more light in the fundamental mode or single mode (e.g., TE0) may be transmitted from the optical waveguide 10 to the first optical modulator 20, and the wider the ring width Rw1, the more light in the higher-order mode or multi-mode (e.g., TE0, TE1) may be transmitted from the optical waveguide 10 to the first optical modulator 20.

As a result, by appropriately setting the third radius 12R3 of the first recess 13 in the process of forming the first recess 13, the mode of light transmitted from the optical waveguide 10 to the first optical modulator 20 may be restricted, and thus, only the light of the fundamental mode may be transmitted to the PN junction region, and the light of the higher-order mode may be not transmitted or may be controlled to be minimized.

For convenience of explanation, the fourth region 12D is divided into the first portion 12D1 and the second portion 12D2, but the first portion 12D1 and the second portion 12D2 may be one continuous identical region, and there may be no physical boundary between the first portion 12D1 and the second portion 12D2.

In one example, the third region 12C may be a region in which the first dopant is doped at a third concentration. The third concentration may be lower than the first concentration. The fourth region 12D may be a region in which the second dopant is doped at a fourth concentration. The fourth concentration may be lower than the second concentration. The third concentration and the fourth concentration may be equal to or substantially equal to each other.

When a voltage is applied to the first region 12A and the second region 12B through the first electrode layer 16 and the second electrode layer 18, the charge carrier concentrations of the third region 12C and the fourth region 12D may change due to the voltage, and the light coupled to the micro-disk, i.e., the second semiconductor layer 12, may be modulated due to the change in refractive index by the change of the charge carrier concentration.

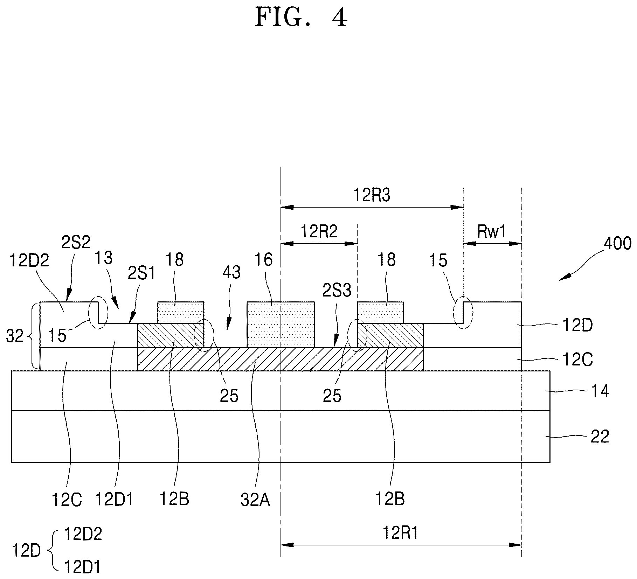

FIG. 4 shows a second optical modulator 400 according to one or more embodiments. The second optical modulator 400 may correspond to an example in which a portion of the first optical modulator 20 is modified. Therefore, the parts that are different from the first optical modulator 20 may be mainly described, and repeated descriptions thereof may be omitted.

Referring to FIG. 4, the second optical modulator 400 may include a third semiconductor layer 32 on the insulating layer 14. The third semiconductor layer 32 may correspond to the second semiconductor layer 12 of the first optical modulator 20, and may be a semiconductor material layer identical to the second semiconductor layer 12. The layer structure or layer composition of the third semiconductor layer 32 may be different from the layer structure or layer composition of the second semiconductor layer 12.

The third semiconductor layer 32 may include a second recess 43 provided in the first recess 13. The center of the second recess 43 may coincide with (e.g., overlap with) the center of the first recess 13, and the first recess 13 and the second recess 43 may be concentric in a plane. The planar geometric shape of the second recess 43 is not limited to a circle. The second recess 43 may be inside the second region 12B. A side surface of the second region 12B may define a part of the second recess 43. The side surface of the second region 12B may be a side surface of the second recess 43. A depth of the second recess 43 may be substantially the same as the thickness of the second region 12B. The second region 12B and the second recess 43 may be concentric circles. A third upper surface 2S3 of a fifth region 32A of the third semiconductor layer 32 may be exposed through the second recess 43. The third upper surface 2S3 of the fifth region 32A may be flat, may be a lower surface of the second recess 43, and may be a third upper surface of the third semiconductor layer 32. The entire region between the lower surface of the second recess 43 and a lower surface of the third semiconductor layer 32 may be the fifth region 32A. The fifth region 32A may extend below the second region 12B. An edge or boundary of the fifth region 32A may coincide with (e.g., overlap with) an outer edge (outer boundary) of the second region 12B. The fifth region 32A, the second region 12B, and the second recess 43 may be concentric circles. The radius of the fifth region 32A may be the same as the radius of the second portion 12A2 of the first region 12A of FIG. 2. The thickness of the fifth region 32A may be uniform or substantially uniform throughout. **In** one example, the doping characteristics (e.g., dopant type, doping concentration, etc.) of the fifth region 32A may be the same as the doping characteristics of the first region 12A. **In** one example, the dopant injected into the fifth region 32A may be the same n-type dopant as the dopant injected into the third region 12C. The doping concentration of the fifth region 32A may be greater than the doping concentration of the third region 12C. The doping concentration of the fifth region 32A may be the same or substantially the same as the doping concentration of the second region 12B. A depletion layer may be formed between the second region 12B and the fifth region 32A, which may be highly doped regions and into which opposite dopants are injected. That is, the second region 12B and the fifth region 32A may form a PN junction, and capacitance may appear in the second optical modulator 400. This capacitance may vary depending on the radius of the second recess 43. That is, as the radius of the second recess 43 increases, the junction region of the second region 12B and the fifth region 32A decreases, and thus, the capacitance may decrease, and as the radius of the second recess 43 decreases, the junction region increases, and thus, the capacitance may increase. Therefore, in the process of manufacturing the second optical modulator 400, by appropriately setting the radius of the second recess 43 so that the capacitance is minimized within the allowable range, the optical modulation time of the second optical modulator 400 may be optimized.

The first electrode layer 16 may be provided on the fifth region 32A and may be arranged to be spaced apart from the second region 12B and the second electrode layer 18.

Because the second recess 43 may be provided in the first recess 13 of the third semiconductor layer 32, the third semiconductor layer 32 may have first to third upper surfaces 2S1 to 2S3 with different heights. Accordingly, a first step difference 15 (e.g., a sidewall of the first recess 13) may exist between the first upper surface 2S1 and the second upper surface 2S2, and a second step difference 25 (e.g., a sidewall of the second recess 43) may exist between the second upper surface 2S2 and the third upper surface 2S3. The positions of the first step difference 15 and the second step difference 25 in the horizontal direction may be adjusted in the operation of forming the first recess 13 and the second recess 43.

The remaining region of the third semiconductor layer 32 may be the same as the second semiconductor layer 12.

The second optical modulator 400 may correspond to a case when the thickness of the second semiconductor layer 12 of the first portion 12A1 of the first region 12A of the first optical modulator 20 is reduced to the thickness of the second portion 12A2 of the first region 12A.

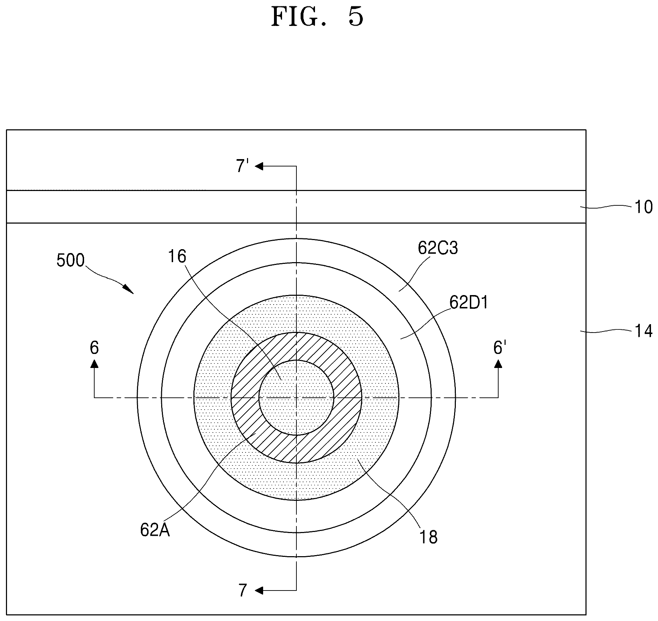

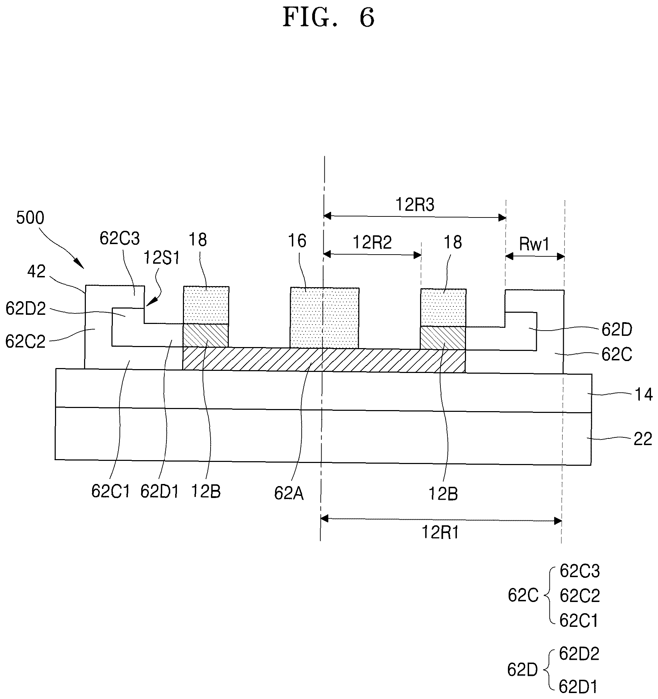

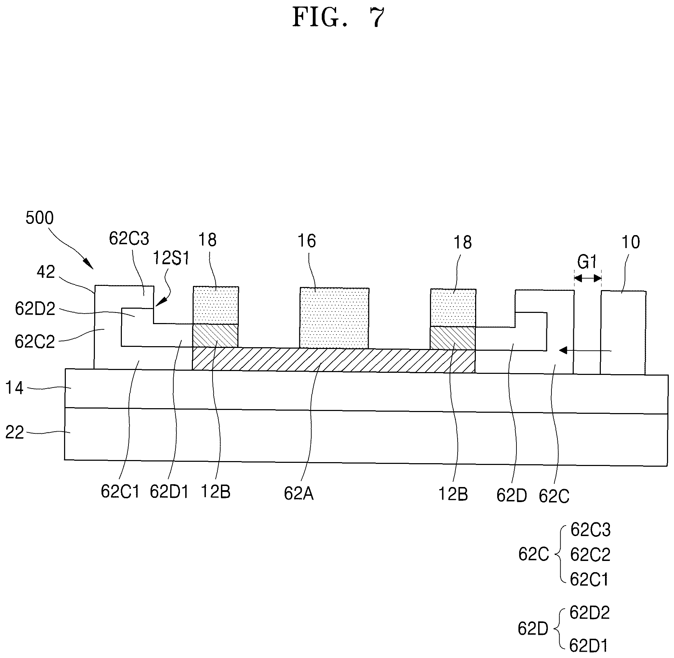

FIG. 5 is a plan view showing a third optical modulator 500 according to one or more embodiments. FIG. 6 is a cross-sectional view taken along a line 6-6' of FIG. 5, and FIG. 7 is a cross-sectional view taken along a line 7-7' of FIG. 5. Like reference numerals as those described in the first optical modulator 20 and the second optical modulator 400 indicate like members, and repeated descriptions thereof may be omitted.

Referring to FIGS. 5, 6, and 7 together, the optical waveguide 10 and the third optical modulator 500 may be provided on an insulating layer 14. The optical waveguide 10 and the third optical modulator 500 may be spaced apart from each other by a first gap G1, as shown in FIG. 7. The third optical modulator 500 may include a first semiconductor layer 22 and an insulating layer 14 that are sequentially stacked, and a fourth semiconductor layer 42 provided on the insulating layer 14. The fourth semiconductor layer 42 may be provided on one surface (e.g., the upper surface) of the insulating layer 14. In one example, the first semiconductor layer 22 and the fourth semiconductor layer 42 may include the same semiconductor material as each, or may include different semiconductor materials from each other. In one example, the fourth semiconductor layer 42 may include the same semiconductor material as the second semiconductor layer 12 of the first optical modulator 20. Therefore, the semiconductor properties and optical characteristics of the fourth semiconductor layer 42 may be the same as the semiconductor properties and optical characteristics of the second semiconductor layer 12.

The fourth semiconductor layer 42 may include a region where optical modulation actually occurs. The fourth semiconductor layer 42 may include a plurality of regions having different dopant and/or doping concentrations. In one example, the fourth semiconductor layer 42 may include a sixth region 62A that is circular and has a given radius at the center. In one example, the sixth region 62A may be a region doped with a given dopant concentration. **In** one example, the type of dopant injected into the sixth region 62A and the doping concentration of the sixth region 62A may be the same as the dopant injected into the first region 12A of the second semiconductor layer 12 of the first optical modulator 20 and the doping concentration of the first region 12A.

The fourth semiconductor layer 42 may include a second region 12B formed on the sixth region 62A. The second region 12B may be formed in a band shape or ring shape with a given width on an edge region of the sixth region 62A. The second region 12B may be spaced apart from the center of the sixth region 62A. A height of an upper surface of the second region 12B may be different from the height of the upper surface of the sixth region 62A. That is, the upper surface of the second region 12B may be higher than the upper surface of the sixth region 62A. Therefore, a step difference corresponding to the thickness of the second region 12B may exist between the sixth region 62A and the second region 12B.

A distance from the center of the sixth region 62A to the second region 12B may be adjusted during the manufacturing process of the first optical modulator 20, and accordingly, a bonding area of the bonding region between the sixth region 62A and the second region 12B may also be adjusted. Through this adjustment, the capacitance of the third optical modulator 500 due to the bonding region of the sixth region 62A and the second region 12B may also be adjusted. For example, the longer the distance between an inner boundary of the second region 12B and the center of the sixth region 62A, that is, the larger the second radius 12R2 of the inner boundary of the second region 12B, the more the capacitance may decrease. The capacitance may increase as the distance between the inner boundary of the second region 12B and the center of the sixth region 62A decreases. In this way, as the capacitance is controlled, the optical modulation speed of the third optical modulator 500 may be controlled. As one example, the capacitance may be reduced by reducing the width of the second region 12B in the radial direction, and the optical modulation speed of the third optical modulator 500 may be increased by reducing the width of the second region 12B in the radial direction.

An outer boundary of the second region 12B may coincide (e.g., overlap) with or substantially coincide with an outer boundary of the sixth region 62A. In other words, an outer radius of the second region 12B measured from the center of the sixth region 62A and the radius of the sixth region 62A may be equal to or substantially equal to each other. An inner side of the second region 12B may have a second radius 12R2 that is less than the radius of the sixth region 62A. The second region 12B and the sixth region 62A may define a recess region corresponding to the second recess 43 of FIG. 4. The side surface of the second region 12B may be the side surface of the recess region, and an upper surface of the sixth region 62A may be the lower surface of the recess region.

The shape of the second region 12B in the plan view may be a circular band or ring shape having a given width. The sixth region 62A and the second region 12B may be concentric circles.

A first electrode layer 16 may be provided on the sixth region 62A. The center of the first electrode layer 16 may coincide (e.g., overlap) with or substantially coincide with the center of the sixth region 62A. In one example, the first electrode layer 16 and the sixth region 62A may be concentric. The first electrode layer 16 may be spaced apart from the second region 12B.

A second electrode layer 18 may be provided on the second region 12B. The shape of the second electrode layer 18 in the plan view may be the same as or substantially the same as the shape of the second region 12B. In one example, the second electrode layer 18 may be formed to cover the entire upper surface of the second region 12B and to be in direct contact with the entire upper surface of the second region 12B. In one example, the second electrode layer 18 may be formed only on a part of the upper surface of the second region 12B. The second electrode layer 18 may be provided to be concentric with the sixth region 62A, the second region 12B, and the first electrode layer 16, but may be provided otherwise. The second electrode layer 18 may be provided at the same height or substantially the same height as the first electrode layer 16. The second electrode layer 18 may be provided only on the second region 12B.

The material of the second electrode layer 18 may be the same as the first electrode layer 16, but is not limited thereto.

The fourth semiconductor layer 42 may include a seventh region 62C around the sixth region 62A in horizontal directions, and an eighth region 62D around the second region 12B in horizontal directions. The seventh region 62C and the eighth region 62D may be regions formed sequentially in a direction perpendicular to the upper surface of the insulating layer 14. The seventh region 62C may be provided to completely surround the sixth region 62A in horizontal directions, and the eighth region 62D may be provided to completely surround the second region 12B in horizontal directions. The seventh region 62C and the eighth region 62D may be the remaining regions in the fourth semiconductor layer 42 except for the second region 12B and the sixth region 62A. In the plan view, the shape of the seventh region 62C may be a circle shape in the form of a band or ring with a given width and radius. The center of the seventh region 62C may coincide (e.g., overlap) with the center of the sixth region 62A. Therefore, the seventh region 62C, the sixth region 62A, and the second region 12B may be concentric circles.

In the plan view, the shape of the eighth region 62D may be a circle shape in the form of a band or ring with a given width and radius. The center of the eighth region 62D may coincide (e.g., overlap) with the center of the sixth region 62A. Therefore, the eighth region 62D, the seventh region 62C, the sixth region 62A, and the second region 12B may be concentric circles. The seventh region 62C may include a first portion 62C1, a second portion 62C2, and a third portion 62C3. The first portion 62C1 may be a portion formed with the same thickness as a thickness of the sixth region 62A. The second portion 62C2 may be a portion extending in a direction perpendicular to an extension direction of the first portion 62C1. The third portion 62C3 may be a portion extending from the second portion 62C2 toward the center of the sixth region 62A and parallel to the first portion 62C1. The first portion 62C1 and the third portion 62C3 may be separated from each other in a direction perpendicular to an upper surface of the insulating layer 14. The second portion 62C2 may be a region extending in a direction perpendicular to the upper surface of the insulating layer 14. A side of the second portion 62C2 may be the side of the fourth semiconductor layer 42, and may be at the first radius 12R1 from the center of the sixth region 62A. The seventh region 62C may be divided into the first portion 62C1, the second portion 62C2, and the third portion 62C3 for convenience of explanation, but the first to third portions 62C1 to 62C3 may be one continuous region, and there may be no physical boundary between each of the first to third portions 62C1 to 62C3.

The eighth region 62D may include a first portion 62D1 having the same thickness as a thickness of the second region 12B, and a second portion 62D2 extending a direction perpendicular to an extending direction of the first portion 62D1. The height of the vertical boundary of the second portion 62D2, that is, an upper boundary of the second portion 62D2, may be higher than an upper surface of the first portion 62D1. Therefore, a step difference may be formed between the upper surface of the first portion 62D1 and the upper boundary of the second portion 62D2. The size of the step difference may be adjusted by adjusting the length of the second portion 62D2 in a direction perpendicular to the upper surface of the insulating layer 14. The length of the second portion 62D2 may be adjusted by adjusting an etching depth for forming the second portion 62D2 during the manufacturing process of the third optical modulator 500. For convenience of explanation, the eighth region 62D may be divided into the first portion 62D1 and the second portion 62D2, but the first portion 62D1 and the second portion 62D2 may be one continuous identical region, and there may be no physical boundary between the first portion 62D1 and the second portion 62D2.

The first portion 62C1 of the seventh region 62C and the first portion 62D1 of the eighth region 62D may extend parallel to each other. The second portion 62C2 of the seventh region 62C and the second portion 62D2 of the eighth region 62D may extend parallel to each other. The seventh region 62C may be formed in a form that surrounds the eighth region 62D from the outside. That is, the seventh region 62C may be provided to cover a bottom, side, and top of the eighth region 62D. In other words, for convenience of explanation, if boundaries of the eighth region 62D and the seventh region 62C are considered as surfaces, the bottom, outer side, and upper surface of the eighth region 62D may be completely covered by the seventh region 62C.

The highest upper surface of the seventh region 62C may be an upper surface of the third portion 62C3 of the seventh region 62C or the highest upper surface of the fourth semiconductor layer 42. The upper surface of the second electrode layer 18 may be at the same height as the height of the highest upper surface of the seventh region 62C. An inner surface of the third portion 62C3 of the seventh region 62C and an inner surface (inner surface of the step difference) of the second portion 62D2 of the eighth region 62D may form a same side surface 12S1, and the side surface 12S1 may be spaced apart from the second electrode layer 18 and the second region 12B. The side surface 12S1 may be at a distance corresponding to (e.g., equal to) the third radius 12R3 from the center of the sixth region 62A, and the distance may be adjusted during the manufacturing process of the third optical modulator 500. That is, the distance between the side surface 12S1 and the second electrode layer 18 may be adjusted during the manufacturing process of the third optical modulator 500. The seventh region 62C and the eighth region 62D may form a PN junction region with low doping, and some of the light traveling along the optical waveguide 10 may be transmitted to the PN junction region of the third optical modulator 500, and depending on the size of the PN junction region, light of a higher-order mode (e.g., a first-order mode) in addition to the fundamental mode (TE0) may also be transmitted to the PN junction region. Therefore, the size of the PN junction region may be controlled so that only the light of the fundamental mode is transmitted to the PN junction region, and light of the higher-order mode is not transmitted or is minimized. As the PN junction area becomes larger, the influence of the high doping area, that is, the sixth region 62A and the second region 12B, on the fundamental mode transmitted to the PN junction area may be reduced. Therefore, the distance between the side surface 12S1 and the second electrode layer 18 may be determined by taking this into account.

A distance Rw1 (e.g., first radius 12R1 - third radius 12R3) from the side surface 12S 1 to an outer surface of the seventh region 62C, that is, the outer surface of the fourth semiconductor layer 42, may be the ring width. The size of the PN junction region may also increase and decrease depending on the increase and decrease of the ring width Rw1. Accordingly, the ring width may be set so that only the fundamental mode light is transmitted from the optical waveguide 10 to the PN junction region, and the transmission of the high-order mode light is minimized. In other words, according to the setting of the ring width, the high-order mode light transmitted from the optical waveguide 10 to the PN junction region may be filtered out.

In one example, the seventh region 62C may be a region in which the first dopant is doped at a third concentration. The third concentration may be less than the first concentration. The eighth region 62D may be a region in which the second dopant is doped at a fourth concentration. The fourth concentration may be less than the second concentration. The third concentration and the fourth concentration may be the same or substantially the same as each other.

A voltage may be applied to the sixth region 62A and the second region 12B through the first electrode layer 16 and the second electrode layer 18. The charge carrier concentrations of the seventh region 62C and the eighth region 62D may be changed depending on the voltage. Accordingly, light coupled to the micro-disk, that is, the fourth semiconductor layer 42, may be modulated due to the change in refractive index by change of the charge carrier concentrations.

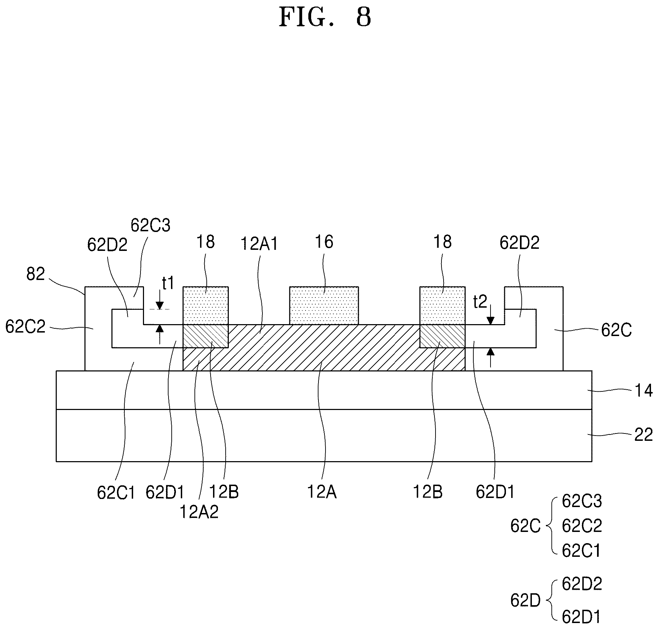

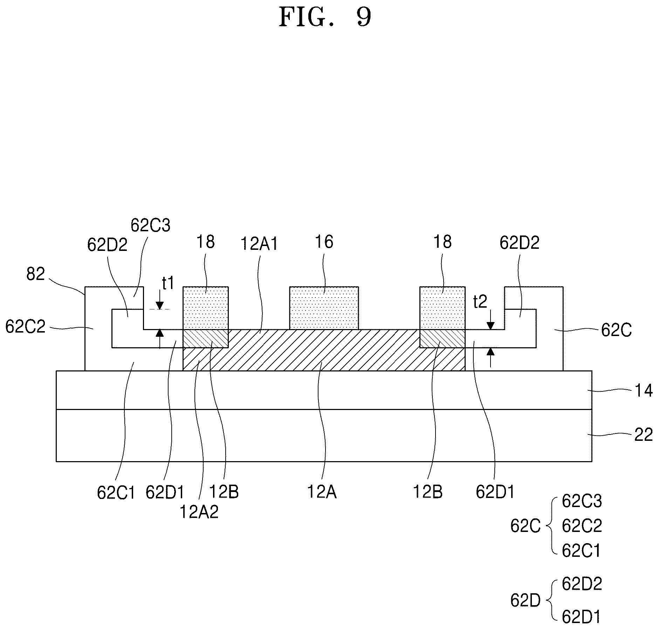

FIG. 8 and FIG. 9 show modified examples of the third optical modulator 500 illustrated in FIG. 6. Parts different from FIG. 6 will be mainly described below, and reference numerals identical to those described with reference to FIG. 6 represent the same members, and their repeated descriptions may be omitted.

Referring to FIG. 8, a fifth semiconductor layer 82 may be provided on the insulating layer 14. The fifth semiconductor layer 82 may correspond to a case when the sixth region 62A of the fourth semiconductor layer 42 of the third optical modulator 500 is replaced with the first region 12A of the first semiconductor layer 22 of the first optical modulator 20.

The layer structure and doping form of the remaining portion of the fifth semiconductor layer 82 may be the same as the layer structure and doping form of the fourth semiconductor layer 42. The height difference between an upper portion of the second portion 62D2 and the upper surface of the first portion 62D1 in the eighth region 62D of the fifth semiconductor layer 82, that is, the step difference t1, may be the same as or different from a thickness t2 of the first portion 62D1. As one example, in the fifth semiconductor layer 82, the step difference t1 may be less than the thickness t2, but as illustrated in FIG. 9, the step difference t1 may be greater than the thickness t2. The step difference t1 may correspond to the step difference between the first portion 62D1 and the second portion 62D2.

One of the first region 12A and the second region 12B may be a region doped with a P-type conductive impurity, that is, a P-type dopant (P region), and the other may be a region doped with an N-type conductive impurity, that is, an N-type dopant (N region). Accordingly, a depletion layer may be formed at an interface (junction region) of the first region 12A and the second region 12B according to the PN junction. The depletion layer may function as an insulating layer. In the drawing, the solid line between the first region 12A and the second region 12B symbolically represents the depletion layer. For the same reason, the solid line between the seventh region 62C and the eighth region 62D may also symbolically represent the depletion layer formed between the seventh region 62C and the eighth region 62D. However, the solid line between the first region 12A and the seventh region 62C and the solid line between the second region 12B and the eighth region 62D may not represent the depletion layer, and may be merely introduced to distinguish between two adjacent regions.

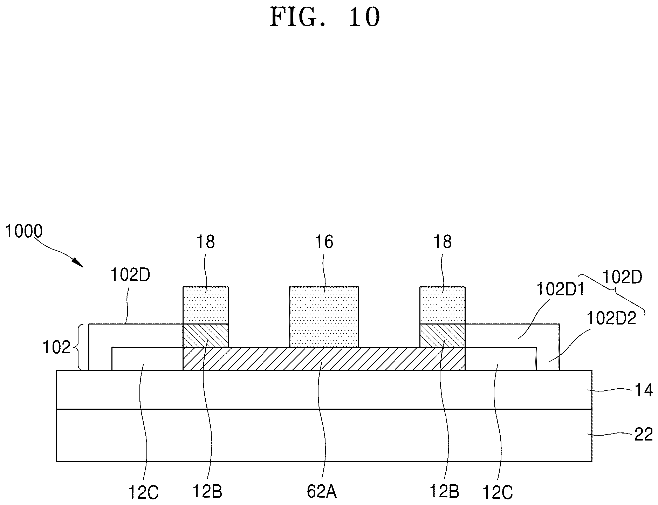

FIG. 10 shows a fourth optical modulator 1000 according to one or more embodiments. The fourth optical modulator 1000 may be an example of a modification of the third optical modulator 500.

With respect to the fourth optical modulator 1000, parts that are different from the third optical modulator 500 will be mainly described. Like reference numerals as those described above refer to like elements, and repeated descriptions thereof may be omitted.

Referring to FIG. 10, the fourth optical modulator 1000 may include a sixth semiconductor layer 102 on an insulating layer 14. The material (substance) of the sixth semiconductor layer 102 may be the same as a material of the fourth semiconductor layer 42 of the third optical modulator 500, but may not be the same. The sixth semiconductor layer 102 may include a second region 12B, a third region 12C, a sixth region 62A, and a ninth region 102D doped with a dopant. The ninth region 102D may be arranged adjacent to the second region 12B and may be formed to completely surround the second region 12B in horizontal directions. The ninth region 102D may be on the third region 12C and extend downward along an outer side of the third region 12C. That is, the ninth region 102D may be formed to include a first portion 102D1 covering an upper surface of the third region 12C and a second portion 102D2 covering an outer surface of the third region 12C. The second portion 102D2 of the ninth region 102D may be in contact with the upper surface of the insulating layer 14. As a result, the ninth region 102D in the sixth semiconductor layer 102 may be formed to completely cover the upper and side surfaces of the third region 12C.

The thickness of the first portion 102D1 of the ninth region 102D on the third region 12C may be uniform throughout and may be the same as or substantially the same as the thickness of the second region 12B. The second portion 102D2 of the ninth region 102D may have a given width in a lateral direction, and the width thereof may vary depending on the outer diameter of the third region 12C. An upper surface of the first portion 102D1 may be a part of the highest upper surface of the sixth semiconductor layer 102, and the side surface of the second portion 102D2 may be a side surface of the sixth semiconductor layer 102.

In one example, the doping concentration and the type of dopant injected in the ninth region 102D may be the same as the doping concentration and the type of dopant injected in the seventh region 62C of the fourth semiconductor layer 42 of the third optical modulator 500.

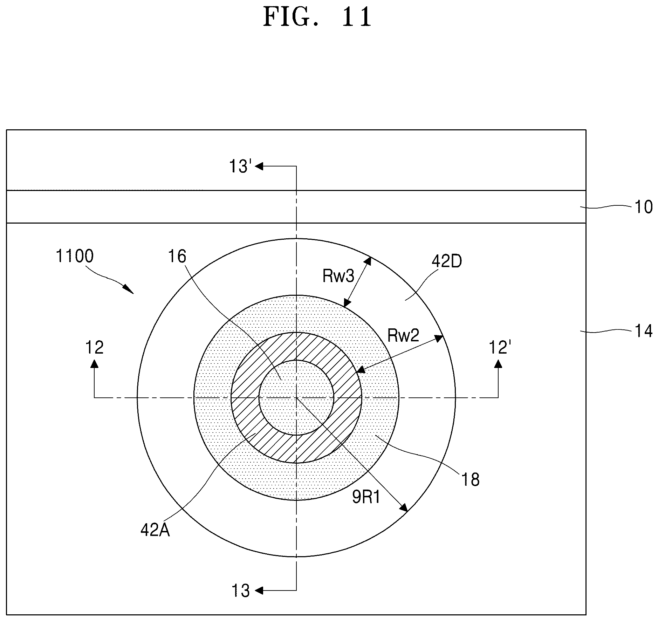

FIG. 11 is a plan view showing an optical waveguide 10 and a fifth optical modulator 1100 arranged adjacent thereto, according to one or more embodiments.

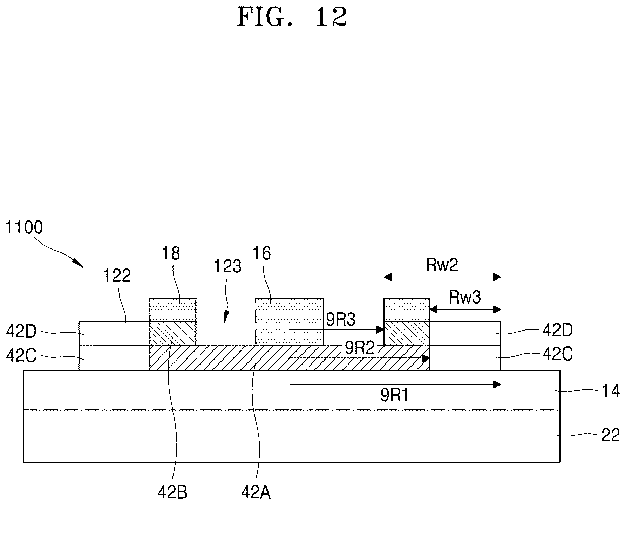

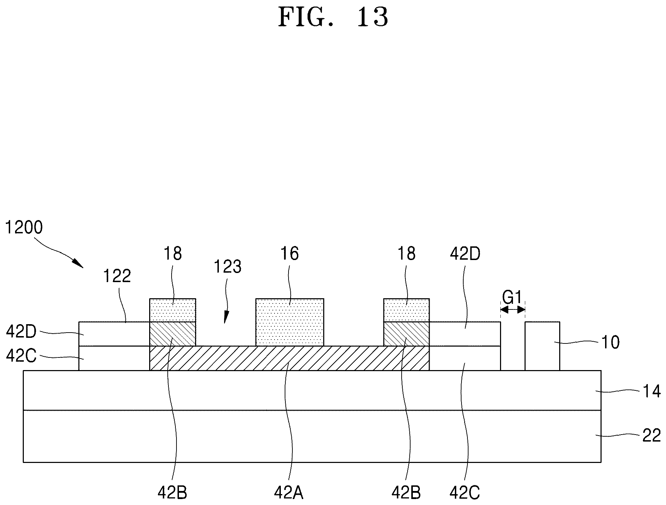

FIG. 12 is a cross-sectional view taken along a line 12-12' of FIG. 11, and FIG. 13 is a cross-sectional view taken along a line 13-13' of FIG. 11.

In one example, the fifth optical modulator 1100 may be an example of a modification of the second optical modulator 400 of FIG. 4. Therefore, parts that are different from the second optical modulator 400 will be mainly described, and repeated descriptions may be omitted.

Referring to FIG. 11, FIG. 12, and FIG. 13 together, the fifth optical modulator 1100 may include a seventh semiconductor layer 122 on an insulating layer 14. The seventh semiconductor layer 122 may be a semiconductor layer of the same material as a material of the third semiconductor layer 32 of the second optical modulator 400, but may also be a semiconductor layer of a different material(s). The planar shape of the seventh semiconductor layer 122 may be circular or non-circular (e.g., elliptical). In one example, the seventh semiconductor layer 122 may be in the form of a disk.

In order to modulate light of many wavelengths simultaneously in the fifth optical modulator 1100, the wavelength division multiplexing (WDM) bandwidth of the fifth optical modulator 1100 may be widened, and in order to increase the WDM bandwidth, the free spectral range (FSR) of the fifth optical modulator 1100 may be increased. The FSR increases as the radius of the seventh semiconductor layer 122 decreases, and decreases as the radius increases. In one example, the FSR may be several tens of nanometers (nm), and the radius of the seventh semiconductor layer 122 may be several micrometers (µm) or less. Considering the size of the radius of the seventh semiconductor layer 122, the seventh semiconductor layer 122 may also be expressed as a micro disk.

The seventh semiconductor layer 122 may include a first region 42A, a second region 42B, a third region 42C, and a fourth region 42D doped with p-type or n-type dopants. The basic arrangement of the first to fourth regions 42A to 42D may be similar or identical to the arrangement of the doping regions (e.g., the second region 12B, the third region 12C, the fourth region 12D, and the fifth region 32A) of the third semiconductor layer 32 of the second optical modulator 400. For example, the formation positions and arrangement relationships of the first region 42A and the second region 42B of the seventh semiconductor layer 122 may be identical to the formation positions and arrangement relationships of the fifth region 32A and the second region 12B of the third semiconductor layer 32 of the second optical modulator 400.

In addition, the formation position of the third region 42C of the seventh semiconductor layer 122 may be the same as the formation position of third region 12C of the third semiconductor layer 32 of the second optical modulator 400. The formation position of the fourth region 42D of the seventh semiconductor layer 122 may be the same as the formation position of the fourth region 12D of the third semiconductor layer 32 of the second optical modulator 400. The doping form and doping concentration of each of the first region 42A, the second region 42B, the third region 42C, and the fourth region 42D of the seventh semiconductor layer 122 may be the same as the doping form and doping concentration of the fifth region 32A, the second region 12B, the third region 12C, and the fourth region 12D of the third semiconductor layer 32 of the second optical modulator 400.

However, the planar and cross-sectional shapes of the third region 42C and the fourth region 42D of the seventh semiconductor layer 122 may be different from the planar and cross-sectional shapes of the third region 12C and the fourth region 12D of the third semiconductor layer 32 of the second optical modulator 400. For example, in the seventh semiconductor layer 122, the third region 42C and the fourth region 42D may be sequentially formed in a vertical direction on the upper surface of the insulating layer 14, and the third region 42C and the fourth region 42D may completely overlap with each other in the vertical direction. Unlike the third region 12C and the fourth region 12D of the third semiconductor layer 32 of the second optical modulator 400, the third region 42C and the fourth region 42D may include only a portion extending parallel to the upper surface of the insulating layer 14, and not include a portion extending in a direction perpendicular to the upper surface of the insulating layer 14. That is, outer side surfaces of the third region 42C and the fourth region 42D may form the same surface, an upper surface of the fourth region 42D may be separated from the third region 42C, and radii 9R2 of inner side surfaces (boundaries) of the third region 42C and the fourth region 42D having a ring-shaped planar shape may be the same as each other, and radii 9R1 of outer side surfaces of the third region 42C and the fourth region 42D may also be the same as each other. The radius 9R1 of the outer side corresponds to the radius of the seventh semiconductor layer 122. The radius 9R1 of the seventh semiconductor layer 122 may be determined by considering the FSR of the fifth optical modulator 1100.

The shape of the seventh semiconductor layer 122 may be different. That is, the seventh semiconductor layer 122 may include a recess 123 of a given depth, the first region 42A under the recess 123, and the second region 42B and the fourth region 42D distributed around the recess 123. The center of the recess 123 may coincide with the center of the first region 42A, and the recess 123 and the first region 42A, the second region 42B, the third region 42C, and the fourth region 42D may be concentric circles. A first electrode layer 16 may be provided on the first region 42A within the recess 123, and a second electrode layer 18 may be provided around the recess 123. The recess 123 may be expressed as a groove or trench.

A second width Rw2 of the combined region of the second region 42B and the fourth region 42D, measured in a radial direction (e.g., in the radial direction of the first region 42A) from the center of the first region 42A in the seventh semiconductor layer 122, i.e., the ring width (e.g., second width Rw2) of the seventh semiconductor layer 122, may be adjusted during the manufacturing process of the fifth optical modulator 1100. The second width Rw2 may be equal to adding the width (e.g., radii 9R2 - radii 9R3) of the second region 42B and the third width Rw3 (e.g., radii 9R1 - radii 9R2) of the fourth region 42D.

When the light transmitted from the optical waveguide 10 to the third region 42C and the fourth region 42D of the fifth optical modulator 1100 for optical modulation approaches or touches the highly doped regions, that is, the first region 42A and the second region 42B, optical loss may occur and the optical modulation efficiency may decrease. Therefore, the ring width Rw2 may be adjusted to minimize optical loss during the optical modulation process. For example, the third width Rw3 of the third region 42C and the fourth region 42D may be formed greater than the volume of the fundamental mode TE0 of the light. However, in order to prevent or minimize the inclusion of high-order mode light (e.g., TE1) in the optical modulation, the width of the third width Rw3 may be narrowed so that a portion of the optical mode overlaps the high-doping region.

In FIG. 11, FIG. 12, and FIG. 13, the fifth optical modulator 1100 and the optical waveguide 10 may be collectively referred to as an optical modulator. This may be equally applied to other optical modulators described later.

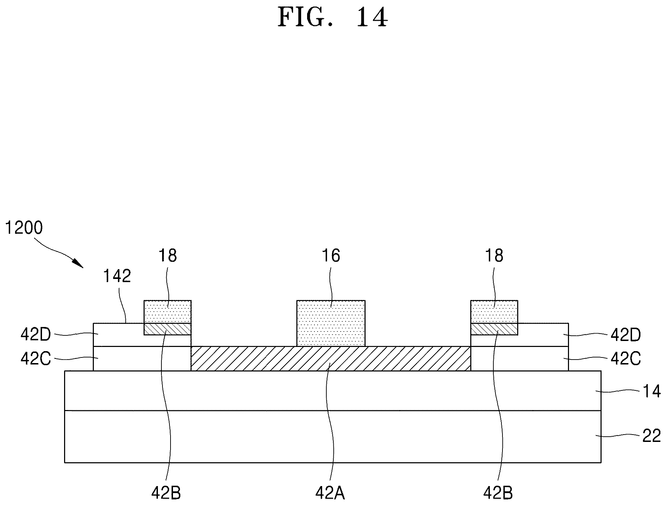

FIG. 14 shows a sixth optical modulator 1200 according to one or more embodiments. Parts that are different from the fifth optical modulator 1100 are mainly described, and repeated descriptions thereof may be omitted.

Referring to FIG. 14, a second region 42B in an eighth semiconductor layer 142 of the sixth optical modulator 1200 may be not on the first region 42A, but may be separated from the first region 42A. In the eighth semiconductor layer 142, the second region 42B, the third region 42C, and the fourth region 42D may be provided to overlap each other in a vertical direction on the upper surface of the insulating layer 14. As one example, the second region 42B may be formed on a part of the fourth region 42D, and a second electrode layer 18 may be provided on the second region 42B. When comparing the seventh semiconductor layer 122 of the fifth optical modulator 1100 with the eighth semiconductor layer 142 of the sixth optical modulator 1200, the second region 42B of the eighth semiconductor layer 142 may be viewed as a case when a part of the fourth region 42D of the seventh semiconductor layer 122 is changed into a high-doping region like the second region 42B. Therefore, a separate mask for ion implantation may be used to form the second region 42B of the eighth semiconductor layer 142.

In the eighth semiconductor layer 142, the second region 42B may be separated from the third region 42C, and the fourth region 42D may be between the second region 42B and the third region 42C. An upper surface of the second region 42B and an upper surface of the fourth region 42D may at the same height as each other, and therefore, the two upper surfaces may form the same surface. In a plan view, the upper surface of the second region 42B and the upper surface of the fourth region 42D may form a circular or non-circular (e.g., elliptical) band with the center of the first region 42A as a reference point. In the plan view, the first region 42A, the second region 42B, and the fourth region 42D may be concentric circles, and the second region 42B may be located between the upper surface of the fourth region 42D and the first region 42A.

In the eighth semiconductor layer 142, the thickness of the second region 42B may be less than the thickness of the fourth region 42D, and a horizontal length of the second region 42B (the ring width in the radial direction in the plan view) may be adjusted in consideration of the volume of the fundamental mode of light to be modulated or may be adjusted to minimize light loss during the light modulation process.

In the eighth semiconductor layer 142, the first region 42A and the second region 42B, which may be highly doped regions, may be separated from each other and not form a PN junction, so capacitance due to the PN junction may be not formed or the capacitance may be minimized. Therefore, the optical modulation speed may be increased.

The material of the eighth semiconductor layer 142 may be the same as or different from the material of the second semiconductor layer 12 of FIG. 2.

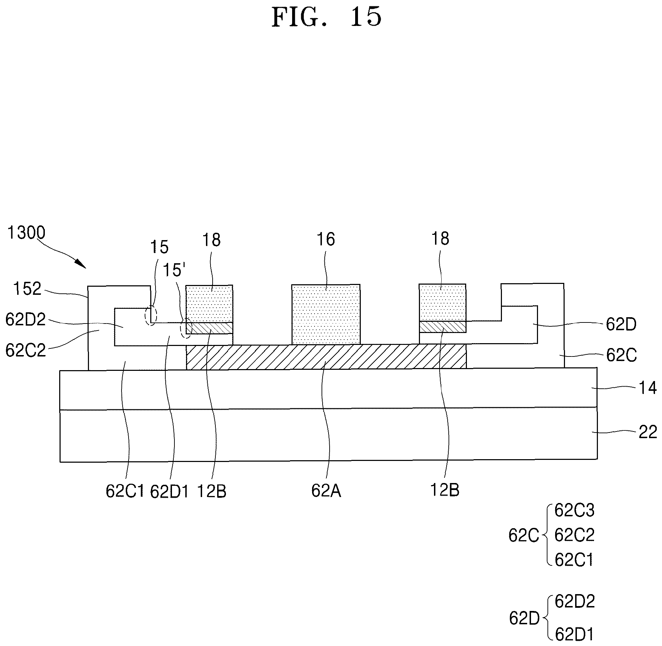

FIG. 15 shows a seventh optical modulator 1300 according to one or more embodiments.

The seventh optical modulator 1300 may be a combination of the features of the third optical modulator 500 and the sixth optical modulator 1200.

Referring to FIG. 15, in a ninth semiconductor layer 152, the second region 12B may be provided to be separated from the sixth region 62A, and a part of the first portion 62D1 of the eighth region 62D may be provided between the second region 12B and the sixth region 62A. That is, the second region 12B of the ninth semiconductor layer 152 may be provided on the first portion 62D1 of the eighth region 62D in the same form as the second region 42B is provided on the fourth region 42D in the sixth optical modulator 1200. The second region 12B may be provided on the first portion 62D1 of the eighth region 62D. Accordingly, the eighth region 62D may include three regions with different thicknesses. For example, the left part of the first step difference 15 in the eighth region 62D may have a first thickness, the part between the first step difference 15 and the second region 12B may have a second thickness less than the first thickness, and the part below the second region 12B may have a third thickness less than the second thickness.

In other words, the second region 12B may be provided on the first portion 62D1 of the eighth region 62D. Accordingly, the eighth region 62D may include a non-physical step difference 15' and a physical step difference (e.g., the first step difference 15) that appears as the ninth semiconductor layer 152 is etched to form a recess. The non-physical step difference 15' may be located in a portion where the thickness of the ninth semiconductor layer 152 on the right side of the physical step difference (e.g., the first step difference 15) is constant. Due to the existence of the second region 12B, the first portion 62D1 on the right side of the first step difference 15 may be divided into a portion with a thick doping region and a portion with a thin doping region (a portion located below the second region 12B). In a cross-sectional profile of the eighth region 62D, a step difference may appear due to the difference in thickness between the thick portion and the thin portion of the first portion 62D1. This non-physical step difference 15' is not a step difference that is exposed externally due to direct etching of the material layer, but exists inside the ninth semiconductor layer 152 corresponding to the first portion 62D1 of the eighth region 62D. Therefore, the non-physical step difference 15' may be expressed as an internal step difference of the ninth semiconductor layer 152 or a step difference of a doping region inside the ninth semiconductor layer 152.

As a result, the eighth region 62D in FIG. 15 may include two step differences (e.g., the first step difference 15 and the non-physical step difference 15').

The remaining portion of the ninth semiconductor layer 152 of the seventh optical modulator 1300 may be identical to the fourth semiconductor layer 42 of the third optical modulator 500.

The material of the ninth semiconductor layer 152 may be identical to the material of the second semiconductor layer 12 of FIG. 2, but may also be different.

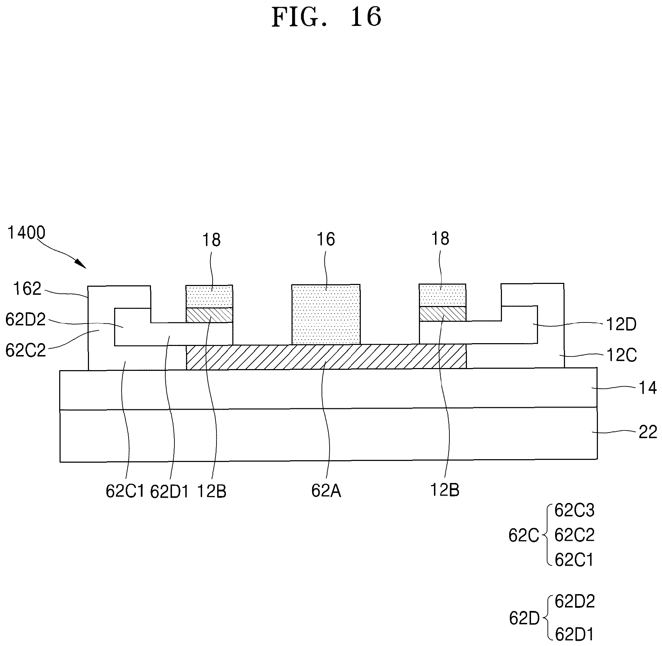

FIG. 16 shows an eighth optical modulator 1400 according to one or more embodiments.

The eighth optical modulator 1400 may correspond to one of modifications of the seventh optical modulator 1300. Therefore, only the parts different from the seventh optical modulator 1300 will be described.

Referring to FIG. 16, the layer structure or layer profile of a tenth semiconductor layer 162 provided on the insulating layer 14 in the eighth optical modulator 1400 may be similar to the layer structure or layer profile of the ninth semiconductor layer 152 of the seventh optical modulator 1300. For example, in the tenth semiconductor layer 162, the second region 12B may be on an upper surface of the first portion 62D1 of the eighth region 62D, and the second electrode layer 18 may be provided on the second region 12B. In the eighth optical modulator 1400, the second region 12B may be provided on an upper surface of the first portion 62D1 of the eighth region 62D, so the non-physical step difference 15' described with reference to FIG. 15 does not appear in the first portion 62D1. The remaining configuration of the eighth optical modulator 1400 may be the same as the configuration of the seventh optical modulator 1300. The material of the tenth semiconductor layer 162 may be the same as or different from the material of the second semiconductor layer 12 of FIG. 2.

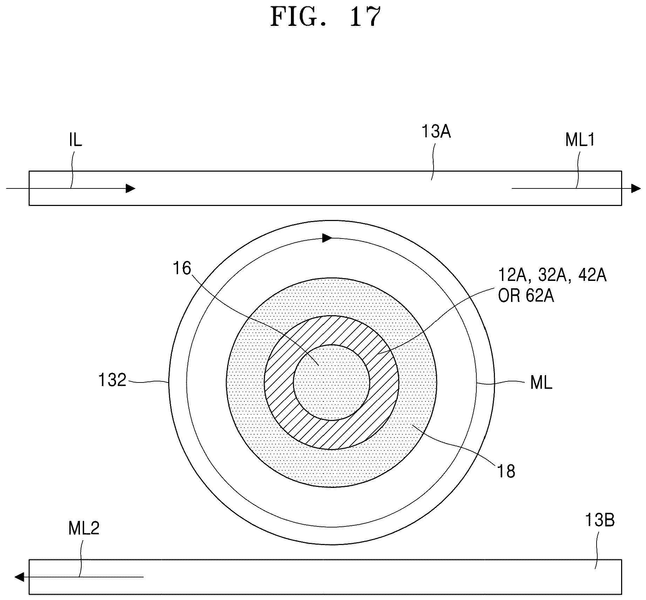

The optical modulators described above may include a plurality of optical waveguides. FIG. 17 shows an example of the optical modulators.

Referring to FIG. 17, a first optical waveguide 13A may be arranged adjacent to a semiconductor layer 132, and a second optical waveguide 13B may be arranged parallel to the first optical waveguide 13A with the semiconductor layer 132 therebetween. In one example, only the portion corresponding to (e.g., adjacent to) the semiconductor layer 132 of the first optical waveguide 13A and the second optical waveguide 13B may be parallel to each other, and the remaining portions of the first optical waveguide 13A and the second optical waveguide 13B may not be parallel. A separation distance (interval) between the semiconductor layer 132 and the first optical waveguide 13A may be the same as or substantially the same as the separation distance between the semiconductor layer 132 and the second optical waveguide 13B. The distance between the semiconductor layer 132 and the first optical waveguide 13A and the distance between the semiconductor layer 132 and the second optical waveguide 13B may be the same as or substantially the same as the first gap G1 of FIG. 3. The semiconductor layer 132 may be one of the semiconductor layers (e.g., the second semiconductor layer 12, the third semiconductor layer 32, the fourth semiconductor layer 42, the fifth semiconductor layer 82, the sixth semiconductor layer 102, and the seventh semiconductor layer 122, the eighth semiconductor layer 142, the ninth semiconductor layer 152, and the tenth semiconductor layer 162) mentioned with reference to FIGS. 1 to 16 and the related descriptions. The material and role (function) of the first optical waveguide 13A may be the same as the material and role of the optical waveguide 10. In one example, the material of the first optical waveguide 13A may be different from the material of the optical waveguide 10. The material and dimensions of the second optical waveguide 13B may be the same as or substantially the same as the material and dimensions of the first optical waveguide 13A, but are not limited thereto.

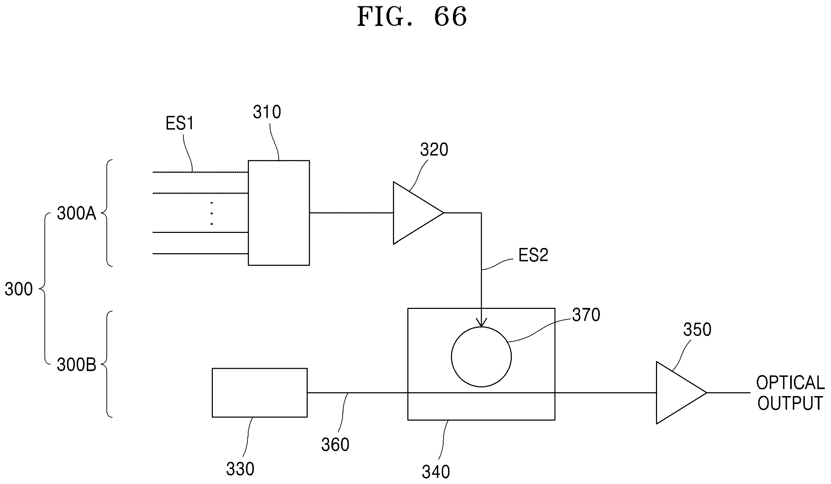

Light IL input from a light source (e.g., light source 330 of FIG. 66) to the first optical waveguide 13A may be transmitted to the semiconductor layer 132 and may be modulated according to a voltage applied to the semiconductor layer 132. A portion ML1 of the modulated light ML in the semiconductor layer 132 may be output through the first optical waveguide 13A, and the remainder ML2 of the modulated light may be output through the second optical waveguide 13B.

Next, a method of manufacturing an optical modulator according to one or more embodiments is described.

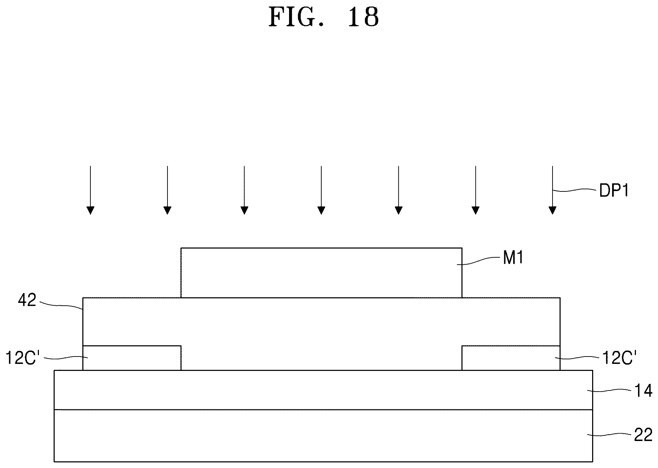

FIGS. 18 to 26 are cross-sectional views showing a method of manufacturing the third optical modulator according to one or more embodiments step by step.

In the following description, like reference numerals as those mentioned in the description of the third optical modulator 500 above refer to like components, and repeated description thereof may be omitted.

First, as illustrated in FIG. 18, a substrate may be prepared by sequentially stacking or sequentially forming the first semiconductor layer 22 and the insulating layer 14. An SOI substrate may be used as the substrate. The fourth semiconductor layer 42 may be formed on the insulating layer 14. In one example, the fourth semiconductor layer 42 may be formed on a separate temporary substrate and then transferred onto the insulating layer 14, but is not limited to this method.

A first mask M1 may be formed on the fourth semiconductor layer 42 to define a portion of the fourth semiconductor layer 42. The first mask M1 may be an ion implantation mask, but is not limited thereto. In one example, the first mask M1 may be a photoresist mask, but may also be a mask of another material.

In a plan view, the first mask M1 may define a portion of the fourth semiconductor layer 42 to be exposed in a circular band shape, but may also define the portion of the fourth semiconductor layer 42 to be exposed in a non-circular (e.g., elliptical) band shape. The portion of the fourth semiconductor layer 42 defined by the first mask M1 may correspond to a first portion 12C1 of the third region 12C of the third optical modulator 500.

A first dopant DP1 may be injected into the region defined by the first mask M1 of the fourth semiconductor layer 42. In one example, the first dopant DP1 may be injected using an ion implantation method, but is not limited thereto. In one example, the first dopant DP1 may include a p-type or n-type conductive impurity. In one example, the first dopant DP1 may include an n-type conductive impurity. In an injection process of the first dopant DP1, the first dopant DP1 may be injected with a first ion implantation energy. Due to the injection process of the first dopant DP1, a first doping layer 12C' may be formed in a region corresponding to the first portion 12C1 of a third region 12C of the fourth semiconductor layer 42. The first doping layer 12C' may be doped with a concentration corresponding to a doping concentration of the third region 12C of the third optical modulator 500. The first doping layer 12C' may also be described as a first doping region. After the first doping layer 12C' is formed, the first mask M1 may be removed.

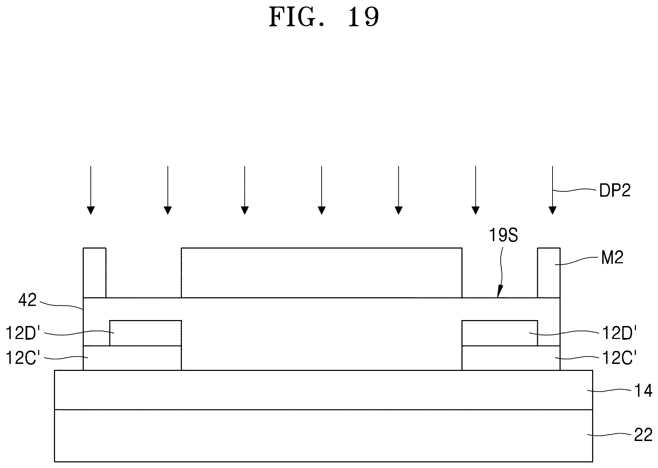

Next, as illustrated in FIG. 19, a second mask M2 may be formed on the fourth semiconductor layer 42 to expose a portion of the fourth semiconductor layer 42. The second mask M2 may be for forming the fourth region 12D of the third optical modulator 500. Accordingly, the second mask M2 may be formed so that a surface of the fourth semiconductor layer 42 corresponding to the fourth region 12D of the third optical modulator 500 is exposed. A second dopant DP2 may be injected into the exposed region of the fourth semiconductor layer 42. The second dopant may be injected by ion implantation, but is not limited thereto. In one example, the second dopant DP2 may include a p-type or n-type conductive impurity, but may include a dopant of a type opposite to the first dopant. In one example, the second dopant DP2 may include a p-type conductive impurity. In one example, in the injection process of the second dopant DP2, the second dopant DP2 may be injected with a second ion implantation energy. The second ion implantation energy may be less than the first ion implantation energy. Due to the injection process of the second dopant DP2, a second doping layer 12D' may be formed on the first doping layer 12C'. The radial width of the second doping layer 12D' may be narrower than the radial width of the first doping layer 12C'. The second doping layer 12D' may be doped with the same concentration as the doping concentration of first doping layer 12C'. The second doping layer 12D' may also be described as a second doping region. The formation position of the second doping layer 12D' may correspond to the position of the horizontal portion of the fourth region 62D of the fourth semiconductor layer 42 of the third optical modulator 500. Therefore, the second doping layer 12D' may be spaced apart from an upper surface 19S of the fourth semiconductor layer 42. In one example, the second doping layer 12D' may be formed before the first doping layer 12C'.

When the first doping layer 12C' and the second doping layer 12D' are formed, a depletion layer may be formed at a junction between the first doping layer 12C' and the second doping layer 12D'. When the thicknesses of the first doping layer 12C' and the second doping layer 12D' are the same, the depletion layer may be formed in the middle between the first doping layer 12C' and the second doping layer 12D' in a vertical direction. However, the position where the depletion layer is formed may be controlled by controlling the formation conditions of the first doping layer 12C' and/or the formation conditions of the second doping layer 12D'. That is, the thickness of the first doping layer 12C' and the thickness of the second doping layer 12D' may be formed differently. For example, the thickness of the second doping layer 12D' may be formed thinner than the thickness of the first doping layer 12C' so that the depletion layer may be formed closer to an upper surface of the second doping layer 12D' than a lower surface of the first doping layer 12C'.

The first doping layer 12C' and the second doping layer 12D' may not have a physical boundary that may be identified with the naked eye, but a boundary is indicated by a solid line for the convenience of illustration and explanation. In addition, the solid line indicated to indicate the boundary between the first doping layer 12C' and the second doping layer 12D' in the drawing may be regarded as a surface of the first doping layer 12C' and the second doping layer 12D' for the convenience of explanation. The solid lines indicating the boundaries of different doping layers below may also be considered equally.

After forming the second doping layer 12D', the second mask M2 may be removed.

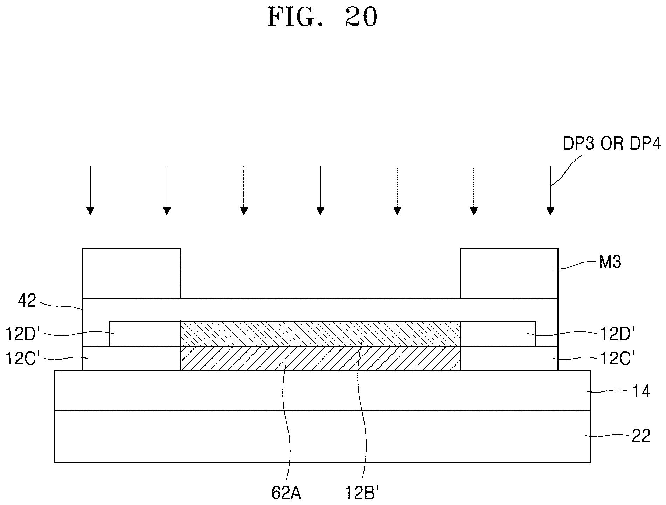

Next, as illustrated in FIG. 20, a third mask M3 may be formed on an upper surface of the fourth semiconductor layer 42. The third mask M3 may be the same mask as or a different mask from the first mask M1 in terms of use and material.

The third mask M3 may be formed to cover and protect the first doping layer 12C' and the second doping layer 12D' and may define a portion of the fourth semiconductor layer 42. In one example, the third mask M3 may be formed in such a way that an area corresponding to the sixth region 62A of the third optical modulator 500 in the fourth semiconductor layer 42 is exposed, and the remaining region of the fourth semiconductor layer 42 is covered.

With the third mask M3 present, a third dopant DP3 may be injected into the fourth semiconductor layer 42. The material of the third dopant may be the same as the material of the first dopant, but the third dopant and the first dopant may include different conductive impurities in the same type of conductive impurity group. In the process of injecting the third dopant DP3, the third dopant DP3 may be injected by ion implantation and may be injected with third ion implantation energy. The third ion implantation energy may be the same as or substantially the same as the first ion implantation energy. By the process of injecting the third dopant DP3, a third doping layer (e.g., the sixth region 62A) may be formed in the fourth semiconductor layer 42. The sixth region 62A may be doped at a higher concentration than concentrations of the first doping layer 12C' and the second doping layer 12D'. The execution time of the third dopant injection process (DP3) may be the same as or substantially the same as the execution time of the first dopant injection process (DP1), but may be different.

Next, while maintaining the third mask M3, a fourth dopant DP4 may be injected into the fourth semiconductor layer 42. The material of the fourth dopant DP4 may be the same as the material of the second dopant, but the fourth dopant DP4 and the second dopant DP2 may include different conductive impurities in the same type of conductive impurity group. In the process of injecting the fourth dopant DP4, the fourth dopant DP4 may be injected by an ion implantation method and may be injected with a fourth ion implantation energy. The fourth ion implantation energy may be the same as or substantially the same as the second ion implantation energy. A fourth doping layer 12B' may be formed on the fourth semiconductor layer 42 by the process of injecting the fourth dopant DP4. The fourth doping layer 12B' may be a region formed to form the second region 12B of the third optical modulator 500. The fourth doping layer 12B' may be doped at a higher concentration than concentrations of the first doping layer 12C' and the second doping layer 12D', and may be doped at the same or substantially the same concentration as the third doping layer (e.g., the sixth region 62A). The execution time of the fourth dopant injection process (DP4) may be the same or substantially the same as the execution time of the second dopant injection process (DP2), but may be different. After the fourth doping layer 12B' is formed, the third mask M3 is removed. In one example, the fourth doping layer 12B' may be formed before the third doping layer (e.g., the sixth region 62A).

When the third doping layer (e.g., the sixth region 62A) and the fourth doping layer 12B' are formed, a depletion layer may be formed at a junction between the third doping layer (e.g., the sixth region 62A) and the fourth doping layer 12B'. The depletion layer may serve as an insulating layer. Like the depletion layer formed at the junction between the first doping layer 12C' and the second doping layer 12D' described above, the position of the depletion layer formed at the junction between the third doping layer (e.g., the sixth region 62A) and the fourth doping layer 12B' may also be controlled. That is, the thicknesses of the third doping layer (e.g., the sixth region 62A) and the fourth doping layer 12B' may be controlled by controlling the formation process of the third doping layer (e.g., the sixth region 62A) and the fourth doping layer 12B'. In one example, the position of the depletion layer formed between the third doping layer (e.g., the sixth region 62A) and the fourth doping layer 12B' in the vertical direction may be the same as the position of the depletion layer formed between the first doping layer 12C' and the second doping layer 12D'. In other words, a height of the depletion layer formed between the third doping layer (e.g., the sixth region 62A) and the fourth doping layer 12B' may be the same as the height of the depletion layer formed between the first doping layer 12C' and the second doping layer 12D'.

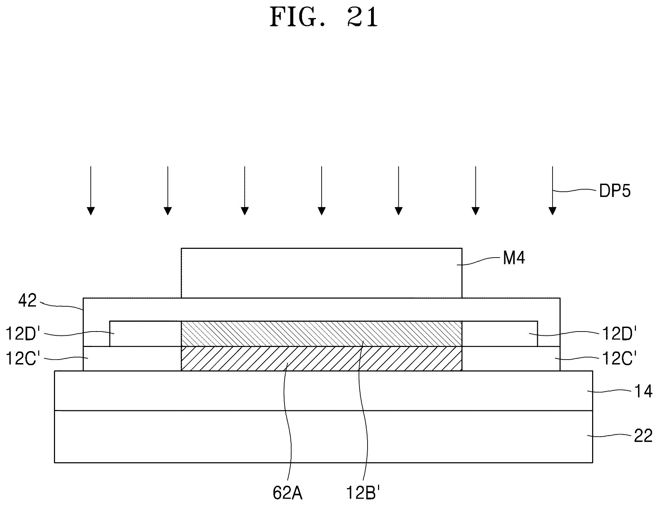

Next, as illustrated in FIG. 21, a fourth mask M4 may be formed on the fourth semiconductor layer 42 to define a portion of the fourth semiconductor layer 42. The fourth mask M4 may be a mask of the same material as a material the first mask M1, but may also be a mask of a different material. The fourth mask M4 may be formed to completely cover the third doping layer (e.g., the sixth region 62A) and the fourth doping layer 12B' and also cover a portion of the second doping layer 12D' adjacent to the fourth doping layer 12B'. Edges of the fourth mask M4 and the fourth semiconductor layer 42 may be spaced apart from each other, and the upper surface of the fourth semiconductor layer 42 between edges of the fourth mask M4 and the fourth semiconductor layer 42 may be exposed. The fourth mask M4 may have a circular shape in the plan view. The fourth mask M4 may be a mask for forming the second portion 62C2 and the third portion 62C3 of the seventh region 12C of the third optical modulator 500. Therefore, the fourth mask M4 may be formed to expose only a portion of the fourth semiconductor layer 42 corresponding to the second portion 62C2 and the third portion 62C3.

The fourth mask M4 may be formed to cover a region of the fourth semiconductor layer 42 corresponding to the third radius 12R3 of the third optical modulator 500 of FIG. 6. Therefore, by adjusting the radius of the fourth mask M4, the third radius 12R3 of the third optical modulator 500 may be adjusted, and the ring width Rw1 may also be adjusted. As a result, by adjusting the radius of the fourth mask M4, only the light of the fundamental mode among the light transmitted to the third optical modulator 500 may be transmitted to the third optical modulator 500, and the light of the multi-mode may be filtered.

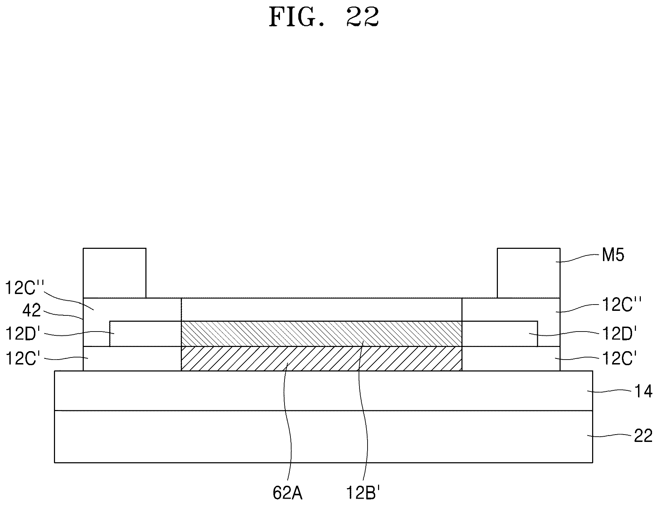

Next, with the fourth mask M4 present, a fifth dopant DP5 may be injected into the fourth semiconductor layer 42. The fifth dopant DP5 may include the same conductive impurity as the conductive impurity of the first dopant DP1. In one example, the fifth dopant DP5 may be the same material as the material of the first dopant DP1. The process of implanting the fifth dopant DP5 may be a process of ion implanting the fifth dopant DP5. In the process of implanting the fifth dopant DP5, the fifth dopant DP5 may be implanted with fifth ion implantation energy. The fifth ion implantation energy may be less than the second ion implantation energy. By the fifth dopant injection process of the fifth dopant DP5, a fifth doping layer 12C" (see FIG. 22) in which the fifth dopant DP5 is ion-implanted may be formed in the exposed region of the fourth semiconductor layer 42 on the second doping layer 12D'. In the fifth dopant injection process of the fifth dopant DP5, the fifth dopant DP5 may be injected at the same doping concentration as the doping concentration of the first doping layer 12C'. Therefore, the concentration of the fifth doping layer 12C" may be the same as or substantially the same as the concentration of the first doping layer 12C'.

The exposed region of the fourth semiconductor layer 42 around the fourth mask M4 may cover an upper surface and the entire side surface of the second doping layer 12D'. The thickness of a region between the side surface of the second doping layer 12D' and the side surface of the fourth semiconductor layer 42 in the exposed region of the fourth semiconductor layer 42 may be slightly thicker, but not significantly, than the region on the upper surface of the second doping layer 12D' of the fourth semiconductor layer 42. Therefore, the ion-injected fifth dopant may diffuse into a region between the side of the second doping layer 12D' and a side of the fourth semiconductor layer 42 due to annealing or heat treatment after the ion implantation of the fifth dopant DP5. Accordingly, the region between the side of the second doping layer 12D' and the side of the fourth semiconductor layer 42 may also become the fifth doping layer 12C".

As a result, as shown in FIG. 22, the fifth doping layer 12C" may be formed in the region of the fourth semiconductor layer 42 corresponding to the second portion 62C2 and the third portion 62C3 of the seventh region 62C of the third optical modulator 500 by the fifth dopant injection process of the fifth dopant DP5. The fifth doping layer 12C" may be a region doped with the same conductive impurity as the conductive impurity doped into the first doping layer 12C' and may be a region doped with substantially the same doping concentration as the doping concentration of the first doping layer 12C'. Therefore, the first doping layer 12C' and the fifth doping layer 12C" may be a single doping region. Although the first doping layer 12C' and the fifth doping layer 12C" are shown separately in FIG. 22 and other drawings, this is only to facilitate the explanation and understanding of the manufacturing process. In reality, the first doping layer 12C' and the fifth doping layer 12C" may be connected as one region, such as the seventh region 62C of FIG. 6.

In one example, the order of the processes injecting the first to fifth dopants DP1 to DP5 in the manufacturing process illustrated in FIGS. 18 to 21 may vary. For example, the processes injecting the third dopant DP3 and the fourth dopant DP4 for forming a high doping region may be performed before the processes injecting the first dopant DP1 and the second dopant DP2 for forming a low doping region.

After the fifth doping layer 12C" is formed, the fourth mask M4 may be removed.

After the fourth mask M4 is removed, a fifth mask M5 may be formed on the fourth semiconductor layer 42, as illustrated in FIG. 22. The fifth mask M5 may be a mask for etching, and may be a mask including the same material as a material of the first mask M1, but may also be a mask including a different material. In the plan view, the fifth mask M5 may be formed in a circular band shape, but may also be formed in a non-circular shape (e.g., oval). The fifth mask M5 may be formed only on an upper surface of the fifth doping layer 12C". A region where the fifth mask M5 is formed on the upper surface of the fifth doping layer 12C" may be adjusted in consideration of the ring width or step difference formation position. For example, the position (boundary) of an inner side surface of the fifth mask M5 may be adjusted between an inner side surface and an outer side surface of the second doping layer 12D'.

As a result, the fifth mask M5 may be a mask that defines the fourth semiconductor layer 42 so that an entire inner region of the fifth doping layer 12C" and a portion of the fifth doping layer 12C" are exposed in the fourth semiconductor layer 42.

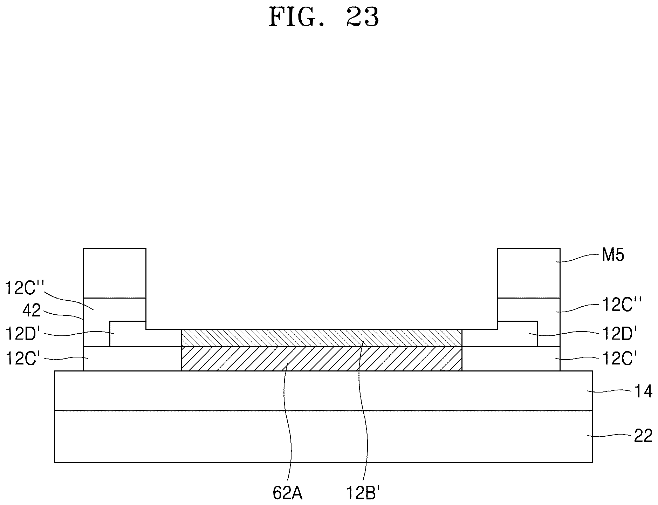

Next, as illustrated in FIG. 23, the exposed region of the fourth semiconductor layer 42 may be first etched while the fifth mask M5 is present. The first etching may be performed until the second doping layer 12D' and the fourth doping layer 12B' are exposed. In one example, after the second doping layer 12D' and the fourth doping layer 12B' are exposed, the first etching may be performed further for a set time so that a step difference of a set thickness or depth is formed in the second doping layer 12D'. In one example, the first etching may be performed within a range in which the fourth doping layer 12B' is not completely removed.

In other words, the first etching may be performed within a range where a depletion layer between the third doping layer (e.g., the sixth region 62A) and the fourth doping layer 12B' is not exposed. By controlling the set etching time in the first etching, the thickness (depth) of the step difference formed in the second doping layer 12D' may also be controlled. Therefore, in the first etching, the thickness of the step difference formed in the second doping layer 12D' may be controlled to be larger or smaller than the thickness of the fourth doping layer 12B' remaining after the first etching. As a result of the first etching, the thickness of the fourth doping layer 12B' may become less than the thickness of the second doping layer 12D' under the fifth mask M5. After the first etching, the fifth mask M5 may be removed.

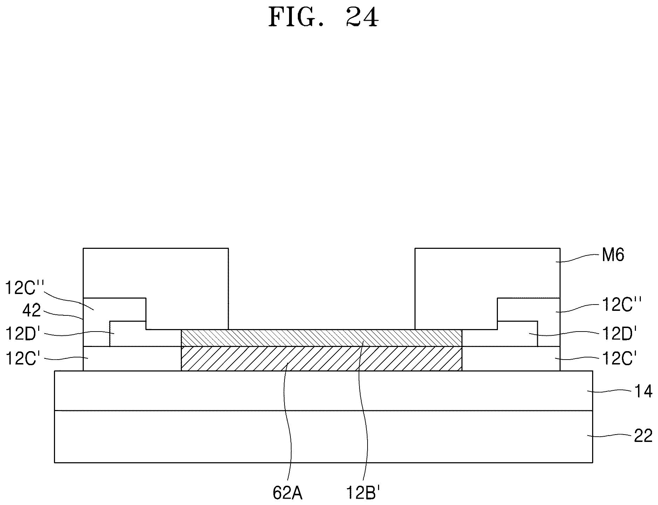

After the fifth mask M5 is removed, as illustrated in FIG. 24, a sixth mask M6 may be formed on the fourth semiconductor layer 42. The sixth mask M6 may be a mask for etching, and may be a mask including the same material as a material of the fifth mask M5, but may also be a mask including a different material. In the plan view, the sixth mask M6 may be in the shape of a circular band, or may be non-circular. The sixth mask M6 may be an etching mask for forming the second region 12B of the third optical modulator 500. Therefore, the sixth mask M6 may be formed in a form that exposes only a part of the fourth doping layer 12B' in the plan view and covers the rest of the fourth semiconductor layer 42.

After forming the sixth mask M6, the exposed portion of the fourth semiconductor layer 42 may be second-etched while the sixth mask M6 is present. The second etching may be performed until the exposed portion of the fourth doping layer 12B' and the depletion layer thereunder are removed, and the third doping layer (e.g., the sixth region 62A) under the depletion layer is exposed. In one example, at least the exposed portion of the fourth doping layer 12B' may be completely removed in the second etching.

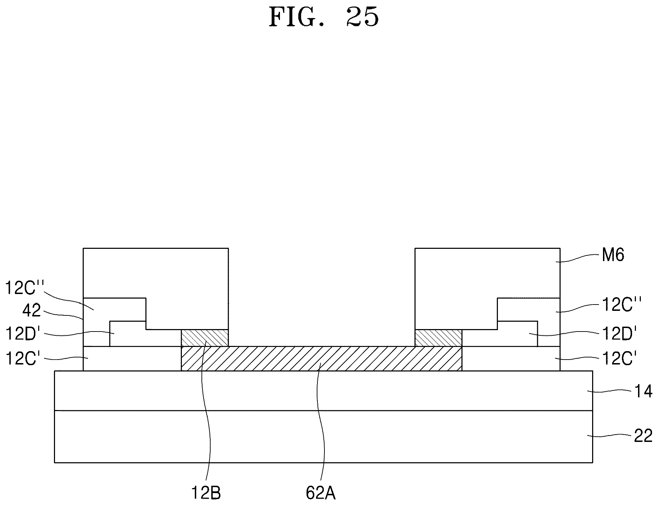

FIG. 25 shows the result of the second etching. A junction area between the third doping layer (e.g., the sixth region 62A) and the fourth doping layer 12B' may be reduced by the second etching. Accordingly, the capacitance formed by the junction of the third doping layer (e.g., the sixth region 62A) and the fourth doping layer 12B' in the optical modulation operation may be reduced, and as a result, the optical modulation speed may be increased.

A region of the fourth doping layer 12B' remaining after the second etching may be determined by the sixth mask M6. That is, by controlling a radius of an inner side surface of the sixth mask M6 concentric with the first doping layer 12A', a region of the fourth doping layer 12B' remaining after the second etching may be increased or decreased. The capacitance may also be increased or decreased according to the increase or decrease in the region of the fourth doping layer 12B' remaining after the second etching. As a result, by controlling an inner diameter of the sixth mask M6, the capacitance resulting from the junction of the third doping layer (e.g., the sixth region 62A) and the fourth doping layer 12B' may be controlled.

As shown in FIG. 25, with the second etching, the second region 12B of the third optical modulator 500 may be formed on the third doping layer (e.g., the sixth region 62A), and a step difference may be formed between the third doping layer (e.g., the sixth region 62A) and the second region 12B, that is, between the sixth region 62A and the second region 12B. The degree of the step difference may vary depending on the etching conditions of the first etching.

After the second region 12B is formed, the sixth mask M6 is removed.

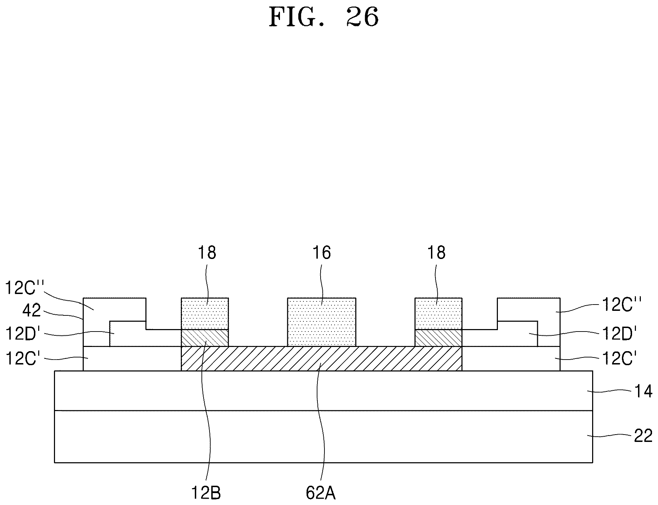

As shown in FIG. 26, a first electrode layer 16 may be formed on the third doping layer (e.g., the sixth region 62A) exposed in the second etching, and a second electrode layer 18 may be formed on the second region 12B. The first electrode layer 16 and the second electrode layer 18 may be formed using separate masks for forming only the first electrode layer 16 and the second electrode layer 18. In one example, the first electrode layer 16 and the second electrode layer 18 may be formed together with other components in another process of forming a photonic integrated circuit (PIC) including an optical modulator. For example, in a process of forming a grating coupler, the first electrode layer 16 and the second electrode layer 18 may also be formed together using a mask and an etching process for forming the grating coupler. In this way, the number of masks and the etching process may be reduced.

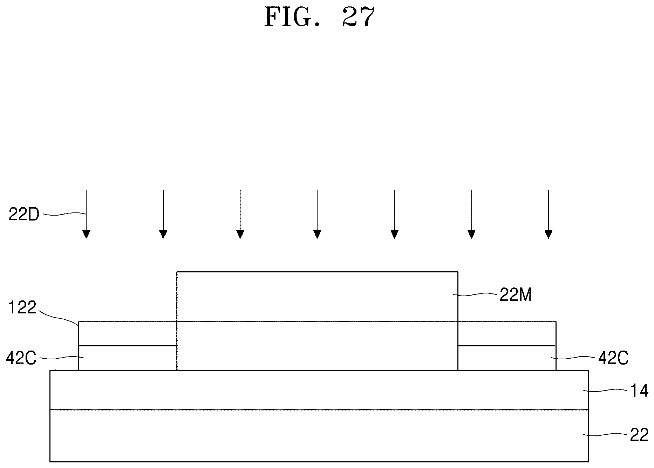

FIGS. 27 to 37 show a method of manufacturing an optical modulator according to one or more embodiments step by step.

The manufacturing method illustrated in FIGS. 27 to 37 may be a method of manufacturing the fifth optical modulator 1100 illustrated in FIGS. 11 to 13. In the following description, like reference numerals as those mentioned in the description of the fifth optical modulator 1100 indicate like components, and repeated description thereof may be omitted.

First, as shown in FIG. 27, the seventh semiconductor layer 122 may be formed on the insulating layer 14. In one example, the seventh semiconductor layer 122 may be formed by transferring a semiconductor layer grown on a separate temporary substrate onto the insulating layer 14, but is not limited thereto. The planar shape of the seventh semiconductor layer 122 may be a disk shape having a diameter of several micrometers. A seventh mask 22M may be formed on the seventh semiconductor layer 122 to define a portion of the seventh semiconductor layer 122. The seventh mask 22M may be a mask including the same material as a material of the first mask M1 described in the method of manufacturing the third optical modulator 500, but may also be a mask including a different material. The seventh mask 22M may be a mask for forming the third region 42C and the fourth region 42D of the fifth optical modulator 1100. Therefore, the seventh mask 22M may be formed on the seventh semiconductor layer 122 so that regions of the seventh semiconductor layer 122 corresponding to the third region 42C and the fourth region 42D are exposed. In the plan view, the seventh mask 22M may be circular, but may also be non-circular (e.g., oval). The seventh mask 22M may be concentric with the seventh semiconductor layer 122.

After the seventh mask 22M is formed, a first dopant 22D may be injected or doped into the exposed region of the seventh semiconductor layer 122 while the seventh mask 22M is present. The process of injecting the first dopant 22D may be a process of ion-injecting the first dopant 22D. The first dopant 22D may include a conductive impurity of the same type as a type of the first dopant described in the method of manufacturing the third optical modulator 500. In the process of injecting the first dopant 22D, the first dopant 22D may be injected with the first ion implantation energy mentioned in the method of manufacturing the third optical modulator 500. By the process of injecting the first dopant 22D, the third region 42C doped with the first dopant 22D may be formed in the seventh semiconductor layer 122. The third region 42C may also be described as a doping layer into which the first dopant 22D is injected (or doped). In the process of injecting the first dopant 22D, the first dopant 22D may be injected at a predetermined concentration. The third region 42C may be formed to be concentric with the seventh semiconductor layer 122.

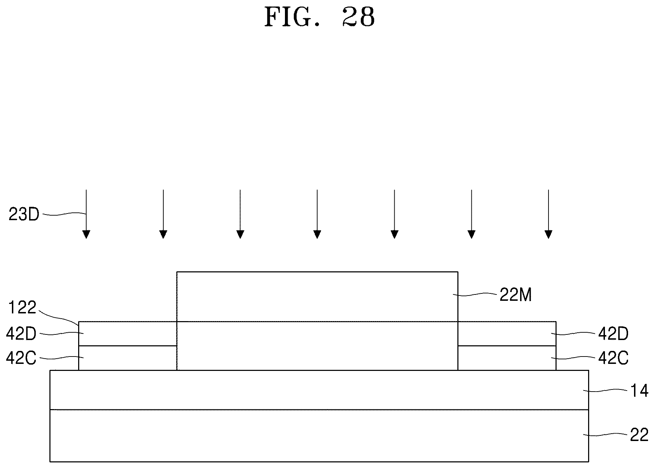

After forming the third region 42C, as shown in FIG. 28, while maintaining the seventh mask 22M, a second dopant 23D may be injected into the exposed region of the seventh semiconductor layer 122. The process of injecting the second dopant 23D may be an ion implantation process, but is not limited thereto. The second dopant 23D may include a conductive impurity of the same type as a type of the second dopant described in the method of manufacturing the third optical modulator 500. In the process of injecting the second dopant 23D, the second dopant 23D may be injected with a second ion implantation energy. The second ion implantation energy may be lower than the first ion implantation energy. The second dopant 23D may be doped at the same or substantially the same concentration as the concentration of the first dopant. Due to the process of injecting the second dopant 23D, the fourth region 42D doped with the second dopant 23D may be formed in the seventh semiconductor layer 122. The fourth region 42D may be described as a doping layer into which the second dopant 23D is injected.

The dopants implanted in the third region 42C and the fourth region 42D may be of opposite types with respect to each other. Accordingly, a depletion layer according to the PN junction may be formed between the third region 42C and the fourth region 42D.

After the fourth region 42D is formed, the seventh mask 22M may be removed.

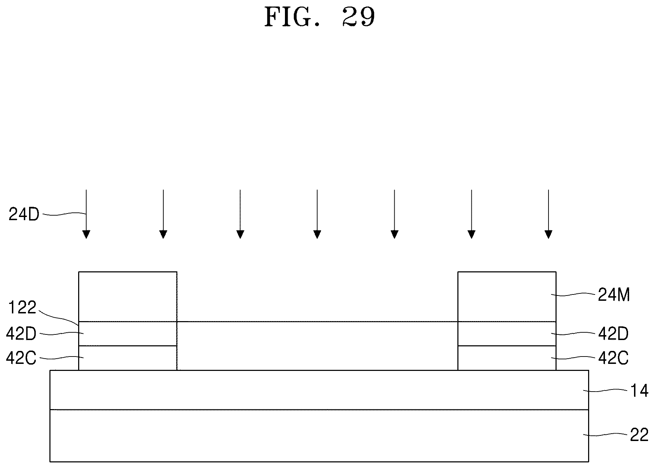

Next, as illustrated in FIG. 29, an eighth mask 24M may be formed on the seventh semiconductor layer 122 in which the fourth region 42D is formed. The eighth mask 24M may be a mask of the same material as a material of the seventh mask 22M, but may also be a mask of a different material. The eighth mask 24M may be a mask for forming the doped first region 42A and the second region 42B of the fifth optical modulator 1100. The eighth mask 24M may be formed only on the fourth region 42D and may be formed to cover the entire upper surface of the fourth region 42D. The eighth mask 24M may be concentric with the third region 42C and the fourth region 42D. Therefore, an inner portion of the fourth region 42D of the seventh semiconductor layer 122 may be exposed by the eighth mask 24M.

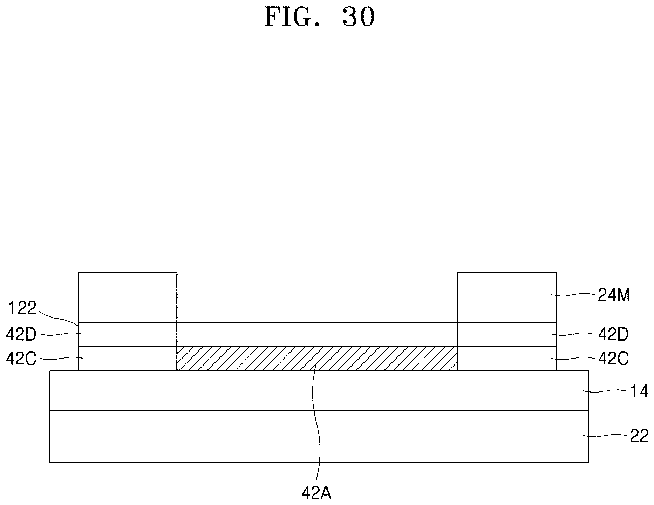

While the eighth mask 24M present, a third dopant 24D may be injected into the exposed portion of the seventh semiconductor layer 122. The third dopant 24D may be the same as the first dopant used to form the third region 42C, but may be different from the first dopant among the same type of conductive impurity group. In the process of injecting the third dopant 24D, the third dopant 24D may be injected with the first ion implantation energy, but may be implanted at a higher concentration than when the first dopant 22D is implanted in the first dopant injection process. As shown in FIG. 30, the first region 42A may be formed in the seventh semiconductor layer 122 by the process injecting the third dopant 24D.

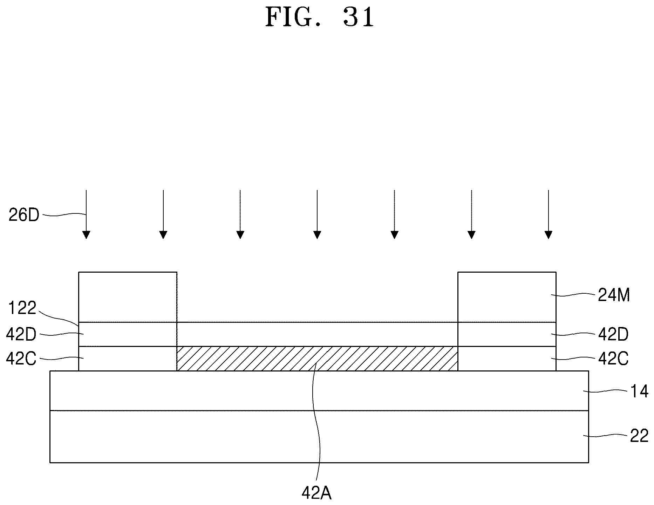

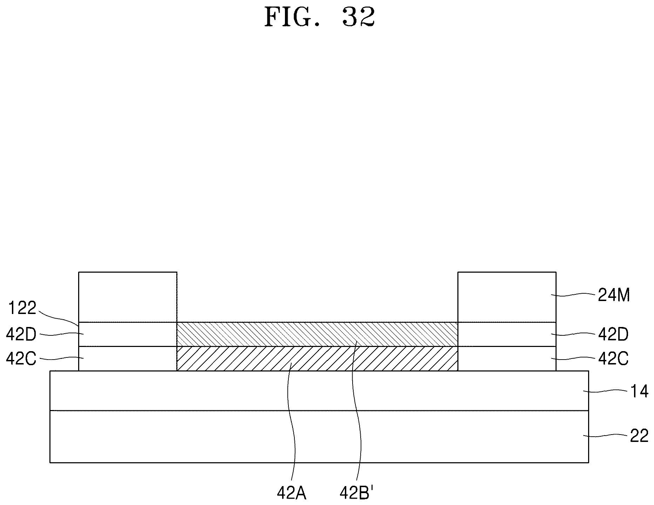

After the first region 42A is formed, as shown in FIG. 31, a fourth dopant 26D may be injected into the exposed portion of the seventh semiconductor layer 122 while maintaining the eighth mask 24M. In the process of injecting the fourth dopant 26D, the fourth dopant 26D may be injected by ion injection, but is not limited thereto. The fourth dopant 26D may include the same conductive impurity as a conductive impurity of the second dopant 23D used to form the fourth region 42D, but may also include a conductive impurity different from the conductive impurity of the second dopant 23D in the conductive impurity group of the same type (e.g., p-type). In the process of injecting the fourth dopant 26D, the fourth dopant 26D may be injected with the second ion implantation energy. Therefore, in the seventh semiconductor layer 122, the fourth dopant 26D may be injected at a higher position than a position of the first region 42A. In the process of injecting the fourth dopant 26D, the fourth dopant 26D may be doped at the same or substantially the same concentration as a concentration of the third dopant 24D. Due to the process of injecting the fourth dopant 26D, as shown in FIG. 32, a doping layer 42B' doped with the fourth dopant 26D may be formed on the first region 42A of the seventh semiconductor layer 122. The doping layer 42B' may also be described as a doping region.

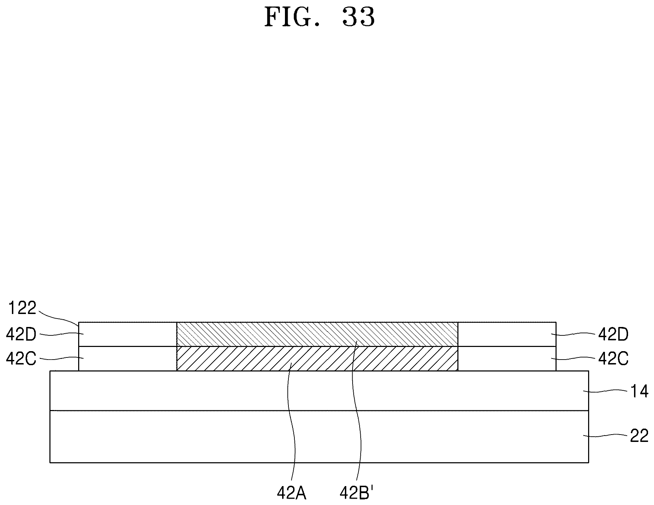

After the doping layer 42B' is formed, the eighth mask 24M may be removed. FIG. 33 shows a resultant product after the eighth mask 24M is removed.

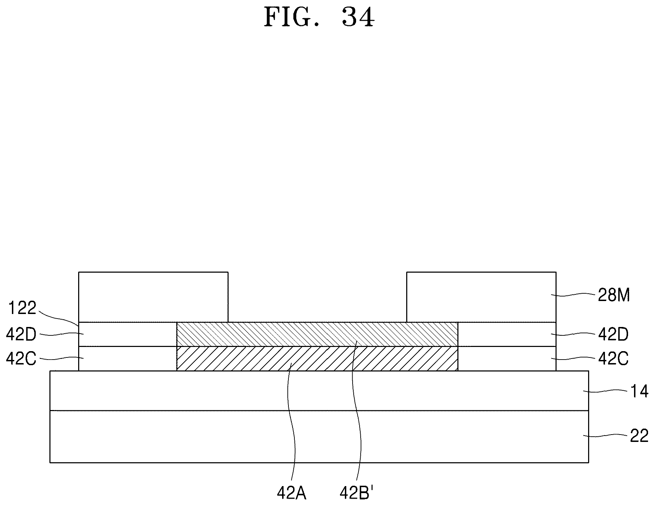

Next, as illustrated in FIG. 34, a ninth mask 28M may be formed on the seventh semiconductor layer 122. The ninth mask 28M may be concentric with the doping layer 42B', the fourth region 42D, and the seventh semiconductor layer 122. The ninth mask 28M may be formed in a circular band shape. The ninth mask 28M may be a mask including the same material as a material of the seventh mask 22M, but may also be a mask including a different material. The ninth mask 28M may be a mask for etching the doping layer 42B'. In the plan view, the ninth mask 28M may cover the entire fourth region 42D, expose the central portion of the doping layer 42B', and cover the remaining portion of the doping layer 42B'. The exposed central portion of the doping layer 42B' may be spaced apart from the fourth region 42D.

Depending on an inner diameter of the ninth mask 28M or the radius of the inner side surface of the ninth mask 28M, a diameter or radius of the exposed portion of the doping layer 42B' may also vary. The exposed portion of the doping layer 42B' may be etched in a subsequent process. Accordingly, the size or inner radius of the portion remaining after etching the doping layer 42B' may be controlled by controlling the radius of the ninth mask 28M. Therefore, the radius of the ninth mask 28M may be determined by considering the inner radius of the doping layer 42B' remaining after etching.

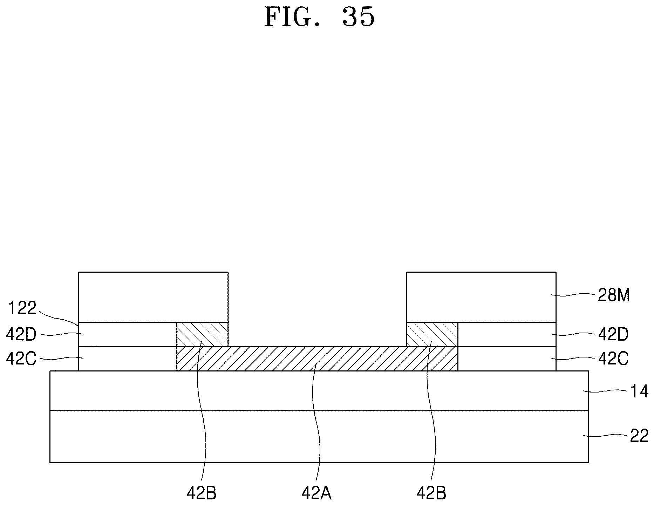

After the ninth mask 28M is formed, the exposed portion of the doping layer 42B' may be etched while the ninth mask 28M is present. The etching may be performed until the first region 42A is exposed. In this etching, at least the exposed portion of the doping layer 42B' may be completely removed, as shown in FIG. 35. By this etching, a step difference may be formed between the first region 42A and the remaining portion of the doping layer 42B', that is, the second region 42B. An inner diameter of the second region 42B or a radius of an inner side surface of the second region 42B may be controlled by controlling the inner diameter of the ninth mask 28M as described above. That is, a junction region between the first region 42A and the second region 42B, which may be highly doped regions, may be controlled by controlling the inner diameter of the ninth mask 28M. Accordingly, the capacitance resulting from the junction of the first region 42A and the second region 42B may also be controlled by controlling the inner diameter of the ninth mask 28M.

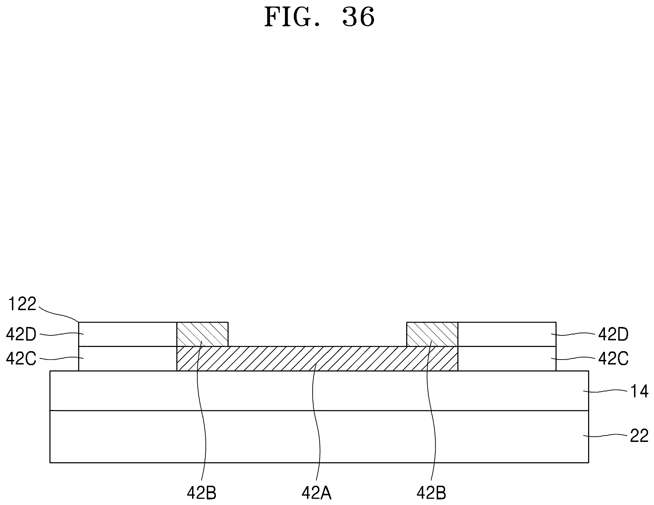

After the second region 42B is formed, the ninth mask 28M may be removed. FIG. 36 shows a resultant product after the ninth mask 28M is removed.

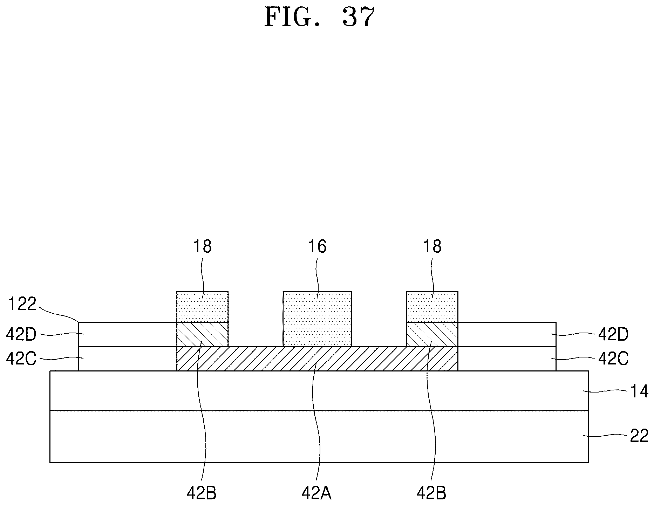

Next, as illustrated in FIG. 37, the first electrode layer 16 may be formed on the first region 42A, and the second electrode layer 18 may be formed on the second region 42B. The first electrode layer 16 and the second electrode layer 18 may be formed simultaneously. The first electrode layer 16 and the second electrode layer 18 may be formed using separate masks as described in the manufacturing method of the third optical modulator 500, but may also be formed together with the other components through a mask and an etching process used when forming other components.

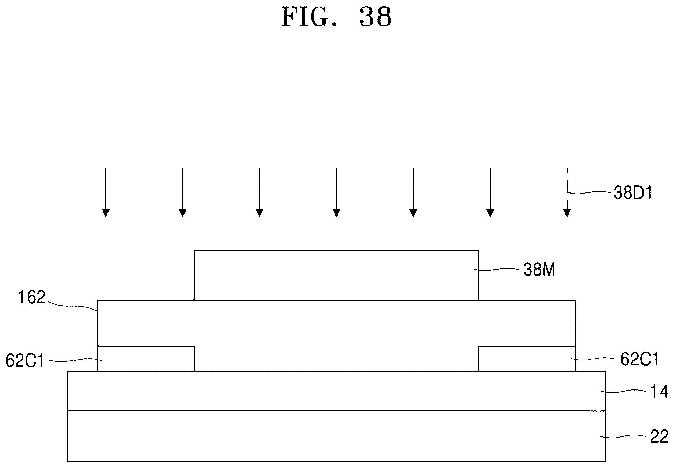

FIGS. 38 to 52 show a method of manufacturing an optical modulator according to one or more embodiments step by step.

The manufacturing method illustrated in FIGS. 38 to 52 may be a method of manufacturing the eighth optical modulator 1400 illustrated in FIG. 16. In the following description, like reference numerals as those mentioned in the description of the eighth optical modulator 1400 and the manufacturing method described above indicate like components, and repeated description thereof may be omitted.

As shown in FIG. 38, the tenth semiconductor layer 162 may be formed on the insulating layer 14. In one example, the tenth semiconductor layer 162 may be formed by transferring a semiconductor layer grown on a separate temporary substrate onto the insulating layer 14.

A tenth mask 38M that defines a portion of the tenth semiconductor layer 162 may be formed on the tenth semiconductor layer 162. In one example, the material of the tenth mask 38M may be the same as or different from a material of the first mask M1 of FIG. 18. A portion of the tenth semiconductor layer 162 defined by the tenth mask 38M may include a portion where the first portion 62C1 of the seventh region 62C of the eighth optical modulator 1400 is to be formed.

The first dopant 38D1 may be injected into the exposed region defined by the tenth mask 38M of the tenth semiconductor layer 162. In one example, the process of injecting the first dopant 38D1 may be performed under the same process conditions (e.g., dopant type, implantation energy, doping concentration, etc.) as the process conditions of injecting the first dopant DP1 described with reference to FIG. 18, but may also be performed under different process conditions. Due to the process of injecting the first dopant 38D1, the first portion 62C1 of the seventh region 62C may be formed in the tenth semiconductor layer 162. In one example, the first portion 62C1 may be an n+ doping layer (doping region). After the first portion 62C1 is formed, the tenth mask 38M may be removed.

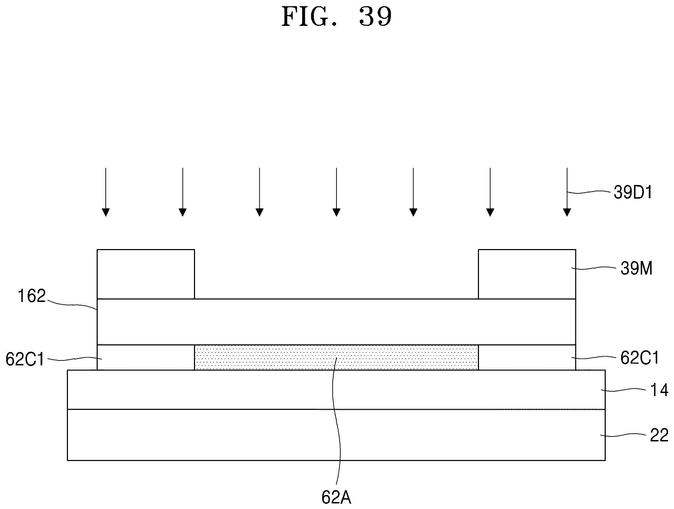

Next, as illustrated in FIG. 39, an eleventh mask 39M may be formed on the tenth semiconductor layer 162 to expose a portion of the tenth semiconductor layer 162. The eleventh mask 39M may be a mask for forming the sixth region 62A of the eighth optical modulator 1400. Accordingly, the eleventh mask 39M may be formed to expose a surface of the tenth semiconductor layer 162 corresponding to the sixth region 62A of the tenth semiconductor layer 162 of the eighth optical modulator 1400. In one example, the material of the eleventh mask 39M may be the same as a material of the third mask M3 described with reference to FIG. 20, but may also be different. A second dopant 39D1 may be injected into the exposed region of the tenth semiconductor layer 162. In one example, the process for injecting the second dopant 39D1 may be performed under the same process conditions as the process conditions of injecting the third dopant DP3 to form the sixth region (doping layer) 62A described with reference to FIG. 20, but may also be performed under different process conditions. In one example, the type of the second dopant 39D1 may be the same as the first dopant 38D1, but even if the impurities are of the same type, the materials of the impurities may be different.

Due to the process of injecting the second dopant 39D1, the sixth region 62A may be formed in the tenth semiconductor layer 162. The first portion 62C1 and the sixth region 62A may be spaced apart from an upper surface of the tenth semiconductor layer 162.

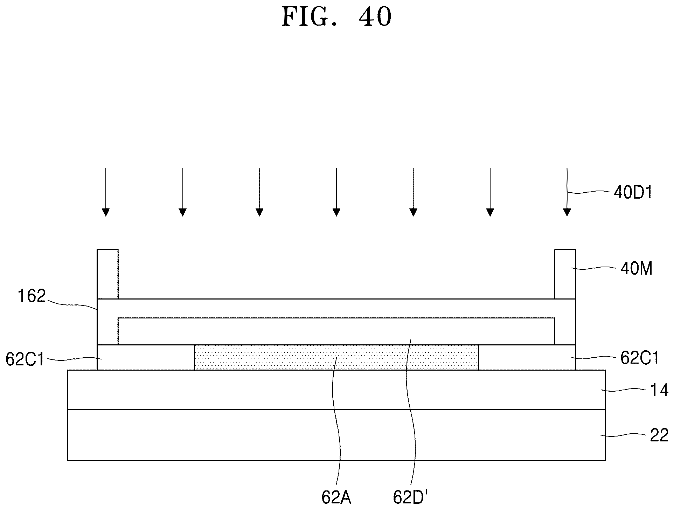

Next, as illustrated in FIG. 40, a twelfth mask 40M may be formed on the tenth semiconductor layer 162. The twelfth mask 40M may be a mask for defining a region corresponding to a diameter of the eighth region 62D of the tenth semiconductor layer 162 of the eighth optical modulator 1400. Therefore, the twelfth mask 40M may be formed so that a region corresponding to the diameter of the eighth region 62D in the tenth semiconductor layer 162 is exposed. The material of the twelfth mask 40M may be the same as or different from the material of the tenth mask 38M or the eleventh mask 39M. In the state when the twelfth mask 40M is present, a third dopant 40D1 may be injected into the exposed region of the tenth semiconductor layer 162. In one example, the process of injecting the third dopant 40D1 may be performed under the same process conditions as the process conditions of injecting the second dopant DP2 described with reference to FIG. 19, but may also be performed under different process conditions. In one example, the dopant used in the process of injecting the third dopant 40D1 may be the same as the dopant used in the process of injecting the second dopant DP2, and although the dopant is of the same type (e.g., p-type dopant), a dopant of a different material may be used.

By the process of injecting the third dopant 40D1, a doping layer 62D' covering the first portion 62C1 and the sixth region 62A may be formed in the tenth semiconductor layer 162. The doping layer 62D' may be described as a doping region. The doping layer 62D' may be in contact with the first portion 62C1 and the sixth region 62A. The doping layer 62D' and the first portion 62C1 and the sixth region 62A contain dopants of opposite types with respect to each other. Accordingly, a depletion layer may be formed between the doping layer 62D' and the first portion 62C1 and the sixth region 62A. By controlling the process conditions (e.g., injection energy) of the dopant injection process, the doping layer 62D' may be formed thinner or thicker than as illustrated in the drawing. The doping layer 62D' may be spaced apart from an upper surface of the tenth semiconductor layer 162 in a direction perpendicular to the upper surface of the insulating layer 14. The doping layer 62D' may be spaced apart from a side surface of the tenth semiconductor layer 162 in a direction parallel to the upper surface of the insulating layer 14, that is, in a lateral direction. Distances from the doping layer 62D' to the upper surface and side surface of the tenth semiconductor layer 162 may be controlled by controlling a width of the twelfth mask 40M or controlling the dopant injection energy, etc., in the process for forming the doping layer 62D'.

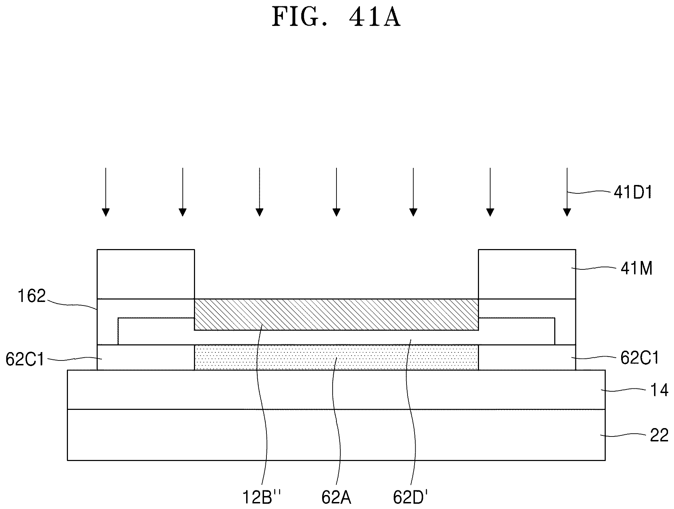

Next, as illustrated in FIG. 41A, the thirteenth mask 41M may be formed on the tenth semiconductor layer 162 in which the doping layer 62D' is formed. The material of the thirteenth mask 41M may be the same as a material of the eleventh mask 39M or the twelfth mask 40M, but is not limited thereto. The thirteenth mask 41M may be a mask for forming the second region 12B of the eighth optical modulator 1400. In one example, the thirteenth mask 41M may be formed so that a region corresponding to a diameter of the second region 12B in the tenth semiconductor layer 162 is exposed. In other words, the thirteenth mask 41M may be formed so that a region of the tenth semiconductor layer 162 corresponding to the diameter of the second region 12B is defined. After forming the thirteenth mask 41M, a fourth dopant 41D1 may be injected into the exposed region of the tenth semiconductor layer 162 while the thirteenth mask 41M is present. The process for injecting the fourth dopant 41D1 may be performed under the same process conditions as the process conditions of the process for injecting the fourth dopant DP4 to form the fourth doping layer 12B' of FIG. 20, but is not limited thereto. A doping layer 12B" may be formed in the tenth semiconductor layer 162 by a process of injecting the fourth dopant 41D1. The doping layer 12B" may be described as a doping region. The doping layer 12B" may be doped with the same concentration as a doping concentration of the sixth region 62A, and may be a layer doped with a higher concentration than concentrations of the first portion 62C1 of the seventh region 62C and the doping layer 62D'. A diameter and an outer shape of the doping layer 12B" in a plane (e.g., a plan view) may be the same as the diameter and the outer shape of the eighth optical modulator 1400. The doping layer 12B" may be concentric with the sixth region 62A formed thereunder, and the diameter and the outer shape of the doping layer 12B" in a plane may be the same as the diameter and the outer shape of the sixth region 62A. The doping layer 12B" may be formed vertically spaced apart from the sixth region 62A. The doping layer 62D' may exist between the doping layer 12B" and the sixth region 62A. The diameter of the doping layer 12B" may be less than the diameter of the doping layer 62D'. The doping layer 12B" and the doping layer 62D' may be concentric. A height of a lower boundary of the doping layer 12B" may be lower than a height of an upper boundary of the doping layer 62D'. The "lower boundary" and "upper boundary" may be conveniently expressed as "lower surface" and "upper surface." The upper boundary (upper surface) of the doping layer 12B" may coincide with the upper surface of the tenth semiconductor layer 162. That is, the upper surface of the doping layer 12B" may be the upper surface of the tenth semiconductor layer 162.

As a result, the doping layer 12B" may have a shape formed to start from the upper surface of the tenth semiconductor layer 162 and diffused through the upper boundary of the doping layer 62D' to a set depth into the doping layer 62D'. Therefore, the thickness of the doping layer 62D' around the doping layer 12B" may be greater than the thickness of the doping layer 62D' between the doping layer 12B" and the sixth region 62A. That is, when the doping layer 12B" is formed, a step difference may be formed in the doping layer 62D'. The doping layer 12B" may be formed with a uniform thickness over the entire region. A portion of the doping layer 12B" may become the second region 12B of the eighth optical modulator 1400 through a subsequent etching process.

After the doping layer 12B" is formed, the thirteenth mask 41M may be removed.

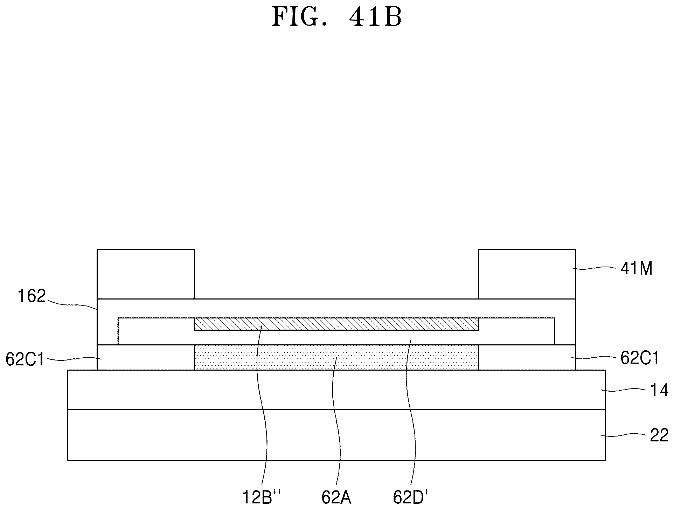

In one example, the doping layer 12B" may be formed so that the height of the upper boundary (upper surface) is the same as the height of the upper boundary (upper surface) of the doping layer 62D', as illustrated in FIG. 41B. In this case, the doping layer 12B" may be spaced apart from the upper surface of the tenth semiconductor layer 162.

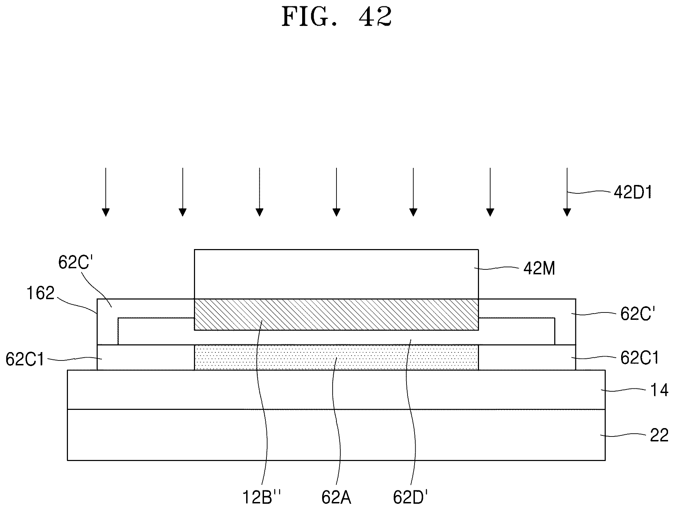

Next, as shown in FIG. 42, a fourteenth mask 42M may be formed on the doping layer 12B". The fourteenth mask 42M may be formed to cover the entire upper surface of the doping layer 12B". The material of the fourteenth mask 42M may be the same as a material of the tenth mask 38M, but is not limited thereto. The fourteenth mask 42M may be a mask for forming the second portion 62C2 and the third portion 62C3 of the seventh region 62C of the eighth optical modulator 1400. When the fourteenth mask 42M is formed, portions of the tenth semiconductor layer 162 around the fourteenth mask 42M in horizontal directions may be exposed.

While the fourteenth mask 42M present, a fifth dopant 42D1 may be injected into the exposed region of the tenth semiconductor layer 162. The process for injecting the fifth dopant 42D1 may be performed under the same process conditions as the process conditions for injecting the fifth dopant DP5 of FIG. 21, but may also be performed under different process conditions. By the process of injecting the fifth dopant 42D1, a doping layer 62C' may be formed in a region between the upper surface of the tenth semiconductor layer 162 and the doping layer 62D' and a region between a side surface of the tenth semiconductor layer 162 and the doping layer 62D'. The doping layer 62C' may be formed with the same doping concentration as doping concentrations of the first portion 62C1 and the doping layer 62D', and may be formed with a lower concentration than concentrations of the sixth region 62A and the doping layer 12B". The doping layer 62C' may correspond to the second portion 62C2 and the third portion 62C3 of the seventh region 62C of the tenth semiconductor layer 162 of the eighth optical modulator 1400. The doping layer 62C' may cover a portion of an upper surface of the doping layer 62D' around the doping layer 12B" and may cover a side surface of the doping layer 62D'.

After the doping layer 62C' is formed, the fourteenth mask 42M may be removed.

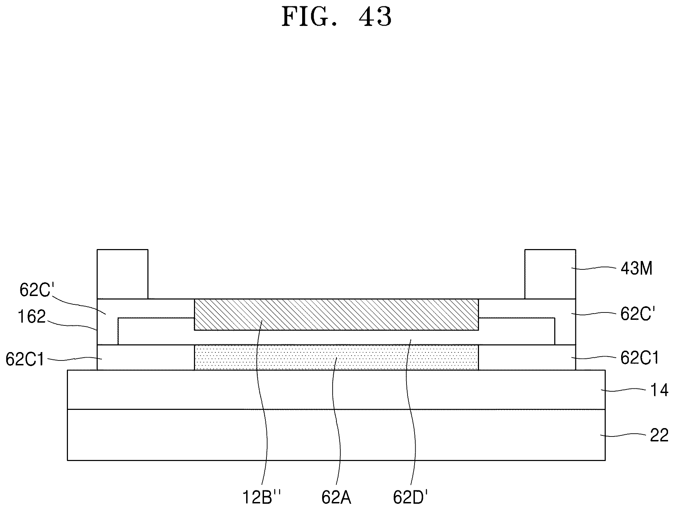

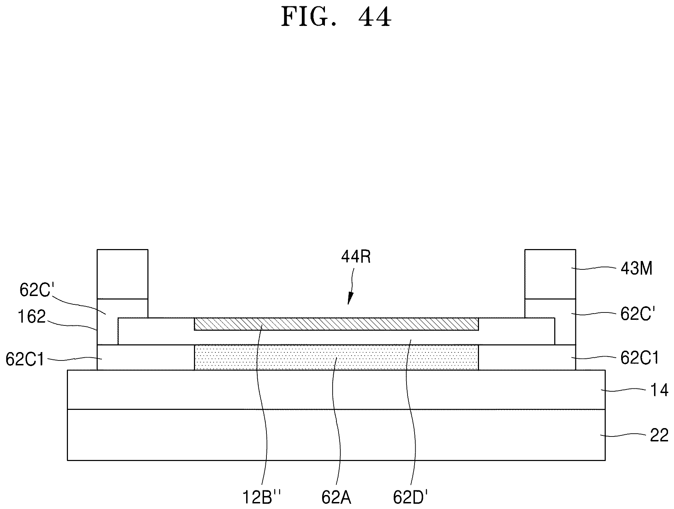

Next, as shown in FIG. 43, a fifteenth mask 43M may be formed on the doping layer 62C' of the tenth semiconductor layer 162. The fifteenth mask 43M may be a mask used to prevent etching of a predetermined region in an etching process. In one example, the material of the fifteenth mask 43M may be a photosensitive film such as a photoresist, but is not limited thereto. The fifteenth mask 43M may be formed to cover a portion of the doping layer 62C' corresponding to the third portion 62C3 of the seventh region 62C of the tenth semiconductor layer 162 of the eighth optical modulator 1400. That is, the fifteenth mask 43M may be formed to define a portion corresponding to the third portion 62C3 in the doping layer 62C', and expose the remaining region of the upper surface of the tenth semiconductor layer 162. The exposed area of the upper surface of the tenth semiconductor layer 162 may be etched while the fifteenth mask 43M is present. In one example, the etching may be performed using a dry etching method, but is not limited thereto. This etching may be performed until the doping layer 62D' is exposed, as illustrated in FIG. 44. In one example, this etching may be performed until an upper boundary (upper surface) of the doping layer 62D' is exposed. In the etching, the doping layer 62C' between the fifteenth mask 43M and the doping layer 12B" may be etched, and a portion of the doping layer 12B" that is higher than the upper boundary of the doping layer 62D' may also be etched. As illustrated in FIG. 44, through the etching, a recess 44R may be formed in the tenth semiconductor layer 162 such that a surface (e.g., upper surface) of the doping layer 62D' and a surface (e.g., upper surface) of the doping layer 12B" become a lower surface of the recess 44R. A depth of the recess 44R may be the same as the thickness of the doping layer 62C' between the fifteenth mask 43M and the doping layer 62D'. When the recess 44R is formed, a step difference may be formed between an upper surface of the doping layer 62C' and an upper surface of the doping layer 62D'.

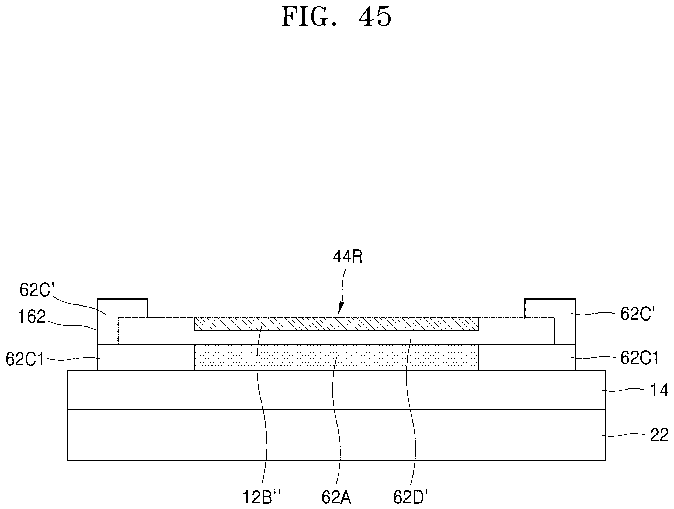

FIG. 45 shows a resultant product of removing the fifteenth mask 43M after the etching.

The horizontal portion of the doping layer 62C' covering the upper surface of the doping layer 62D' may be the third portion 62C3 of the seventh region 62C of the tenth semiconductor layer 162 of the eighth optical modulator 1400. The vertical portion of the doping layer 62C' covering a side surface of the doping layer 62D' may be the second portion 62C2 of the seventh region 62C of the tenth semiconductor layer 162 of the eighth optical modulator 1400. Therefore, in FIG. 45, the first portion 62C1 and the doping layer 62C' may become the seventh region 62C of the tenth semiconductor layer 162 of the eighth optical modulator 1400.

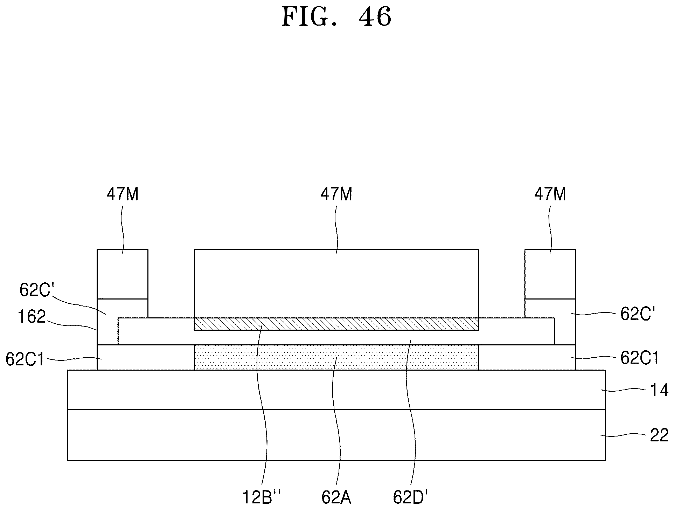

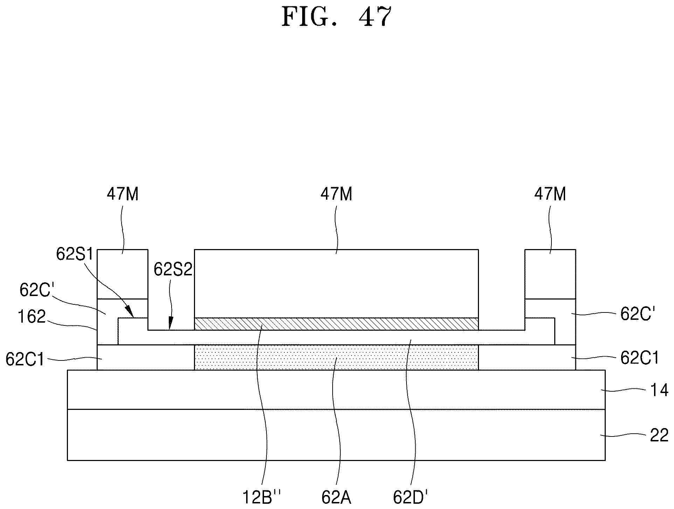

Next, as illustrated in FIG. 46, a sixteenth mask 47M may be formed on the doping layer 12B" and the doping layer 62C'. The sixteenth mask 47M may be an etching mask like the fifteenth mask 43M. The sixteenth mask 47M may be formed to cover the entire upper surface of the doping layer 12B" and the entire upper surface of the doping layer 62C'. When the sixteenth mask 47M is formed, the upper surface of the doping layer 62D' may be exposed. The exposed upper surface of the doping layer 62D' may be etched while the sixteenth mask 47M is present. This etching may be performed until a depth corresponding to the thickness of the doping layer 12B" is formed in the doping layer 62D'. As shown in FIG. 47, a side surface of the doping layer 12B" may be completely exposed by this etching. A step difference between the doping layer 62D' and the doping layer 62C' may become larger by this etching. In addition, the doping layer 62D' itself may also have a step difference. That is, as the etching forms an upper surface with a different height in the doping layer 62D', a step difference may be formed between the two upper surfaces. Specifically, as a result of the etching, the doping layer 62D' may include an upper surface 62S1 covered by the doping layer 62C', and an upper surface 62S2 at the same height as a lower surface of the doping layer 12B" and lower than the upper surface 62S1. After the etching, the sixteenth mask 47M may be removed.

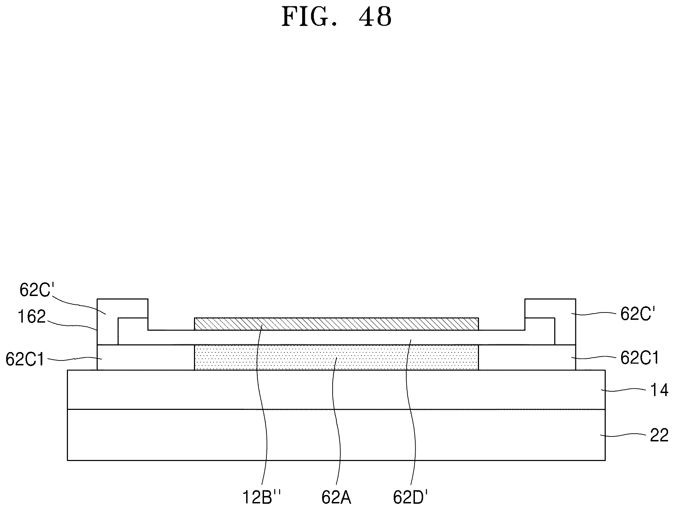

FIG. 48 shows a resultant product after the sixteenth mask 47M is removed.

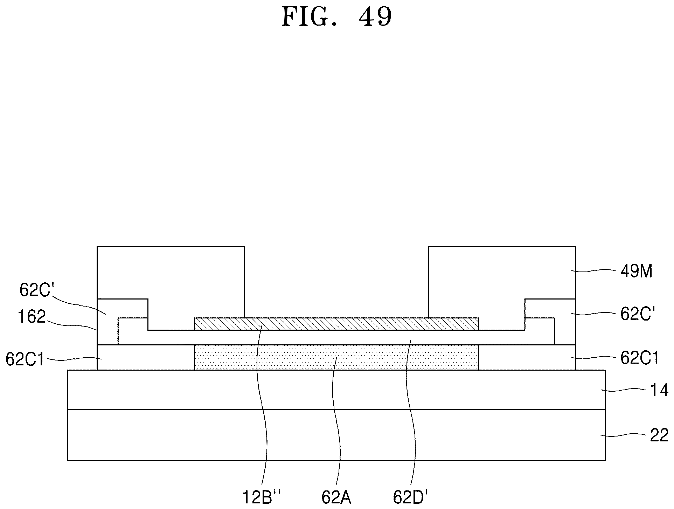

Next, as shown in FIG. 49, a seventeenth mask 49M covering the doping layers 12B", 62C', and 62D' may be formed. The seventeenth mask 49M may be formed to cover the entire upper surface of the doping layer 62C' and the entire upper surface 62S2 of the doping layer 62D' between the doping layer 62C' and the doping layer 12B". The seventeenth mask 49M may be formed concentrically with the doping layer 12B" and may be formed to cover only an edge of the doping layer 12B" and expose an inner region of the edge of the doping layer 12B". The seventeenth mask 49M may be an etching mask like the sixteenth mask 47M.

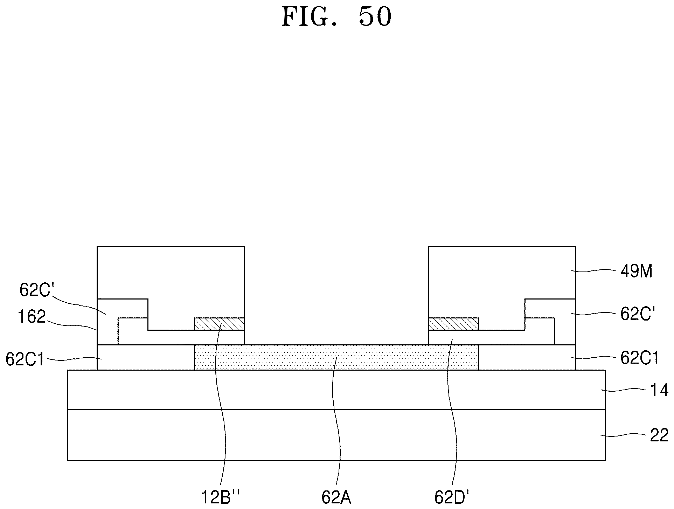

The exposed region of the doping layer 12B" may be etched while the seventeenth mask 49M is present. This etching may be performed until the sixth region 62A is exposed after the doping layer 12B" and the doping layer 62D' thereunder are sequentially etched. As shown in FIG. 50, an inner region of an edge of the sixth region 62A may be exposed by this etching. That is, an upper surface of the edge of the sixth region 62A may be exposed. By the above etching, the planar shape of the doping layer 62D' and the doping layer 12B" may become ring-shaped. The ring width of the doping layer 62D' and the ring width of the doping layer 12B" may be different from each other. The doping layer 62D', which may be ring-shape, remaining after the etching may correspond to the eighth region 62D of the tenth semiconductor layer 162 of the eighth optical modulator 1400. The horizontal portion of the doping layer 62D' may correspond to the first portion 62D1 of the eighth region 62D, and the vertical portion of the doping layer 62D' may correspond to the second portion 62D2 of the eighth region 62D. In addition, the doping layer 12B" remaining after the etching may correspond to the second region 12B of the tenth semiconductor layer 162 of the eighth optical modulator 1400. After the etching, the seventeenth mask 49M may be removed.

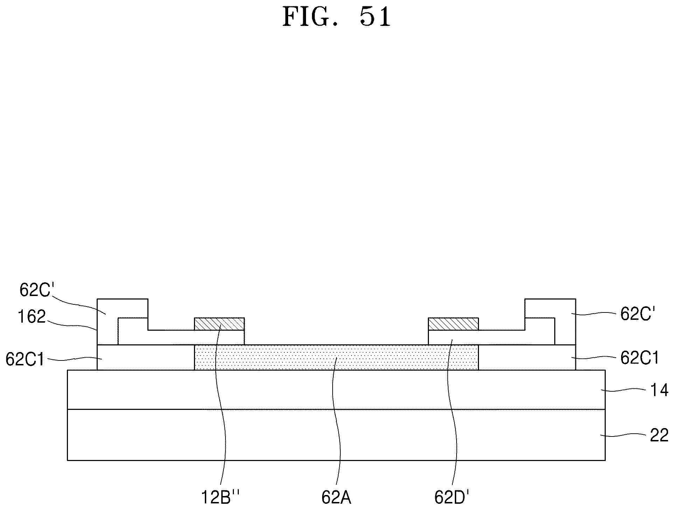

FIG. 51 shows a resultant product after removing the seventeenth mask 49M.

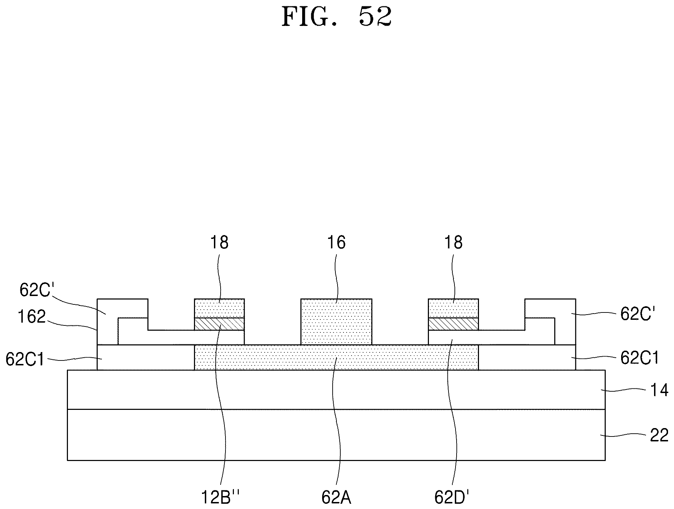

Next, as shown in FIG. 52, the first electrode layer 16 may be formed on the exposed region of the sixth region 62A, and the second electrode layer 18 may be formed on the doping layer 12B".

In this way, the eighth optical modulator 1400 may be formed.

Next, an example of a process of manufacturing the seventh optical modulator 1300 of FIG. 15 will be described.

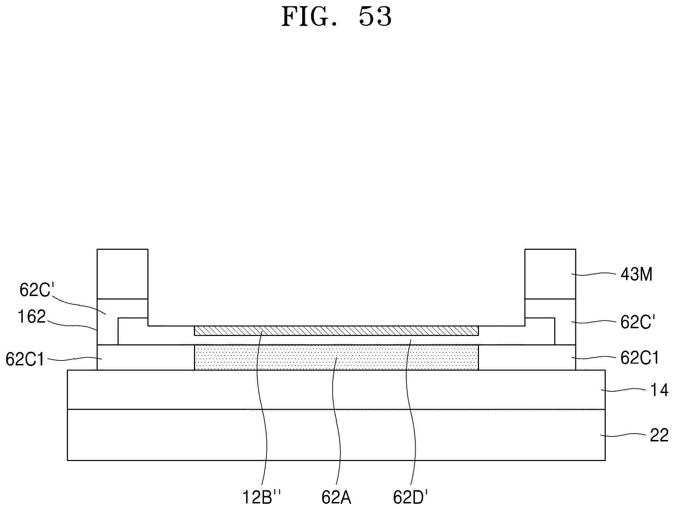

First, the process may be performed according to the process described with reference to FIGS. 38 to 44. In this process, the doping layer 12B" may be formed in a shape as shown in FIG. 41B. In addition, in the etching operation of forming the recess 44R of FIG. 44, the etching may be performed further to form a step difference on the doping layer 62D' itself as shown in FIG. 53. Considering this, in the operation of forming the doping layer 12B", the thickness of the doping layer 12B" may be formed to be greater than the height of the step difference formed in the doping layer 62D' itself. Accordingly, even after the step difference is formed on the doping layer 62D' itself, the doping layer 12B" of a certain thickness may remain.

After the step difference is formed on the doping layer 62D' itself, the etching process of the doping layer 12B" and the doping layer 62D' and a process of forming an electrode on the sixth region 62A exposed after the etching and on the remaining doping layer 12B" after the etching may be performed according to FIGS. 49 to 52.

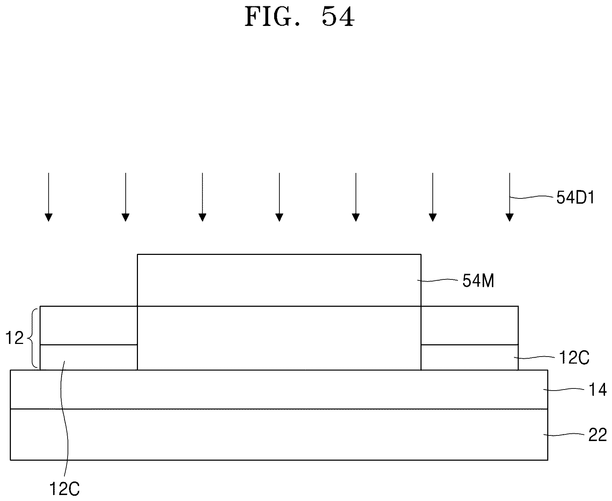

FIGS. 54 to 64 show a manufacturing method of an optical modulator according to one or more embodiments step by step.

The manufacturing method illustrated in FIGS. 54 to 64 may be a method of manufacturing the first optical modulator 20 illustrated in FIGS. 1 to 3. In the following description, like reference numerals as those mentioned in the description of the first optical modulator 20 and the manufacturing method described above indicates like members, and repeated description thereof may be omitted.

First, as shown in FIG. 54, the second semiconductor layer 12 may be formed on the insulating layer 14. An eighteenth mask 54M may be formed on the second semiconductor layer 12 to cover (define) the central portion of the second semiconductor layer 12. The formation position, material, and role of the eighteenth mask 54M may be the same as the seventh mask 22M of FIG. 27. While the eighteenth mask 54M is present, a first dopant 54D1 may be injected into the second semiconductor layer 12. The third region 12C may be formed in the second semiconductor layer 12 by a process of injecting the first dopant 54D1. The process of injecting the first dopant 54D1 may be the same as the process of injecting the first dopant 22D described with reference to FIG. 27. The formation position and formation process of the third region 12C may be the same as the third region 42C of FIG. 27.

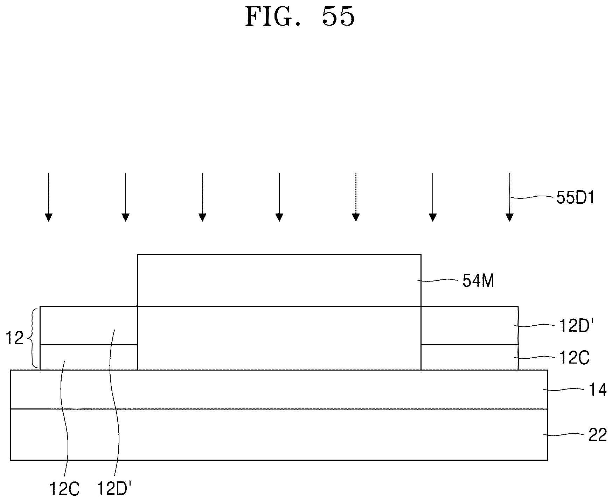

After the third region 12C is formed, as illustrated in FIG. 55, a second dopant 55D1 may be injected into the exposed region of the second semiconductor layer 12 while the eighteenth mask 54M is present. In one example, the process of injecting the second dopant 55D1 may be the same as the process of injecting the second dopant 23D described with reference to FIG. 28. Due to the process of injecting the second dopant 55D1, a doping layer 12D' may be formed in the second semiconductor layer 12. The doping layer 12D' may also be described as a doping region. The position of the doping layer 12D' may correspond to the fourth region 12D of the first optical modulator 20. In the subsequent process, the shape of the doping layer 12D' may be changed to the shape of the fourth region 12D of the first optical modulator 20. The formation position and formation process of the doping layer 12D' may be the same as the fourth region 42D of FIG. 28. In one example, in the operation of forming the doping layer 12D', a thickness of the doping layer 12D' in a direction perpendicular to an upper surface of the insulating layer 14 may be formed differently from the thickness of the third region 12C. For example, the thickness of the doping layer 12D' may be formed greater than a thickness of the third region 12C. In the subsequent etching process, a portion of the thickness of the doping layer 12D' may be less than an initial thickness of the doping layer 12D' so that the doping layer 12D' becomes the fourth region 12D of the first optical modulator 20.

The dopants injected into the third region 12C and the doping layer 12D' may be of opposite types with respect to each other. Accordingly, a depletion layer due to PN junction may be formed between the third region 12C and the doping layer 12D'.

After the doping layer 12D' is formed, the eighteenth mask 54M may be removed.

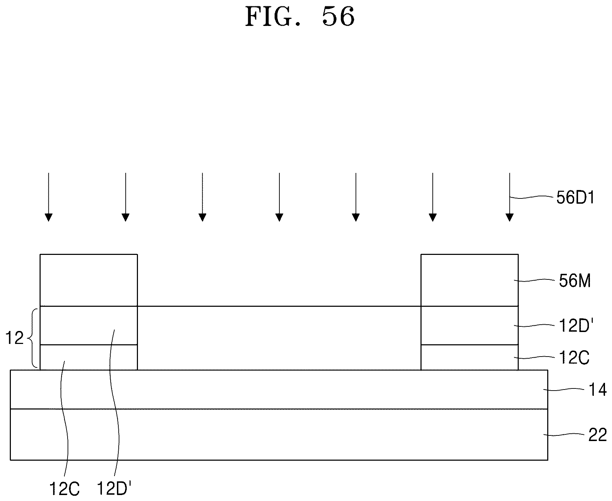

Next, as shown in FIG. 56, a nineteenth mask 56M may be formed on the second semiconductor layer 12. The nineteenth mask 56M may be a mask of the same material as a material of the eighteenth mask 54M, but may also be a mask of a different material. The nineteenth mask 56M may be a mask for forming a portion of the first region 12A of the first optical modulator 20 that is doped, that is, a portion having a relatively wide width of the first region 12A that is doped. The nineteenth mask 56M may be formed only on the doping layer 12D' and may be formed to cover the entire upper surface of the doping layer 12D'. The nineteenth mask 56M may be concentric with the third region 12C and the doping layer 12D'. Therefore, an inner part of the doping layer 12D' of the second semiconductor layer 12 may be exposed by the nineteenth mask 56M.

While the nineteenth mask 56M is present, a third dopant 56D1 may be injected into the exposed portion of the second semiconductor layer 12. The process for injecting the third dopant 56D1 may be the same process as the process for injecting the third dopant 24D as described with reference to FIG. 29, and may be performed under the same process conditions as the process conditions for injecting the third dopant 24D, but may also be performed under different process conditions.

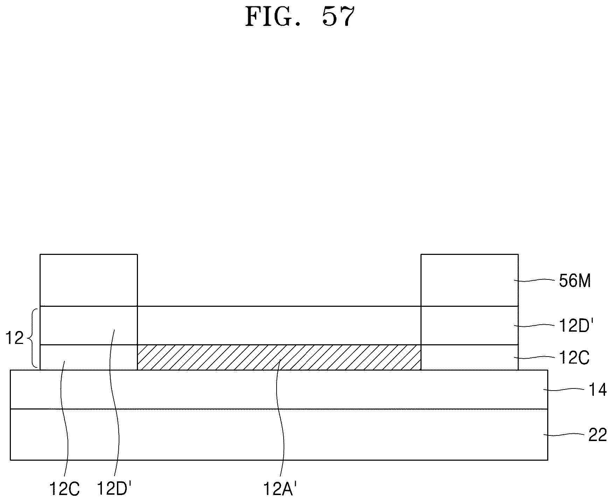

As illustrated in FIG. 57, a first doping layer 12A' may be formed in the second semiconductor layer 12 by the process of injecting the third dopant 56D1. The first doping layer 12A' may be a portion of the first region 12A of the first optical modulator 20. That is, the formation position and width of the first doping layer 12A' may correspond to the formation position and width of the portion having the relatively wide width of the first region 12A of the first optical modulator 20. In one example, the first doping layer 12A' may be formed to the same height as the height of the third region 12C and may be formed to the same thickness as the third region 12C, but is not limited thereto. After the first doping layer 12A' is formed, the nineteenth mask 56M may be removed.

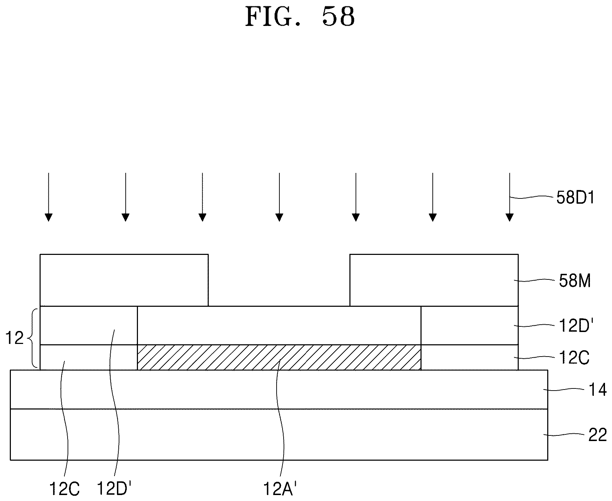

Next, as illustrated in FIG. 58, a twentieth mask 58M may be formed on the second semiconductor layer 12. The twentieth mask 58M may be formed to cover the entire upper surface of the doping layer 12D' and even a portion of the second semiconductor layer 12 inwards of the doping layer 12D'. The twentieth mask 58M may be a mask for forming a remaining portion of the first region 12A of the first optical modulator 20. That is, the twentieth mask 58M may be a mask for forming a portion having a relatively narrow width of the first region 12A of the first optical modulator 20. Therefore, the twentieth mask 58M may be formed so that an upper surface of the second semiconductor layer 12 corresponding to the narrow portion of the first region 12A of the first optical modulator 20 is exposed. The twentieth mask 58M may be formed to be concentric with the doping layer 12D'. In one example, the material of the twentieth mask 58M may be the same as a material of the nineteenth mask 56M, but is not limited thereto.

While the twentieth mask 58M is present, a fourth dopant 58D1 may be injected into the exposed region of the second semiconductor layer 12. In one example, the process of injecting the fourth dopant 58D1 may be performed under the same process conditions as the process conditions of injecting the fourth dopant 26D of FIG. 31. However, the type of dopant used in the process of injecting the fourth dopant 58D1 described with reference to FIG. 58 may be the opposite of the type of dopant used in the process of injecting the fourth dopant 26D described with reference to FIG. 31. For example, the dopant used in the process of injecting the fourth dopant 58D1 described with reference to FIG. 58 may be an N-type dopant, and the dopant used in the process of injecting the fourth dopant 26D described with reference to FIG. 31 may be a P-type dopant.

As a result, the material and type of dopant used in the process of injecting the fourth dopant 58D1 described with reference to FIG. 58 may be the same as the material and type of dopant used in the process of injecting the third dopant 56D1 described with reference to FIG. 56, but are not limited thereto.

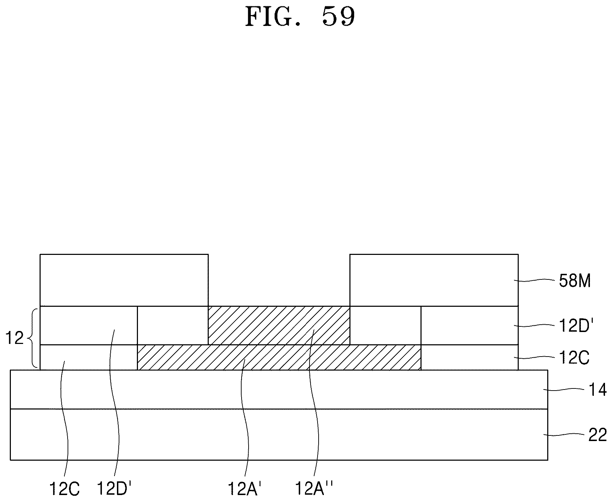

As illustrated in FIG. 59, a doping layer 12A" may be formed in the second semiconductor layer 12 by the process of injecting the fourth dopant 58D1. The thickness of the doping layer 12A" may be formed to be the same as or substantially the same as the thickness of the doping layer 12D'. The two doping layers 12A and 12A" in a sequentially stacked form may be concentric. In one example, the thickness of the doping layer 12A" may be greater than the thickness of the first doping layer 12A' thereunder, but is not limited thereto. In addition, the width of the doping layer 12A" may be less than the width of the first doping layer 12A' below the doping layer 12A". The doping layer 12A" and the doping layer 12D' may be formed to be spaced apart from each other. The doping layer 12A" may correspond to the portion having the relatively narrow width of the first region 12A of the first optical modulator 20. The dopant material and dopant type injected into the two doping layers 12A' and 12A" may be the same. Accordingly, the two doping layers 12A' and 12A" may become one doping layer or doping region. That is, a region including the two doping layers 12A' and 12A" in the second semiconductor layer 12 may correspond to the first region 12A of the first optical modulator 20.

In one example, in the process of forming the doping layers 12A', 12A", and 12D' or the third region 12C, the thickness of each of the doping layer 12A', 12A", and 12D' or the third region 12C may be controlled by controlling the injection energy for the dopant.

After forming the doping layer 12A", the twentieth mask 58M may be removed.

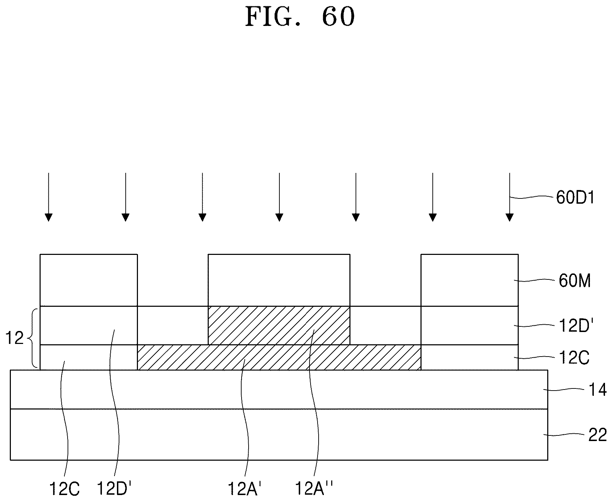

Next, as illustrated in FIG. 60, a twenty-first mask 60M may be formed on the second semiconductor layer 12. The material of the twenty-first mask 60M may be the same as the eighth mask 24M or the twentieth mask 58M of FIG. 27, but is not limited thereto. The twenty-first mask 60M may be a mask for forming a doping region corresponding to the second region 12B of the first optical modulator 20. Therefore, the twenty-first mask 60M may be formed to define the upper surface of the second semiconductor layer 12 corresponding to the second region 12B of the first optical modulator 20. Accordingly, after the twenty-first mask 60M is formed, the upper surface of the second semiconductor layer 12 corresponding to the second region 12B of the first optical modulator 20 may be exposed. In one example, the twenty-first mask 60M may be formed only on an upper surface of the doping layer 12A" and an upper surface of the doping layer 12D'. The twenty-first mask 60M may be formed to cover the entire upper surfaces of the two doping layers 12A" and 12D'. When the twenty-first mask 60M is formed, a region between the two doping layers 12A' and 12D' in the second semiconductor layer 12 may be exposed.

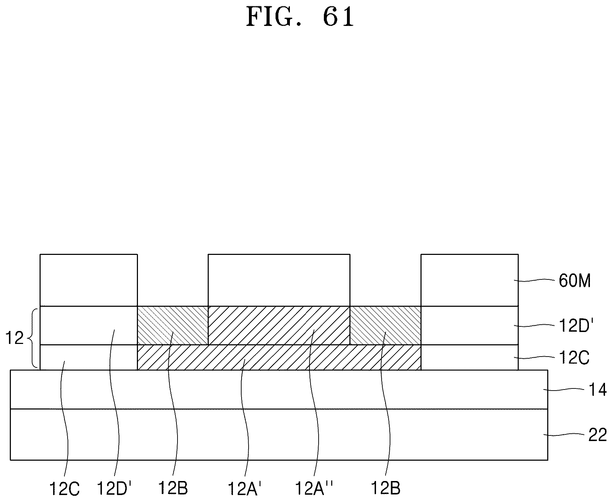

While the twenty-first mask 60M is present, the fifth dopant 60D1 may be injected into the second semiconductor layer 12. In one example, the process for injecting the fifth dopant 60D1 may be performed under the same process conditions as the process conditions for injecting the fourth dopant 26D of FIG. 31. Due to the process of injecting the fifth dopant 60D1, as illustrated in FIG. 61, a second region 12B may be formed in the second semiconductor layer 12 between the two doping layers 12D' and 12A". In one example, the second region 12B may be formed with the same or substantially the same thickness as a thickness the first doping layer 12A'. The type of the dopant injected into the second region 12B and the type of the dopant injected into the doping layers 12A' and 12A" may be opposite to each other. Accordingly, a depletion layer may be formed between the second region 12B and the two doping layers 12A' and 12A". After the second region 12B is formed, the twenty-first mask 60M may be removed.

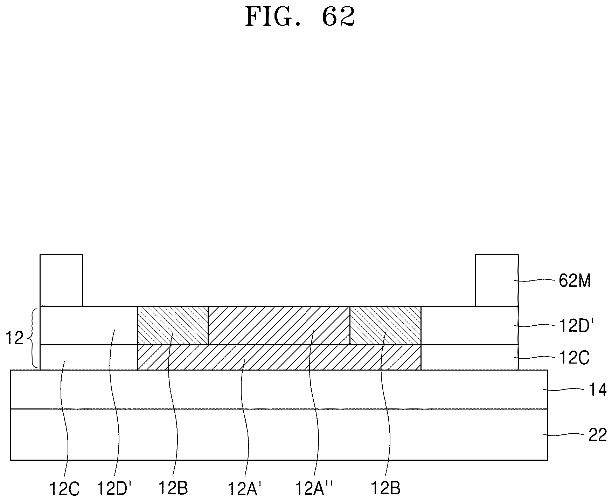

After the twenty-first mask 60M is removed, as illustrated in FIG. 62, a twenty-second mask 62M may be formed on the doping layer 12D' of the second semiconductor layer 12. The twenty-second mask 62M may be formed to be concentric with the doping layer 12D'. A boundary of an edge of the twenty-second mask 62M may be formed to coincide (e.g., overlap) with a boundary of an edge of the doping layer 12D'. That is, an outer diameter of the twenty-second mask 62M may be the same as or substantially the same as the outer diameter of the doping layer 12D'. An inner diameter of the twenty-second mask 62M may be greater than an inner diameter of the doping layer 12D'. The twenty-second mask 62M may be spaced apart from the inner boundary (edge) of the doping layer 12D'. The planar shape of the twenty-second mask 62M may be a ring shape and may have a given ring width. Here, the "ring width" may be a width measured in a radial direction. The twenty-second mask 62M may be an etching mask to be used for etching to define a second portion 12D2 of the fourth region 12D of the first optical modulator 20. In one example, the twenty-second mask 62M may be a photosensitive film mask, but is not limited thereto.

An upper surface of the second portion 12D2 of the fourth region 12D of the first optical modulator 20 may be determined by a portion covered by the twenty-second mask 62M in the doping layer 12D', and the ring width of the second portion 12D2 may be determined. Therefore, the twenty-second mask 62M may be formed on the doping layer 12D' in consideration of the above points.

When the twenty-second mask 62M is formed, the entire upper surface of the doping layer 12A" of the second semiconductor layer 12 and the entire upper surface of the second region 12B may be exposed, and a portion of the upper surface of the doping layer 12D' adjacent to the second region 12B may also be exposed.

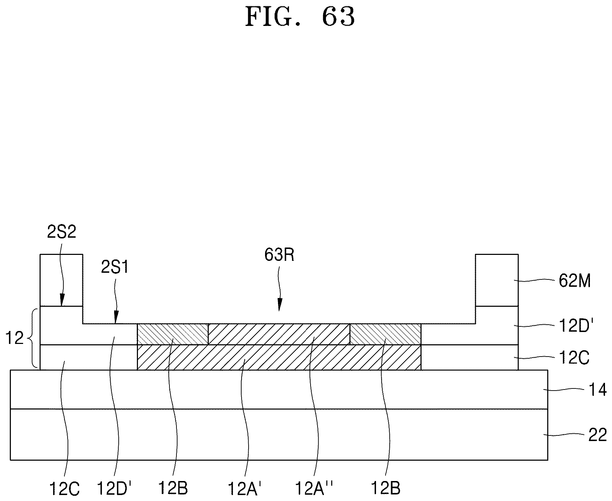

While the twenty-second mask 62M is present, the exposed region of the second semiconductor layer 12 may be etched. The etching may be etching to reduce a height of a surface of the exposed region of the second semiconductor layer 12. As a result of this etching, the thickness of the exposed region of the second semiconductor layer 12 may be less than a thickness of the unexposed region. That is, due to this etching, as illustrated in FIG. 63, the thickness of the second region 12B and the doping layer 12A" and the thickness of the exposed portion of the doping layer 12D' may be less than the thickness of the portion of the doping layer 12D' covered by the twenty-second mask 62M. In this way, a recess 63R may be formed in the second semiconductor layer 12, as illustrated in FIG. 63. In one example, a depth of the recess 63R, that is, the thickness of the exposed portion of the second semiconductor layer 12 remaining after the etching, may be adjusted by adjusting the process conditions of the etching (e.g., etching time, etching rate, etc.).

As a result of the etching, as illustrated in FIG. 63, two upper surfaces (e.g., a first upper surface 2S1 and a second upper surface 2S2) with different heights, as illustrated in FIG. 2, may appear in the doping layer 12D', and as a result, a step difference corresponding to the first step difference 15 of FIG. 2 may be formed in the doping layer 12D' through the etching. After the etching, the height of the upper surface of the second region 12B and the doping layer 12A" may be the same as the height of the first upper surface 2S1 of the doping layer 12D'.

The combined region of the doping layers 12A' and 12A" after the etching may be the same as or substantially the same as the first region 12A of the first optical modulator 20, and the doping layer 12D' may be the same as or substantially the same as the fourth region 12D of the first optical modulator 20. That is, the horizontal and vertical portions of the doping layer 12D' after etching may correspond to the first portion 12D1 and the second portion 12D2 of the fourth region 12D of the first optical modulator 20, respectively.

After the etching, the twenty-second mask 62M may be removed.

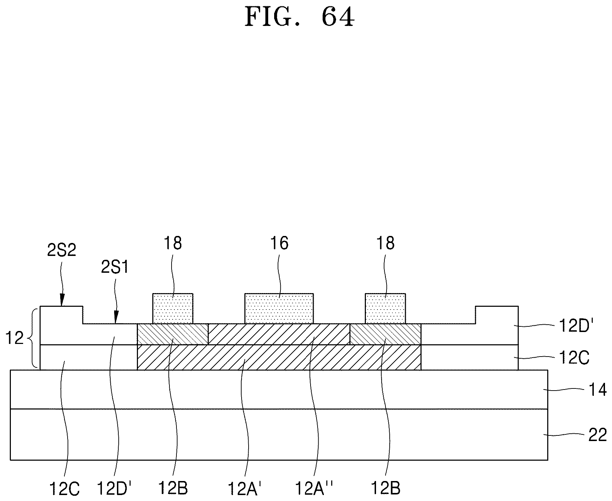

Next, as illustrated in FIG. 64, the first optical modulator 20 may be formed by forming the first electrode layer 16 on the doping layer 12A" and forming the second electrode layer 18 on the second region 12B. The first electrode layer 16 and the second electrode layer 18 may be formed to be spaced apart from each other. The first electrode layer 16 and the second electrode layer 18 may be formed as concentric circles. The first electrode layer 16 and the second electrode layer 18, the doping layer 12A", and the second region 12B may be concentric circles. The height of upper surfaces of the first electrode layer 16 and the second electrode layer 18 may be the same as or different from the height of the second upper surface 2S2 of the doping layer 12D'.

For example, in the various manufacturing methods described above, while the second semiconductor layer 12, the fourth semiconductor layer 42, the seventh semiconductor layer 122, and the tenth semiconductor layer 162 are formed on an SOI substrate, the optical waveguide may also be formed on the SOI substrate. For example, one optical waveguide 10 or two optical waveguides (e.g., a first optical waveguide 13A and a second optical waveguide 13B) may be formed simultaneously on the SOI substrate together with the second semiconductor layer 12, the fourth semiconductor layer 42, the seventh semiconductor layer 122, and the tenth semiconductor layer 162 .

Next, a result of simulation conducted to confirm the effect of having a step difference and not having a step difference in the highly doped region of the optical modulator will be described.

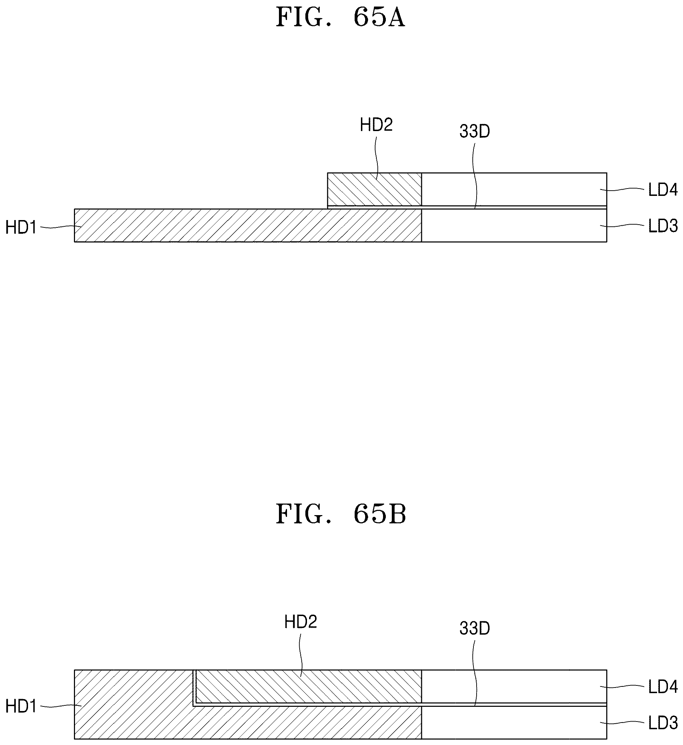

FIGS. 65A and 65B are cross-sectional view showing a first model and a second model used in the simulation, respectively. The first model (see FIG. 65A) and the second model (see FIG. 65B) show only the right part of the cross-sectional center of the optical modulator.

The first model represents an optical modulator according to one or more embodiments, in which there is one step difference between the first doping region HD1 and the second doping region HD2, which are highly doped regions. In the first model, a third doping region LD3 and fourth doping region LD4, which are low-doping regions, respectively, are shown. Also, a depletion layer 33D is shown.

The second model represents an optical modulator of a comparative embodiment in which there is no step difference between the first doping region HD1 and the second doping region HD2.

In the simulation, a silicon (Si) layer was used as a semiconductor layer in which the first to fourth doping regions HD1, HD2, LD3, and LD4 are formed. The first doping region HD1 with high doping and the third doping region LD3 with low doping are regions doped with n-type dopants, and phosphorus (P) was used as the n-type dopant. The second doping region HD2 with high doping and the fourth doping region LD4 with low doping are regions doped with p-type dopants, and boron (B) was used as the p-type dopant. In addition, the first doping region HD1 and the second doping region HD2 were doped to a concentration of 1×10²⁰/cm³, respectively, and the third doping region LD3 and the fourth doping region LD4 were doped to a concentration of 3×10¹⁸/cm³, respectively.

In the above simulation, resistance, capacitance, and electric modulation bandwidth (EBW) were measured while applying a voltage between the first doping region HD1 and the second doping region HD2.

Table 1 below summarizes the simulation results.

**[Table 1]**

| | Resistance (Ohms) | Capacitance (Femtofarad (fF)) | EBW (GHz) |
|---|---|---|---|
| First model | 25.5311 | 34.9 | 60.3 |
| Second model | 7.0682 | 161.4 | 17.2 |

Referring to Table 1, in the case of the first model, a junction between the first doping region HD1 and the second doping region HD2, which are high-doping regions, decreases compared to the second model, so the resistance increases slightly. However, the capacitance of the first model is much less than the capacitance of the second model. The capacitance difference between the first model and the second model is much greater than the resistance difference between the first model and the second model. Accordingly, an RC delay of the first model becomes less than an RC delay of the second model, so the EBW of the first model increases significantly compared to the second model. These results suggest that the first model is much more advantageous from the perspective of high-speed optical modulation.

The optical modulators according to one or more embodiments described above may be used in various electronic apparatuses such as, for example, optical interconnects, optical operations, optical communications, etc., that require high-speed optical modulation.

FIG. 66 is a block diagram schematically showing an example of an electronic apparatus. The electronic apparatus of FIG. 66 may be an optical transmitter.

Referring to FIG. 66, an electronic apparatus 300 may include an electric integrated circuit (EIC) unit 300A and a photonic integrated circuit (PIC) unit 300B.

The EIC unit 300A may include a multiplexer (MUX) 310 into which a plurality of electric signals ES1 may be input, and a first amplifier 320 that amplifies a signal output from the MUX 310. The plurality of electric signals ES1 may be different individual electric signals, but are not limited thereto. The MUX 310 may use frequency division multiplexing (FDM), time division multiplexing (TDM), or code division multiplexing (CDM) technology depending on the multiplexing method. An electric signal ES2 amplified and output from the first amplifier 320 may be transmitted (input) to the PIC unit 300B. The EIC unit 300A may further include other elements.

The PIC unit 300B may include a light source 330, an optical modulator 340, and a second amplifier 350. The PIC unit 300B may further include other elements. The optical modulator 340 may be one of the optical modulators shown in FIGS. 1 to 17 or one of the optical modulators that may be inferred from the combination of the optical modulators shown in FIGS. 1 to 17. The light source 330 and the second amplifier 350 may be connected to an optical waveguide 360. The optical modulator 340 may be arranged between the light source 330 and the second amplifier 350 along the optical waveguide 360. Light emitted from the light source 330 may be transmitted to the second amplifier 350 through the optical waveguide 360. The light source 330 and the second amplifier 350 may be optically coupled with the optical waveguide 360. An optical coupler may be used for the coupling, but is not limited thereto. The light source 330 may include a light source that emits laser light (e.g., laser light in an infrared band), and the laser light may be continuous laser light, but is not limited thereto. A portion of the light emitted from the light source 330 and transmitted through the optical waveguide 360 may be transmitted to a micro disk 370 positioned close to the optical waveguide 360 while passing through the optical modulator 340. The light transmitted to the micro disk 370 may be light in the fundamental mode, and may propagate along a border (low-concentration doping region) of the micro disk 370 in a whispering gallery mode. In one example, the micro disk 370 may include one of the semiconductor layers (e.g., the second semiconductor layer 12, the third semiconductor layer 32, the fourth semiconductor layer 42, the fifth semiconductor layer 82, the sixth semiconductor layer 102, and the seventh semiconductor layer 122, the eighth semiconductor layer 142, the ninth semiconductor layer 152, and the tenth semiconductor layer 162) of the optical modulators described with reference to FIGS. 1 to 17. An electric signal ES2 output from the first amplifier 320 of the EIC unit 300A may be a voltage applied to the micro disk 370. That is, the electric signal ES2 output from the first amplifier 320 may be a voltage applied to the first electrode layer (e.g., the first electrode 16 of FIG. 2) and the second electrode layer (e.g., the second electrode 18 of FIG. 2) provided on the highly doped region of the micro disk 370.

As a result, the refractive index of an edge of the micro disk 370 changes according to the electric signal ES2 applied from the first amplifier 320 to the micro disk 370, and thus, light traveling along the edge of the micro disk 370 may be modulated. The light modulated in this way may be transmitted to the optical waveguide 360 and amplified by the second amplifier 350 and then output.

In one example, the optical modulator 340 of the PIC unit 300B may further include an optical waveguide corresponding to the second optical waveguide 13B illustrated in FIG. 17.

Based on the embodiments described above, the following various optical modulators, manufacturing methods, and electronic devices may be provided.

An optical modulator according to one or more embodiments includes: a first semiconductor layer; a second semiconductor layer provided in the form of a micro-disk on the first semiconductor layer and including a high-doping region with a relatively high doping concentration and a low-doping region with a relatively low doping concentration; a first optical waveguide arranged adjacent to the second semiconductor layer; and first and second electrode layers spaced apart from each other on the high doping region, wherein the second semiconductor layer includes at least one recess; and the second semiconductor layer has at least one step difference due to the recess, and the high doping region, the low doping region, and the recess may be concentric circles.

In one example, the second semiconductor layer includes a first recess, and a lower surface of the first recess includes an upper surface of the high doping region and an upper surface of the low doping region, and a side surface of the first recess includes an inner side surface of the low doping region, and a first step difference may exist in the low doping region due to the first recess.

In one example, the high doping region includes an N-doped region doped with an N-type dopant and a P-doped region doped with a P-type dopant, the low doping region includes an N-doped region doped with an N-type dopant and a P-doped region doped with a P-type dopant, a lower surface of the first recess includes an upper surface of the N-doped region of the high doping region and an upper surface of the P-doped region, and a first upper surface of the P-doped region of the low doping region, a side surface of the first recess includes an inner side surface of the P-doped region of the low doping region, and the first step difference may correspond to a height difference between the first upper surface of the P-doped region of the low doping region and a second upper surface located higher than the first upper surface.

In one example, the high doping region includes an N-doped region doped with an N-type dopant and a P-doped region doped with a P-type dopant, the low doping region includes an N-doped region doped with an N-type dopant and a P-doped region doped with a P-type dopant, a lower surface of the first recess includes an upper surface of the N-doped region of the high doping region, an upper surface of the P-doped region, and a first upper surface of the P-doped region of the low doping region, a side surface of the first recess includes an inner side surface of the P-doped region of the low doping region and an inner side surface of the N-doped region of the low doping region, and the first step difference may correspond to a height difference between the first upper surface of the P-doped region of the low doping region and the upper surface of the N-doped region of the low doping region.

In one example, the N-doped region of the low doping region is between the P-doped region and the first semiconductor layer, and has a shape completely surrounding the P-doped region of the low doping region around the first recess, and an outer side surface of the N-doped region of the low doping region may be a side surface of the second semiconductor layer.

In one example, the P-doped region and the N-doped region of the high doping region are concentric, a step difference exists between the center and the edge of the N-doped region of the high doping region, a thickness of the edge of the N-doped region of the high doping region is thinner than a thickness of the center, the P-doped region of the high doping region overlaps the edge of the N-doped region of the high doping region, and an upper surface of the P-doped region of the high doping region and an upper surface of the N-doped region may be coplanar.

In one example, the second semiconductor layer is provided inside the first recess and includes a second recess concentric with the first recess, a side surface and a lower surface of the second recess include a surface of the highly doped region, a second step difference exists inside the first recess due to the second recess, the first step difference and the second step difference are spaced apart from each other in a horizontal direction parallel to an upper surface of the first semiconductor layer, and the first step difference and the second step difference may be at different heights.

In one example, the high doping region includes an N-doped region doped with an N-type dopant and a P-doped region doped with a P-type dopant, the N-doped region and the P-doped region are concentric, a lower surface of the second recess is an upper surface of the N-doped region, a side surface of the second recess includes a side surface of the P-doped region, and the second step difference may correspond to a height difference between an upper surface of the N-doped region of the high doping region and an upper surface of the P-doped region.

In one example, the high doping region includes an N-doped region doped with an N-type dopant and a P-doped region doped with a P-type dopant, the N-doped region and the P-doped region are concentric, the N-doped region and the P-doped region are spaced apart from each other in a direction perpendicular to the upper surface of the first semiconductor layer, a lower surface of the second recess is an upper surface of the N-doped region, a side surface of the second recess includes an inner side surface of the P-doped region, and the second step difference may correspond to a height difference between the upper surface of the N-doped region of the high doping region and the upper surface of the P-doped region.

In one example, a portion of the low doping region exists between the N-doped region and the P-doped region which are spaced apart from each other, and a side surface of the second recess may be formed by an inner side surface of a portion of the low doping region and an inner side surface of the P-doped region.

In one example, the low doping region includes an N-doped region doped with an N-dopant and a P-doped region doped with a P dopant, and the N-doped region and the P doping region of the low doping region are concentric circles, a lower surface of the first recess includes an upper surface of the P-doped region of the low doping region, and an inner surface of the first recess may include an inner side surface of the P-doped region of the low doping region.

In one example, the P-doped region of the low doping region may include three regions having different thicknesses, and may have a cross-sectional shape in which the thickness becomes thinner toward the center of the second semiconductor layer.

In one example, the P-doped region of the low doping region may include a step difference where the physical thickness is different and a step difference in which the thickness of the doped region is different in a region where the physical thickness is constant.

In one example, the P-doped region of the low doping region may include a region in which the thickness of the doped region is different in a region where the physical thickness is constant.

In one example, the side surface of the first recess may include an inner side surface of the P-doped region of the low doping region and an inner side surface of the N-doped region of the low doping region.

In one example, the N-doped region of the low doping region is between the first semiconductor layer and the P-doped region of the low doping region, and has a shape completely surrounding the P-doped region of the low doping region around the first recess, and the outer side surface of the N-doped region of the low doping region may be a side surface of the first semiconductor layer.

In one example, the second semiconductor layer includes a first recess, a lower surface of the first recess includes an upper surface of the low-doping region, a side surface of the first recess includes an inner side surface of the low-doping region, and a first step difference may exist in the low-doping region due to the first recess.

In one example, the second semiconductor layer includes a second recess provided inside the first recess and concentric with the first recess, a lower surface of the second recess includes a surface of the high-doping region, a side surface of the second recess includes an inner side surface of the low-doping region, and a second step difference exists inside the first recess due to the second recess, and the first step difference and the second step difference are spaced apart from each other in a horizontal direction parallel to the upper surface of the first semiconductor layer, and the first step difference and the second step difference may be at different heights.

In one example, the high doping region includes an N-doped region doped with an N-type dopant and a P-doped region doped with a P-type dopant, the N-doped region and the P-doped region are concentric, the N-doped region and the P-doped region are spaced apart from each other in a direction perpendicular to an upper surface of the first semiconductor layer, a lower surface of the second recess is an upper surface of the N-doped region, the P-doped region is on the lower surface of the first recess, an inner side surface of the P-doped region and a side surface of the second recess form the same side surface, and the second step difference may correspond to a height difference between the upper surface of the N-doped region of the high doping region and the lower surface of the first recess.

In one example, the low doping region includes an N doped region doped with an N dopant and a P-doped region doped with a P dopant, the N doped region and the P-doped region of the low doping region are concentric circles, the lower surface of the first recess includes an upper surface of the P-doped region of the low doping region, and an inner surface of the first recess may include an inner side surface of the P-doped region of the low doping region.

In one example, the side surface of the first recess may include an inner side surface of the P-doped region of the low doping region and an inner side surface of the N doped region of the low doping region.

In one example, the N doped region of the low doping region is between the first semiconductor layer and the P-doped region of the low doping region, and is formed to completely surround the P-doped region of the low doping region around the first recess, and an outer side surface of the N doped region of the low doping region may be a side surface of the first semiconductor layer.

In one example, the N-doped region of the high-doped region, the P-doped region of the high-doped region, and the P-doped region of the low-doped region may be provided to overlap each other around the second recess.

In one example, the second semiconductor layer includes a first recess, and a side surface and a lower surface of the first recess include a surface of the high-doped region, and a first step difference may exist in the high-doped region due to the first recess.

In one example, the high-doped region includes an N-doped region doped with an N-type dopant and a P-doped region doped with a P-type dopant, the lower surface of the first recess includes an upper surface of the N-doped region, the side surface of the first recess includes an inner side surface of the P-doped region, and the N-doped region and the P-doped region may be provided to overlap each other around the first recess.

In one example, the low doping region is provided so as to completely surround the high doping region on a plane, and the low doping region includes an N doped region doped with an N-type dopant and a P-doped region doped with a P-type dopant, and the N-doped region and the P-doped region of the low doping region may be sequentially provided in a direction perpendicular to the upper surface of the first semiconductor layer.

In one example, the P-doped region of the low doping region is provided so as to cover a vertical boundary and a lateral boundary of the N doped region, and an outer side surface of the P-doped region of the low doping region may be an outer surface of the second semiconductor layer.

In one example, the N doped region and the P-doped region of the high doping region may be provided so as to overlap each other around the first recess.

In one example, the second semiconductor layer includes a first recess, a lower surface of the first recess includes an upper surface of the first doped region of the highly doped region, a side surface of the first recess includes an inner side surface of the low doped region and an inner side surface of the second doped region of the highly doped region, the first doped region and the second doped region are spaced apart from each other, the first doped region, the second doped region, and the first recess are concentric, and a step difference may exist between the upper surface of the first doped region and the upper surface of the second doped region due to the first recess.

In one example, the first and second doped regions include dopants of opposite types and are spaced apart from each other in a direction perpendicular to the upper surface of the first semiconductor layer, and an outer diameter of the first doped region and an inner diameter of the second doped region may be the same.

In one example, the second doped region may be provided so that a step difference is formed in the low doped region.

In one example, the low doped region includes an N-doped region doped with an N-type dopant and a P-doped region doped with a P-type dopant, and the N-doped region and the P-doped region may be sequentially provided in a direction perpendicular to the upper surface of the first semiconductor layer.

In one example, the P-doped region is provided so as to cover a vertical boundary and a lateral boundary of the N-doped region, and an outer side surface of the P-doped region may be an outer surface of the second semiconductor layer.

In one example, the optical modulator further includes a second optical waveguide spaced apart from the second semiconductor layer, and the second semiconductor layer may be disposed between the first optical waveguide and the second optical waveguide.

A method of manufacturing an optical modulator according to one or more embodiments includes: an operation of forming a second semiconductor layer in the shape of a micro-disk on a first semiconductor layer; an operation of forming a first doped region having a circular shape in a portion of the second semiconductor layer; an operation of forming a second doped region in the second semiconductor layer around the first doped region so as to be concentric with the first doped region and surround the first doped region in horizontal directions; an operation of forming a first step difference in one from among the first and second doped regions; and an operation of forming an electrode layer on the first doped region having a higher doping concentration than a doping concentration of the second doped region.

In one example, the first step difference may be formed in the first doped region.

In one example, the manufacturing method may further include an operation of forming a second step difference in the second doped region.

In one example, the operation of forming the second doped region includes: an operation of forming a first doping layer; an operation of forming a second doping layer on the first doping layer to include the second step; and an operation of forming a third doping layer covering an outer portion of the second step difference of the second doping layer and contacting the first doping layer, and wherein the first doping layer and the third doping layer may include the same type of dopant.

In an example, the first doping region comprises an N-doped region doped with an N-type dopant and a P-doped region doped with a P-type dopant, each of the N-doped region and the P-doped region comprises a circular shape that is concentric with respect to one another, the N-doped region and the P-doped region are spaced apart from each other in a vertical direction crossing the upper surface of the first semiconductor layer, the lower surface of the second recess comprises the upper surface of the N-doped region, the lower surface of the first recess comprises an upper surface of the P-doped region, the side surface of the second recess comprises an inner side surface of the P-doped region, the second step difference corresponds to a height difference between the upper surface of the N-doped region of the first doping region and the lower surface of the first recess, the second doping region comprises an N-doped region doped with an N-dopant and a P-doped region doped with a P-type dopant, each the N-doped region of the second doping region and the P-doped region of the second doping region comprises a circular shape that is concentric with respect to one another, the lower surface of the first recess comprises the upper surface of the P-doped region of the second doping region, and the side surface of the first recess comprises the inner side surface of the P-doped region of the second doping region.

In an example, the first doping region comprises an N-doped region doped with an N-type dopant, and a P-doped region doped with a P-type dopant, the lower surface of the first recess comprises an upper surface of the N-doped region, the side surface of the first recess comprises an inner side surface of the P-doped region, the N-doped region and the P-doped region overlap in a vertical direction perpendicular to the upper surface of the first semiconductor layer, and are at a side of the first recess in a first horizontal direction, the second doping region surrounds the first doping region in the first horizontal direction and a second horizontal direction that crosses the first horizontal direction, the second doping region comprises an N-doped region doped with an N-type dopant, and a P-doped region doped with a P-type dopant, and the P-doped region of the second doping region is on the N-doped region of the second doping region in the vertical direction.
In one example, the at least one recess of the second semiconductor layer comprises a first recess, a lower surface of the first recess comprises an upper surface of a first-first doped region of the first doping region, a side surface of the first recess comprises an inner side surface of the second doping region and an inner side surface of a first-second doped region of the first doping region, the first-first doped region and the first-second doped region are spaced apart from each other in a vertical direction perpendicular to the upper surface of the first semiconductor layer, the first-first doped region, the first-second doped region, and the first recess are concentric, a step difference, of the at least one step difference, is between an upper surface of the first-first doped region and an upper surface of the first-second doped region due to the first recess, a dopant type of the first-first doped region is opposite of a dopant type of the first-second doped region, an outer diameter of the first-first doped region and an inner diameter of the first-second doped region are equal to each other, and the upper surface of the first-second doped region and the upper surface of the second doping region are coplanar.An electronic apparatus according to one or more embodiments comprises: a light source; an optical waveguide through which light emitted from the light source is transmitted; a semiconductor layer disposed adjacent to the optical waveguide, provided in the form of a micro-disk, and including a plurality of doped regions; and an amplifier configured to amplify light transmitted through the optical waveguide, wherein the semiconductor layer includes first and second doped regions included in the plurality of doped regions at the center of the semiconductor layer, remaining doped regions except for the first and second doped regions in the plurality of doped regions are arranged around the first and second doped regions, the first and second doped regions are regions doped with dopants of opposite types, the doping concentrations of the first and second doped regions are higher than doping concentrations of the remaining doped regions, and the semiconductor layer includes at least one step difference.

While non-limiting example embodiments have been described above with reference to the accompanying drawings, embodiments of the disclosure are not limited thereto.

A micro-disk type optical modulator, according to some embodiments of the disclosure, may include a semiconductor layer in the form of a micro-disk, and at least one step difference may be formed in a PN-doped region of the semiconductor layer. A step difference may be formed in an inner PN-doped region doped at a high concentration of the semiconductor layer so as to reduce the PN junction region. An N-doped region may be formed in the outer PN-doped region doped at a low concentration of the semiconductor layer to surround the outside of the P-doped region, and a step difference may be formed at a predetermined position of the P-doped region. The positions of these step differences may be controlled during manufacturing processes. By controlling the position of the step difference formed in the inner PN-doped region doped at a high concentration, the capacitance of the optical modulator may be reduced, thereby increasing the modulation speed of the optical modulator. In the PN-doped region doped at a low concentration, a ring width may be controlled by controlling the position where the step difference is formed, thereby enabling optical mode filtering. In addition, by forming the N-doped region in a U shape surrounding the P-doped region in the low-concentration PN-doped region, the junction area between the N-doped region and the P-doped region may be increased, thereby increasing the optical modulation efficiency.

It should be understood that embodiments described herein should be considered in a descriptive sense only and not for purposes of limitation. Descriptions of features or aspects within each embodiment of the disclosure should typically be considered as available for other similar features or aspects in other embodiments of the disclosure. While one or more embodiments have been described with reference to the figures, it will be understood by those of ordinary skill in the art that various changes in form and details may be made therein without departing from the scope of the disclosure.

## Claims

1. An optical modulator comprising:
a first semiconductor layer;
a second semiconductor layer configured as a micro-disk, the second semiconductor layer being on the first semiconductor layer, and the second semiconductor layer comprising a first doping region and a second doping region, wherein a doping concentration of the first doping region is higher than a doping concentration of the second doping region;
a first optical waveguide adjacent to the second semiconductor layer;
a first electrode layer on the first doping region; and
a second electrode layer on the first doping region and spaced apart from the first electrode layer,
wherein the second semiconductor layer comprises at least one recess,
wherein the second semiconductor layer has at least one step difference due to the at least one recess,
wherein each of the first doping region, the second doping region, and the at least one recess comprises a circular shape, wherein the circular shapes of the first doping region, the second doping region, and the at least one recess are concentric with respect to one another,
wherein the second doping region is on the outside of the first doping region and surrounds the first doping region in the horizontal plane, and
wherein the first electrode layer and the second electrode layer are on different doping regions from each other of the first doping region.

2. The optical modulator of claim 1, wherein the at least one recess of the second semiconductor layer comprises a first recess,
a lower surface of the first recess comprises an upper surface of the first doping region and an upper surface of the second doping region,
a side surface of the first recess comprises an inner side surface of the second doping region, and
a first step difference, of the at least one step difference, is in the second doping region due to the first recess.

3. The optical modulator of claim 2, wherein the first doping region comprises an N-doped region doped with an N-type dopant and a P-doped region doped with a P-type dopant,
the second doping region comprises an N-doped region doped with an N-type dopant and a P-doped region doped with a P-type dopant,the lower surface of the first recess comprises an upper surface of the N-doped region of the first doping region, an upper surface of the P-doped region of the first doping region, and a first upper surface of the P-doped region of the second doping region,
the side surface of the first recess comprises an inner side surface of the P-doped region of the second doping region, and
the first step difference corresponds to a height difference between the first upper surface of the P-doped region of the second doping region and a second upper surface of the second semiconductor layer located higher than the first upper surface.

4. The optical modulator of claim 2, wherein the first doping region comprises an N-doped region doped with an N-type dopant and a P-doped region doped with a P-type dopant,
the second doping region comprises an N-doped region doped with an N-type dopant and a P-doped region doped with a P-type dopant,
the lower surface of the first recess comprises an upper surface of the N-doped region of the first doping region, an upper surface of the P-doped region of the first doping region, and a first upper surface of the P-doped region of the second doping region,
the side surface of the first recess comprises the inner side surface of the P-doped region of the second doping region and an inner side surface of the N-doped region of the second doping region,
the first step difference corresponds to a height difference between the first upper surface of the P-doped region of the second doping region and the upper surface of the N-doped region of the second doping region,
the N-doped region of the second doping region is between the P-doped region and the first semiconductor layer, and surrounds the P-doped region of the second doping region outside the first recess in a horizontal direction, and
an outer side surface of the N-doped region of the second doping region is a side surface of the second semiconductor layer.

5. The optical modulator of claim 3 or 4, wherein the P-doped region of the first doping region and the N-doped region of the first doping region are concentric,
an internal step difference, of the at least one step difference, exists between a center of the N-doped region of the first doping region, in a horizontal direction, and an edge of the N-doped region of the first doping region, in the horizontal direction,
a thickness of the edge of the N-doped region of the first doping region is less than a thickness of the center of the N-doped region of the first doping region, and
the P-doped region of the first doping region overlaps with the edge of the N-doped region of the first doping region in a vertical direction, and an upper surface of the P-doped region of the first doping region is coplanar with respect to the upper surface of the N-doped region of the first doping region.

6. The optical modulator of claim 2, wherein the at least one recess of the second semiconductor layer is a plurality of recesses comprising the first recess and a second recess inside the first recess, and the second recess is concentric with respect to the first recess,
the at least one step difference comprises a plurality of step differences comprising the first step difference and a second step difference,
a side surface of the second recess and a lower surface of the second recess comprise surfaces of the first doping region, respectively,
the second step difference is inside the first recess due to the second recess, and
the first step difference and the second step difference are spaced apart from each other in a horizontal direction parallel to the upper surface of the first semiconductor layer, and a height of the first step difference from the upper surface of the first semiconductor layer is different from a height of the second step difference from the upper surface of the first semiconductor layer.

7. The optical modulator of claim 6, wherein the first doping region comprises an N-doped region doped with an N-type dopant and a P-doped region doped with a P-type dopant,
each of the N-doped region and the P-doped region comprises a circular shape that is concentric with respect to one another,
the lower surface of the second recess comprises an upper surface of the N-doped region,
the side surface of the second recess comprises an inner side surface of the P-doped region, and
the second step difference corresponds to a height difference between the upper surface of the N-doped region of the first doping region and the upper surface of the P-doped region of the first doping region,
and wherein preferably:
the N-doped region and the P-doped region are spaced apart from each other in a vertical direction crossing the upper surface of the first semiconductor layer,
a part of the second doping region is between the N-doped region and the P-doped region,
the side surface of the second recess comprises an inner side surface of the part of the second doping region and an inner side surface of the P-doped region of the first doping region,
the second doping region comprises an N-doped region doped with an N-dopant and a P-doped region doped with a P-dopant,
the N-doped region of the second doping region and the P-doped region of the second doping region are concentric,
the lower surface of the first recess comprises the upper surface of the P-doped region of the second doping region, and
the side surface of the first recess comprises the inner side surface of the P-doped region of the second doping region.

8. The optical modulator of any of the preceding claims, wherein the at least one recess of the second semiconductor layer comprises a first recess,
a lower surface of the first recess comprises an upper surface of the second doping region,
a side surface of the first recess comprises a first inner side surface of the second doping region, and
a first step difference, of the at least one step difference, is in the second doping region due to the first recess.

9. The optical modulator of claim 8, wherein the at least one recess of the second semiconductor layer is a plurality of recesses comprising the first recess and a second recess inside the first recess, and the second recess is concentric with respect to the first recess,
the at least one step difference comprises a plurality of step differences comprising the first step difference and a second step difference, a lower surface of the second recess comprises a surface of the first doping region,
a side surface of the second recess comprises a second inner side surface of the second doping region,
the second step difference is inside the first recess due to the second recess, and
the first step difference and the second step difference are spaced apart from each other in a horizontal direction parallel to an upper surface of the first semiconductor layer, and a height of the first step difference from the upper surface of the first semiconductor layer is different from a height of the second step difference from the upper surface of the first semiconductor layer.

10. The optical modulator of any of the preceding claims, wherein the at least one recess of the second semiconductor layer comprises a first recess,
a side surface of the first recess and a lower surface of the first recess comprise surfaces of the first doping region, respectively, and
a first step difference, of the at least one step difference, is in the first doping region due to the first recess.

11. The optical modulator of claim 1, further comprising:
a second optical waveguide spaced apart from the second semiconductor layer,
wherein the second semiconductor layer is between the first optical waveguide and the second optical waveguide.

12. A method of manufacturing an optical modulator, the method comprising:
forming, on a first semiconductor layer, a second semiconductor layer in a shape of a micro-disk;
forming a first doping region in the second semiconductor layer, the first doping region including a circular shape;
forming a second doping region in the second semiconductor layer around the first doping region, wherein the second doping region is concentric with the first doping region and surrounds the first doping region in horizontal directions;
forming a first step difference in one from among the first doping region and the second doping region; and
forming an electrode layer on the first doping region,
wherein a doping concentration of the first doping region is higher than a doping concentration of the second doping region.

13. The method of claim 12, wherein the first step difference is formed at least in the first doping region.

14. The method of claim 13, further comprising forming a second step difference in the second doping region.

15. The method of claim 14, wherein the forming the second doping region comprises:
forming a first doping layer;
forming a second doping layer on the first doping layer, the second doping layer including the second step difference; and
forming a third doping layer on an outer portion of the second step difference of the second doping layer, the third doping layer contacting the first doping layer,
wherein a dopant type of the first doping layer is the same as a dopant type of the third doping layer.
